# EUROPEAN PATENT APPLICATION

(11) **EP 4 390 645 A1**
(43) Date of publication of application: **26.06.2024**
(21) Application number: 22882568.3
(22) Date of filing: 22.09.2022
(51) Int. Cl.: G06F 3/04842

(54) **CROSS-DEVICE DRAGGING METHOD, AND ELECTRONIC DEVICE AND STORAGE MEDIUM**

(30) Priority: 18.10.2021 CN 202111210629
(71) Applicant: Huawei Technologies Co., Ltd., Shenzhen, Guangdong 518129 (CN)
(72) Inventor: ZHOU, Xingchen, Shenzhen, Guangdong 518129 (CN); WEI, Xi, Shenzhen, Guangdong 518129 (CN); HU, Xiaoyi, Shenzhen, Guangdong 518129 (CN); WANG, Haijun, Shenzhen, Guangdong 518129 (CN); SUN, Xiaokang, Shenzhen, Guangdong 518129 (CN); FAN, Zhenhua, Shenzhen, Guangdong 518129 (CN)
(74) Representative: Grünecker Patent- und Rechtsanwälte PartG mbB
(86) International application number: PCT/CN2022/120658
(87) International publication number: WO 2023/065957

(57) **Abstract**

This application provides a cross-device dragging method, an electronic device, and a storage medium, and relates to the field of electronic devices. In the method, a first terminal device may display a first interface, and receive a first operation, where the first operation is an operation of dragging a first object from a display interface of a second terminal device to the first interface. The first terminal device may display a first window in response to the first operation, where the first window includes an application identifier corresponding to one or more applications and/or a service identifier corresponding to one or more services. In this application, when the first object is dragged from the second terminal device to the first terminal device, the first terminal device may more intelligently respond to dragging of the first object, and a manner in which a user performs cross-device dragging is simpler.

## Description

This application claims priority to Chinese Patent Application No. 202111210629.5, filed with the China National Intellectual Property Administration on October 18, 2021 and entitled "CROSS-DEVICE DRAGGING METHOD, ELECTRONIC DEVICE, AND STORAGE MEDIUM", which is incorporated herein by reference in its entirety.

### TECHNICAL FIELD

Embodiments of this application relate to the field of electronic devices, and in particular, to a cross-device dragging method, an electronic device, and a storage medium.

### BACKGROUND

In a multi-device collaboration scenario, a user may drag an object in a terminal device 1 to a terminal device 2 (namely, cross-device dragging), and open or save the object in the terminal device 2. For example, the dragged object may include a file (such as a document, a picture, music, or a video), a text/text content, an application icon, a widget (widget), and the like. The terminal device 1 may be referred to as a source (source) end or a drag-out end, and the terminal device 2 may be referred to as a receive (sink) end or a drag-in end.

Currently, in an implementation, when cross-device dragging is implemented between the source end and the receive end, the receive end needs to have an explicit drag-in application, and the user needs to start the drag-in application at the receive end in advance, and then the user may drag the object at the source end to the drag-in application at the receive end. The drag-in application may save or open the dragged object. Alternatively, in another implementation, when the user does not start the drag-in application in advance at the receive end, the user may also drag the object at the source end to a desktop of the receive end, and the receive end may save the dragged object to a local default storage path (for example, a file manager) or open the object by using a default application (for example, a browser).

The foregoing existing manner of implementing cross-device dragging between the source end and the receive end is complex, and a response of the receive end to the dragged object is not intelligent enough.

### SUMMARY

Embodiments of this application provide a cross-device dragging method, an electronic device, and a storage medium. When a user performs cross-device dragging on an object between different devices, a receive end may respond to dragging of the object more intelligently.

According to a first aspect, an embodiment of this application provides a cross-device dragging method, where the method is applied to a first terminal device. The method includes: The first terminal device displays a first interface. The first terminal device receives a first operation, where the first operation is an operation of dragging a first object from a display interface of a second terminal device to the first interface. The first terminal device displays a first window in response to the first operation, where the first window includes an application identifier corresponding to one or more applications and/or a service identifier corresponding to one or more services.

The method is applicable to a scenario in which an object is dragged between any two terminal devices (for example, the first terminal device and the second terminal device). An example in which a user drags an object in the second terminal device to the first terminal device is used. In this method, when the user drags the object in the second terminal device to the first terminal device, the user does not need to open, on the first terminal device in advance, an application interface that can open the first object. The first terminal device may recommend a first window to the user, where the first window includes an application identifier corresponding to one or more applications and/or a service identifier corresponding to one or more services. In a process of dragging the object, the user may quickly select, based on the application identifier or the service identifier displayed in the first window, an application or a service for opening the object. The dragging manner is simpler, and the first terminal device responds to the dragged object more intelligently.

In a possible implementation, the application identifier included in the first window is related to a type of the first object.

Optionally, before the first terminal device displays the first window, the method further includes: The first terminal device obtains the type of the first object. The first terminal device determines, based on the type of the first object, the application identifier included in the first window.

In some implementations, that the first terminal device determines, based on the type of the first object, the application identifier included in the first window includes: The first terminal device determines, based on the type of the first object, an application that supports dragging of the first object in all applications installed on the first terminal device. The first terminal device uses an application identifier of the application that supports dragging of the first object as the application identifier included in the first window.

For example, after receiving the first message from the second terminal device, the first terminal device may determine the type of the first object based on the first object included in the first message, or the first message may include a separate field indicating the type of the first object, and the first terminal device may determine the type of the first object based on the field. The first terminal device may select, based on the type of the first object and from all the applications installed on the first terminal device, applications that can open the first object, and display, in the first window, application identifiers of the applications that can open the first object.

In another possible implementation, the application identifier included in the first window is a preset application identifier.

For example, the user or a service vendor of the first terminal device may pre-configure application identifiers of applications to be displayed in the first window.

In still another possible implementation, the application identifiers included in the first window are application identifiers of all the applications installed on the first terminal device.

For example, it is assumed that N applications (where N is an integer greater than 0) are installed on the first terminal device. The first window may include application icons of the N applications installed on the first terminal device.

Optionally, the method further includes: The first terminal device receives an operation of dragging the first object to a first application identifier, where the first application identifier is one of the application identifiers included in the first window. In response to the operation of dragging the first object to the first application identifier, when an application corresponding to the first application identifier is an application that supports dragging of the first object, the first terminal device displays a second window, where the second window includes a service identifier of one or more services included in the application corresponding to the first application identifier. Alternatively, the first terminal device displays first prompt information when an application corresponding to the first application identifier is an application that does not support dragging of the first object, where the first prompt information is used to give a prompt that the application corresponding to the first application identifier does not support dragging of the first object.

When the application corresponding to the first application identifier is an application that supports dragging of the first object, the first terminal device displays the second window, so that the user may directly drag the first object onto a service in the application corresponding to the first application identifier and open the first object. When the application corresponding to the first application identifier is an application that does not support dragging of the first object, the first terminal device displays the first prompt information, to give a prompt that the application corresponding to the first application identifier cannot open the first object.

In a possible implementation, the service identifier included in the second window is related to the type of the first object.

Optionally, before the first terminal device displays the second window, the method further includes: The first terminal device obtains the type of the first object. The first terminal device determines, based on the type of the first object and all services included in the application corresponding to the first application identifier, the service identifier included in the second window.

In some implementations, that the first terminal device determines, based on the type of the first object and all services included in the application corresponding to the first application identifier, the service identifier included in the second window includes: The first terminal device determines, based on the type of the first object and from all the services included in the application corresponding to the first application identifier, a service that supports dragging of the first object. The first terminal device uses a service identifier of the service that supports dragging of the first object as the service identifier included in the second window.

For example, after receiving the first message, the first terminal device may determine the type of the first object based on the first object included in the first message, or the first message may include a separate field indicating the type of the first object, and the first terminal device may determine the type of the first object based on the field. When the user drags the first object to the first application identifier in the first window, the first terminal device may select, based on the type of the first object and from all the services included in the application corresponding to the first application identifier, a service that can open the first object, and display, in the second window, service identifiers of the services that open the first object.

In another possible implementation, the service identifier included in the second window is a preset service identifier.

For example, the user or the service vendor of the first terminal device may pre-configure service identifiers included in a second window corresponding to each application. In other words, the service identifiers included in the second window are fixed.

In still another possible implementation, the service identifiers included in the second window are service identifiers of all the services included in the application corresponding to the first application identifier.

For example, it is assumed that the application corresponding to the first application identifier includes N services (where N is an integer greater than 0). The second window corresponding to the application corresponding to the first application identifier may include service identifiers of the N services.

In some possible implementations, the first interface includes an interface that supports dragging and an interface that does not support dragging. That the first terminal device displays a first window includes: The first terminal device displays the first window when the first interface is an interface that does not support dragging.

For example, the interface that does not support dragging may include a system desktop (desktop for short), a system pop-up window, an application interface that does not support dragging, and the like. The interface that supports dragging may include an application interface that supports dragging. For example, the first terminal device is a mobile phone, and the application interface that supports dragging may be a chat interface of some chat applications installed on the mobile phone.

In some possible implementations, that the first terminal device displays a first window includes: After the first object is dragged to the first interface, when a dragging operation on the first object does not end, and a dwell time period of a pointer on the first interface reaches first duration, and/or when the dragging operation on the first object does not end, and a sliding distance of the pointer on the first interface is greater than a first threshold, the first terminal device displays the first window.

For example, when a further interaction action performed after the first object is dragged to the first interface is that the user does not end the dragging operation on the first object, and the dwell time period of the pointer (for example, a pointer of a mouse) on the first interface reaches the first duration, the first terminal device may determine that the user intends to search for an application to open the first object. In this case, the first terminal device may display the first window. Alternatively, when a further interaction action performed after the first object is dragged to the first interface is that the user does not end the dragging operation on the first object, and the dragging/sliding distance of the pointer on a display interface of a receive end is greater than the first threshold, the first terminal device may determine that the user intends to search for an application to open the first object. In this case, the first terminal device may display the first window. Alternatively, when a further interaction action performed after the first object is dragged to the first interface is that the user does not end the dragging operation on the first object, the dwell time period of the pointer (for example, a pointer of a mouse) on the first interface reaches the first duration, and the dragging/sliding distance of the pointer on a display interface of a receive end is greater than the first threshold, the first terminal device may determine that the user intends to search for an application to open the first object. In this case, the first terminal device may display the first window.

In this manner, the first terminal device may determine a user intention based on the further interaction action of the user performed after the first object is dragged to the first interface, and determine, based on the user intention, whether to display the first window.

Optionally, the first interface is an interface that does not support dragging. The method further includes: The first terminal device receives a third operation, where the third operation is an operation of directly ending dragging of a second object after dragging the second object from the display interface of the second terminal device to the first interface. In response to the third operation, the first terminal device saves the second object, or starts a default application and transfers the second object to the default application.

For example, directly ending the dragging operation on the first object may be: A time period between a time point at which the user drags the first object to the first interface and a time point at which the user ends the dragging operation on the first object is less than the first duration.

Optionally, the method further includes: The first terminal device receives the operation of dragging the first object to the first application identifier, where the first application identifier is one of the application identifiers included in the first window. In response to the operation of dragging the first object to the first application identifier, when the application corresponding to the first application identifier is an application that supports dragging of the first object, the first terminal device starts the application corresponding to the first application identifier, and transfers the first object to the application corresponding to the first application identifier. Alternatively, the first terminal device displays the first prompt information when the application corresponding to the first application identifier is an application that does not support dragging of the first object, where the first prompt information is used to give the prompt that the application corresponding to the first application identifier does not support dragging of the first object.

In some possible implementations, that the first terminal device displays the first prompt information includes: The first terminal device displays the first prompt information by changing a display status of the first application identifier.

For example, the first terminal device may display the first application identifier as the first prompt information by dimming or graying out the first application identifier.

Optionally, the method further includes: The first terminal device receives an operation of dragging the first object to a first service identifier, where the first service identifier is one of the service identifiers included in the second window. In response to the operation of dragging the first object to the first service identifier, when a service corresponding to the first service identifier is a service that supports dragging of the first object, the first terminal device starts the service corresponding to the first service identifier, and transfers the first object to the service corresponding to the first service identifier. Alternatively, the first terminal device displays second prompt information when a service corresponding to the first service identifier is a service that does not support dragging of the first object, where the second prompt information is used to give a prompt that the service corresponding to the first service identifier does not support dragging of the first object.

In some possible implementations, the method further includes: The first terminal device receives a fourth operation, where the fourth operation is an operation of dragging the second object from the display interface of the second terminal device to a first region on the first interface, and the first region is a blank region. In response to the fourth operation, the first terminal device saves the second object.

In this manner, the user may drag the dragged object to the first region, to trigger the first terminal device to save the dragged object.

In some other possible implementations, the first window includes a second region or a first icon. The method further includes: The first terminal device receives an operation of dragging the first object to the second region or the first icon. In response to the operation of dragging the first object to the second region or the first icon, the first terminal device saves the first object.

In this manner, the user may drag the dragged object to the second region or the first icon, to trigger the first terminal device to save the dragged object.

In some possible implementations, the first interface is a system desktop, and the first interface includes one or more application identifiers. The method further includes: The first terminal device receives an operation of closing the first window. The first terminal device closes the first window in response to the operation of closing the first window. The first terminal device receives an operation of dragging the first object to a second application identifier, where the second application identifier is one of the application identifiers included on the system desktop. In response to the operation of dragging the first object to the second application identifier, when an application corresponding to the second application identifier is an application that supports dragging of the first object, the first terminal device starts the application corresponding to the second application identifier, and transfers the first object to the application corresponding to the second application identifier. Alternatively, the first terminal device displays a third window, where the third window includes a service identifier of one or more services included in the application corresponding to the second application identifier. Alternatively, the first terminal device displays first prompt information when an application corresponding to the second application identifier is an application that does not support dragging of the first object, where the first prompt information is used to give a prompt that the application corresponding to the second application identifier does not support dragging of the first object.

In this manner, when the user does not want to select a recommended application in the first window to open the first object, the user may actively close the first window, and select another application from the desktop to open the first object.

Optionally, that the first terminal device displays a first window includes: The first terminal device displays the first window in a full-screen display manner, a non-full-screen display manner, or a drawer display manner.

For example, non-full-screen display may specifically include half-screen display (that is, a region of the first window occupies half of a region of a display of the first terminal device), one-third-screen display (that is, the region of the first window occupies one third of the region of the display of the first terminal device), and the like. This is not limited.

In some possible implementations, the method further includes: When the first terminal device detects that a dragging behavior of dragging the first object on the first terminal device is interrupted, the first terminal device displays, in a first location on the first interface, a first floating window corresponding to the first object.

For example, the first location may be an edge of a desktop (for example, the first interface).

Optionally, the method further includes: The first terminal device receives a dragging operation on the first floating window. In response to the dragging operation on the first floating window, the first terminal device changes the first floating window to a dragging shadow of the first object, so that the user continues to drag the first object.

In this manner, after the dragging behavior of the user on the first object is interrupted, the user may continue the dragging operation on the first object through the first floating window, without dragging the first object from the second terminal device again.

Optionally, the method further includes: When the first object is dragged into the first interface, the first terminal device displays a first UI animation effect on a screen edge of the first interface, where the first UI animation effect is used to give the user a prompt that the first object is dragged to the first interface.

In a possible implementation, a display region of the first UI animation effect is related to a location that is on the first interface and to which the dragging shadow of the first object is dragged.

For example, the first terminal device may display the first UI animation effect in a specific range (for example, a preset distance range) above and below the location (namely, a location that appears on the screen edge of the first terminal device) that is on the first interface and to which the dragging shadow of the first object is dragged. The location that is on the first display interface and to which the dragging shadow of the first object is dragged may be determined based on a location at which the dragging shadow of the first object is dragged out of the display interface of the second terminal device. For example, a distance between the location at which the dragging shadow of the first object is dragged out of the display interface of the second terminal device and an upper side (top) screen edge of the second terminal device is 30% of a distance between an upper side screen and a lower side screen. In this case, a distance between the location that is on the first interface and to which the dragging shadow of the first object is dragged and an upper side (top) screen edge of the first terminal device may also be 30% of a distance between an upper side screen and a lower side screen. Alternatively, the location that is on the first interface and to which the dragging shadow of the first object is dragged may be a relative receiving location in physical space. This is not limited herein.

Optionally, the method further includes: In a process in which the first object is dragged to a location at which the dragging shadow of the first object is far away from the screen edge, the first terminal device performs highlighting or color enhancement on a region that is in the display region of the first UI animation effect and that is related to a location of the dragging shadow of the first object.

For example, a color for color enhancement of the first UI animation effect may be related to a color of the first object or a color of the first interface. For example, the color for color enhancement of the first UI animation effect may be the same as the color of the first object, or when the first interface is a desktop, the color for color enhancement of the first UI animation effect may be similar to a color of a desktop wallpaper, for example, a color in a dominant color of the desktop wallpaper is selected.

Optionally, the method further includes: The first terminal device displays a tailing effect of the first object in the process in which the first object is dragged to the location at which the dragging shadow of the first object is far away from the screen edge, where a display region of the tailing effect moves along with the dragging shadow of the first object. In a process in which the display region of the tailing effect moves along with the dragging shadow of the first object, the tailing effect gradually becomes smaller or remains unchanged, and display brightness of the tailing effect gradually decreases and/or a color becomes lighter. After the dragging shadow of the first object moves beyond a preset distance, the first terminal device no longer displays the tailing effect.

Optionally, the method further includes: In response to ending the dragging operation on the first object, the first terminal device no longer displays the first UI animation effect.

According to a second aspect, an embodiment of this application provides a cross-device dragging apparatus, where the apparatus may be used in the first terminal device according to the first aspect, so that the first terminal device implements the method according to the first aspect and any one of the possible implementations of the first aspect. A function of the apparatus may be implemented by hardware, or may be implemented by executing corresponding software by hardware. The hardware or software includes one or more modules or units corresponding to the steps in the method according to the first aspect and any one of the possible implementations of the first aspect.

For example, the apparatus may include a display unit, a receiving unit, a processing unit, and the like. The display unit, the receiving unit, and the processing unit may cooperate to implement the method according to the first aspect and any one of the possible implementations of the first aspect. For example, the display unit may be configured to display a first interface; the receiving unit may be configured to receive a first operation; and the processing unit may be configured to control, in response to the first operation, the display unit to display a first window, and the like. Similarly, the display unit, the receiving unit, and the processing unit may cooperate to implement functions corresponding to all steps of the method according to the first aspect and any one of the possible implementations of the first aspect. Details are not described herein again.

According to a third aspect, an embodiment of this application provides an electronic device. The electronic device may be the first terminal device according to the first aspect. The electronic device includes a processor and a memory configured to store executable instructions of the processor. When the processor is configured to execute the instructions, the electronic device is enabled to implement the method according to the first aspect and any one of the possible implementations of the first aspect.

According to a fourth aspect, an embodiment of this application provides a computer-readable storage medium. The computer-readable storage medium stores computer program instructions, and when the computer program instructions are executed by an electronic device, the electronic device is enabled to implement the method according to the first aspect and any one of the possible implementations of the first aspect.

According to a fifth aspect, an embodiment of this application provides a computer program product, including computer-readable code or a non-volatile computer-readable storage medium carrying computer-readable code. When the computer-readable code is run in an electronic device, a processor in the electronic device implements the method according to the first aspect and any one of the possible implementations of the first aspect.

For beneficial effects of the second aspect to the fifth aspect, refer to the descriptions in the first aspect. Details are not described herein again.

According to a sixth aspect, an embodiment of this application further provides a cross-device dragging method, where the method is applied to a first terminal device. The method includes: The first terminal device displays a first interface, where the first interface includes an application identifier of one or more applications. The first terminal device receives an operation of dragging a first object to a second application identifier, where the second application identifier is one of the application identifiers included on the first interface, an application corresponding to the second application identifier is an application that supports dragging of the first object, and the first object is from a display interface of a second terminal device. In response to the operation of dragging the first object to the second application identifier, the first terminal device starts an application corresponding to the second application identifier, and transfers the first object to the application corresponding to the second application identifier. Alternatively, the first terminal device displays a third window, where the third window includes a service identifier of one or more services included in the application corresponding to the second application identifier.

Optionally, the method further includes: The first terminal device receives an operation of dragging a second object to a third application identifier, where the third application identifier is one of the application identifiers included on the first interface, an application corresponding to the third application identifier is an application that does not support dragging of the second object, and the second object is from the display interface of the second terminal device. The first terminal device displays first prompt information in response to the operation of dragging the second object to the third application identifier, where the first prompt information is used to give a prompt that the application corresponding to the third application identifier does not support dragging of the first object.

In a possible implementation, the application identifier includes an application icon or a widget.

In a possible implementation, the widget includes one or more service identifiers. The method further includes: The first terminal device receives an operation of dragging the first object to a second service identifier, where the second service identifier is one of the service identifiers included in the widget. In response to the operation of dragging the first object to the second service identifier, when a service corresponding to the second service identifier is a service that supports dragging of the first object, the first terminal device starts the service corresponding to the second service identifier, and transfers the first object to the service corresponding to the second service identifier. Alternatively, the first terminal device displays second prompt information when a service corresponding to the second service identifier is a service that does not support dragging of the first object, where the second prompt information is used to give a prompt that the service corresponding to the second service identifier does not support dragging of the first object.

In a possible implementation, the first interface includes a first folder, the first folder includes an application identifier of one or more applications, and the second application identifier is one of the application identifiers included in the first folder. The operation of dragging the first object to the second application identifier includes an operation of opening the first folder and dragging the first object to the second application identifier.

Optionally, the method further includes: When the first object is dragged into the first interface, the first terminal device displays a first UI animation effect on a screen edge of the first interface, where the first UI animation effect is used to give a user a prompt that the first object is dragged to the first interface.

In a possible implementation, a display region of the first UI animation effect is related to a location that is on the first interface and to which a dragging shadow of the first object is dragged.

For example, the first terminal device may display the first UI animation effect in a specific range (for example, a preset distance range) above and below the location (namely, a location that appears on the screen edge of the first terminal device) that is on the first interface and to which the dragging shadow of the first object is dragged. The location that is on the first display interface and to which the dragging shadow of the first object is dragged may be determined based on a location at which the dragging shadow of the first object is dragged out of the display interface of the second terminal device. For example, a distance between the location at which the dragging shadow of the first object is dragged out of the display interface of the second terminal device and an upper side (top) screen edge of the second terminal device is 30% of a distance between an upper side screen and a lower side screen. In this case, a distance between the location that is on the first interface and to which the dragging shadow of the first object is dragged and an upper side (top) screen edge of the first terminal device may also be 30% of a distance between an upper side screen and a lower side screen. Alternatively, the location that is on the first interface and to which the dragging shadow of the first object is dragged maybe a relative receiving location in physical space. This is not limited herein.

Optionally, the method further includes: In a process in which the first object is dragged to a location at which the dragging shadow of the first object is far away from the screen edge, the first terminal device performs highlighting or color enhancement on a region that is in the display region of the first UI animation effect and that is related to a location of the dragging shadow of the first object.

For example, a color for color enhancement of the first UI animation effect may be related to a color of the first object or a color of the first interface. For example, the color for color enhancement of the first UI animation effect may be the same as the color of the first object, or when the first interface is a desktop, the color for color enhancement of the first UI animation effect may be similar to a color of a desktop wallpaper, for example, a color in a dominant color of the desktop wallpaper is selected.

Optionally, the method further includes: The first terminal device displays a tailing effect of the first object in the process in which the first object is dragged to the location at which the dragging shadow of the first object is far away from the screen edge, where a display region of the tailing effect moves along with the dragging shadow of the first object. In a process in which the display region of the tailing effect moves along with the dragging shadow of the first object, the tailing effect gradually becomes smaller or remains unchanged, and display brightness of the tailing effect gradually decreases and/or a color becomes lighter. After the dragging shadow of the first object moves beyond a preset distance, the first terminal device no longer displays the tailing effect.

Optionally, the method further includes: In response to ending the dragging operation on the first object, the first terminal device no longer displays the first UI animation effect.

According to a seventh aspect, an embodiment of this application provides a cross-device dragging apparatus, where the apparatus may be used in the first terminal device according to the sixth aspect, so that the first terminal device implements the method according to the sixth aspect and any one of the possible implementations of the sixth aspect. A function of the apparatus may be implemented by hardware, or may be implemented by executing corresponding software by hardware. The hardware or software includes one or more modules or units corresponding to the steps in the method according to the sixth aspect and any one of the possible implementations of the sixth aspect.

For example, the apparatus may include a display unit, a receiving unit, a processing unit, and the like. The display unit, the receiving unit, and the processing unit may cooperate to implement the method according to the sixth aspect and any one of the possible implementations of the sixth aspect. For example, the display unit may be configured to display a first interface; the receiving unit may be configured to receive an operation of dragging a first object to a second application identifier; and the processing unit may be configured to: in response to the operation of dragging the first object to the second application identifier, start an application corresponding to the second application identifier, and transfer the first object to the application corresponding to the second application identifier, or control the display unit to display a third window, and the like. Similarly, the display unit, the receiving unit, and the processing unit may cooperate to implement functions corresponding to all steps of the method according to the sixth aspect and any one of the possible implementations of the sixth aspect. Details are not described herein again.

According to an eighth aspect, an embodiment of this application provides an electronic device. The electronic device may be the first terminal device according to the sixth aspect. The electronic device includes a processor and a memory configured to store executable instructions of the processor. When the processor is configured to execute the instructions, the electronic device is enabled to implement the method according to the sixth aspect and any one of the possible implementations of the sixth aspect.

According to a ninth aspect, an embodiment of this application provides a computer-readable storage medium. The computer-readable storage medium stores computer program instructions, and when the computer program instructions are executed by an electronic device, the electronic device is enabled to implement the method according to the sixth aspect and any one of the possible implementations of the sixth aspect.

According to a tenth aspect, an embodiment of this application provides a computer program product, including computer-readable code or a non-volatile computer-readable storage medium carrying computer-readable code. When the computer-readable code is run in an electronic device, a processor in the electronic device implements the method according to the sixth aspect and any one of the possible implementations of the sixth aspect.

For beneficial effects of the seventh aspect to the tenth aspect, refer to the descriptions in the sixth aspect. Details are not described herein again.

According to an eleventh aspect, an embodiment of this application further provides a cross-device dragging method, where the method is applied to a second terminal device. The method includes: The second terminal device displays a second interface, where the second interface includes a first object. In response to a second operation, the second terminal device displays a second UI animation effect on a screen edge of the second interface, where the second operation is an operation of dragging the first object on the second interface, and the second UI animation effect is used to give a user a prompt that the first object can be dragged across devices. A display location of the second UI animation effect is related to an orientation of a first terminal device relative to the second terminal device. The first terminal device is connected to the second terminal device.

For example, the display location of the second UI animation effect may be a screen edge of the second terminal device, and the screen edge is a side on which the first terminal device connected to the second terminal device is located. For example, a screen of the second terminal device may be divided into an upper side screen edge, a lower side screen edge, a left side screen edge, and a right side screen edge. When the side on which the first terminal device connected to the second terminal device is located is a right side of the second terminal device, the display location of the second UI animation effect may be the right side screen edge of the second terminal device.

Optionally, the method further includes: In a process in which a location of a dragging shadow of the first object on the second interface gradually approaches the screen edge on which the second UI animation effect is located, the second terminal device gradually enlarges a display range of the second UI animation effect.

In a possible implementation, a region in which the display range of the second UI animation effect is enlarged is related to a location of the dragging shadow of the first object on the second interface.

In a process in which the user drags the first object from the second interface to a first interface, the location of the dragging shadow of the first object on the second interface gradually approaches the second UI animation effect, or in other words, gradually approaches the screen edge on which the second UI animation effect is located. As the location of the dragging shadow of the first object on the second interface gradually approaches the screen edge on which the second UI animation effect is located, the second terminal device may gradually enhance a display effect of the second UI animation effect, for example, may enlarge the display range of the second UI animation effect.

Optionally, the method further includes: When the first object is dragged to a display region of the second UI animation effect, the second terminal device performs highlighting or color enhancement on a region that is in the display region of the second UI animation effect and that is related to the location of the dragging shadow of the first object.

For example, a color for color enhancement of the second UI animation effect may be related to a color of the first object or a color of the second interface. For example, the color for color enhancement of the second UI animation effect may be the same as the color of the first object, or when the second interface is a desktop, the color for color enhancement of the second UI animation effect may be the same as or similar to a color of a desktop wallpaper.

According to a twelfth aspect, an embodiment of this application provides a cross-device dragging apparatus, where the apparatus may be used in the second terminal device according to the eleventh aspect, so that the second terminal device implements the method according to the eleventh aspect and any one of the possible implementations of the eleventh aspect. A function of the apparatus may be implemented by hardware, or may be implemented by executing corresponding software by hardware. The hardware or software includes one or more modules or units corresponding to the steps in the method according to the eleventh aspect and any one of the possible implementations of the eleventh aspect.

For example, the apparatus may include a display unit, a receiving unit, a processing unit, and the like. The display unit, the receiving unit, and the processing unit may cooperate to implement the method according to the eleventh aspect and any one of the possible implementations of the eleventh aspect. For example, the display unit may be configured to display a second interface; the receiving unit may be configured to receive a second operation; and the processing unit may be configured to control, in response to the second operation, the display unit to display a second UI animation effect on a screen edge of the second interface, and the like Similarly, the display unit, the receiving unit, and the processing unit may cooperate to implement functions corresponding to all steps of the method according to the eleventh aspect and any one of the possible implementations of the eleventh aspect. Details are not described herein again.

According to a thirteenth aspect, an embodiment of this application provides an electronic device. The electronic device may be the second terminal device according to the eleventh aspect. The electronic device includes a processor and a memory configured to store executable instructions of the processor. When the processor is configured to execute the instructions, the electronic device is enabled to implement the method according to the eleventh aspect and any one of the possible implementations of the eleventh aspect.

According to a fourteenth aspect, an embodiment of this application provides a computer-readable storage medium. The computer-readable storage medium stores computer program instructions, and when the computer program instructions are executed by an electronic device, the electronic device is enabled to implement the method according to the eleventh aspect and any one of the possible implementations of the eleventh aspect.

According to a fifteenth aspect, an embodiment of this application provides a computer program product, including computer-readable code or a non-volatile computer-readable storage medium carrying computer-readable code. When the computer-readable code is run in an electronic device, a processor in the electronic device implements the method according to the eleventh aspect and any one of the possible implementations of the eleventh aspect.

For beneficial effects of the twelfth aspect to the fifteenth aspect, refer to the descriptions in the eleventh aspect. Details are not described herein again.

According to a sixteenth aspect, an embodiment of this application provides a cross-device dragging method, where the method is applied to a first terminal device. The method includes: The first terminal device displays a first interface. When a first object in a second interface displayed by a second terminal device is dragged into the first interface, the first terminal device displays a first UI animation effect on a screen edge of the first interface, where the first UI animation effect is used to give a user a prompt that the first object is dragged to the first interface.

In a possible implementation, a display region of the first UI animation effect is related to a location that is on the first interface and to which a dragging shadow of the first object is dragged.

For example, the first terminal device may display the first UI animation effect in a specific range (for example, a preset distance range) above and below the location (namely, a location that appears on the screen edge of the first terminal device) that is on the first interface and to which the dragging shadow of the first object is dragged. The location that is on the first display interface and to which the dragging shadow of the first object is dragged may be determined based on a location at which the dragging shadow of the first object is dragged out of a display interface of the second terminal device. For example, a distance between the location at which the dragging shadow of the first object is dragged out of the display interface of the second terminal device and an upper side (top) screen edge of the second terminal device is 30% of a distance between an upper side screen and a lower side screen. In this case, a distance between the location that is on the first interface and to which the dragging shadow of the first object is dragged and an upper side (top) screen edge of the first terminal device may also be 30% of a distance between an upper side screen and a lower side screen. Alternatively, the location that is on the first interface and to which the dragging shadow of the first object is dragged maybe a relative receiving location in physical space. This is not limited herein.

Optionally, the method further includes: In a process in which the first object is dragged to a location at which the dragging shadow of the first object is far away from the screen edge, the first terminal device performs highlighting or color enhancement on a region that is in the display region of the first UI animation effect and that is related to the location of the dragging shadow of the first object.

For example, a color for color enhancement of the first UI animation effect may be related to a color of the first object or a color of the first interface. For example, the color for color enhancement of the first UI animation effect may be the same as the color of the first object, or when the first interface is a desktop, the color for color enhancement of the first UI animation effect may be similar to a color of a desktop wallpaper, for example, a color in a dominant color of the desktop wallpaper is selected.

Optionally, the method further includes: The first terminal device displays a tailing effect of the first object in the process in which the first object is dragged to the location at which the dragging shadow of the first object is far away from the screen edge, where a display region of the tailing effect moves along with the dragging shadow of the first object. In a process in which the display region of the tailing effect moves along with the dragging shadow of the first object, the tailing effect gradually becomes smaller or remains unchanged, and display brightness of the tailing effect gradually decreases and/or a color becomes lighter. After the dragging shadow of the first object moves beyond a preset distance, the first terminal device no longer displays the tailing effect.

Optionally, the method further includes: In response to ending the dragging operation on the first object, the first terminal device no longer displays the first UI animation effect.

According to a seventeenth aspect, an embodiment of this application provides a cross-device dragging apparatus, where the apparatus may be used in the first terminal device according to the sixteenth aspect, so that the first terminal device implements the method according to the sixteenth aspect and any one of the possible implementations of the sixteenth aspect. A function of the apparatus may be implemented by hardware, or may be implemented by executing corresponding software by hardware. The hardware or software includes one or more modules or units corresponding to the steps in the method according to the sixteenth aspect and any one of the possible implementations of the sixteenth aspect.

For example, the apparatus may include a display unit, a receiving unit, a processing unit, and the like. The display unit, the receiving unit, and the processing unit may cooperate to implement the method according to the sixteenth aspect and any one of the possible implementations of the sixteenth aspect. For example, the display unit may be configured to display a first interface; the receiving unit may be configured to receive an operation of dragging a first object to the first interface; and the processing unit may be configured to: when the first object in a second interface displayed by a second terminal device is dragged to the first interface, control the display unit to display a first UI animation effect at a screen edge of the first interface, and the like. Similarly, the display unit, the receiving unit, and the processing unit may cooperate to implement functions corresponding to all steps of the method according to the sixteenth aspect and any one of the possible implementations of the sixteenth aspect. Details are not described herein again.

According to an eighteenth aspect, an embodiment of this application provides an electronic device. The electronic device may be the first terminal device according to the sixteenth aspect. The electronic device includes a processor and a memory configured to store executable instructions of the processor. When the processor is configured to execute the instructions, the electronic device is enabled to implement the method according to the sixteenth aspect and any one of the possible implementations of the sixteenth aspect.

According to a nineteenth aspect, an embodiment of this application provides a computer-readable storage medium. The computer-readable storage medium stores computer program instructions, and when the computer program instructions are executed by an electronic device, the electronic device is enabled to implement the method according to the sixteenth aspect and any one of the possible implementations of the sixteenth aspect.

According to a twentieth aspect, an embodiment of this application provides a computer program product, including computer-readable code or a non-volatile computer-readable storage medium carrying computer-readable code. When the computer-readable code is run in an electronic device, a processor in the electronic device implements the method according to the sixteenth aspect and any one of the possible implementations of the sixteenth aspect.

For beneficial effects of the seventeenth aspect to the twentieth aspect, refer to the descriptions in the sixteenth aspect. Details are not described herein again.

It should be understood that, descriptions of technical features, technical solutions, beneficial effects, or similar words in this application do not imply that all features and advantages can be implemented in any individual embodiment. On the contrary, it may be understood that, the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, the technical solutions, and the beneficial effects described in embodiments may be combined in any proper manner. A person skilled in the art may understand that an embodiment may be implemented without one or more specific technical features, technical solutions, or beneficial effects in a specific embodiment. In other embodiments, additional technical features and beneficial effects may be identified in a specific embodiment that does not reflect all embodiments.

### BRIEF DESCRIPTION OF DRAWINGS

FIG. 1 is a schematic diagram of a structure of a mobile phone according to an embodiment of this application;
FIG. 2 is a schematic composition diagram of a multi-device hybrid dragging system according to an embodiment of this application;
FIG. 3 is a schematic flowchart of a cross-device dragging method according to an embodiment of this application;
FIG. 4A to FIG. 4C are a schematic diagram of a scenario of non-projection-based dragging according to an embodiment of this application;
FIG. 5A to FIG. 5C are a schematic diagram of a scenario of projection-based dragging according to an embodiment of this application;
FIG. 6 is a schematic diagram of a display interface of a mobile phone according to an embodiment of this application;
FIG. 7 is another schematic diagram of a display interface of a mobile phone according to an embodiment of this application;
FIG. 8 is still another schematic diagram of a display interface of a mobile phone according to an embodiment of this application;
FIG. 9 is still another schematic diagram of a display interface of a mobile phone according to an embodiment of this application;
FIG. 10A is still another schematic diagram of a display interface of a mobile phone according to an embodiment of this application;
FIG. 10B-1 and FIG. 10B-2 are a schematic diagram of a scenario in which a user triggers a mobile phone to display an application recommendation panel in a drawer display manner according to an embodiment of this application;

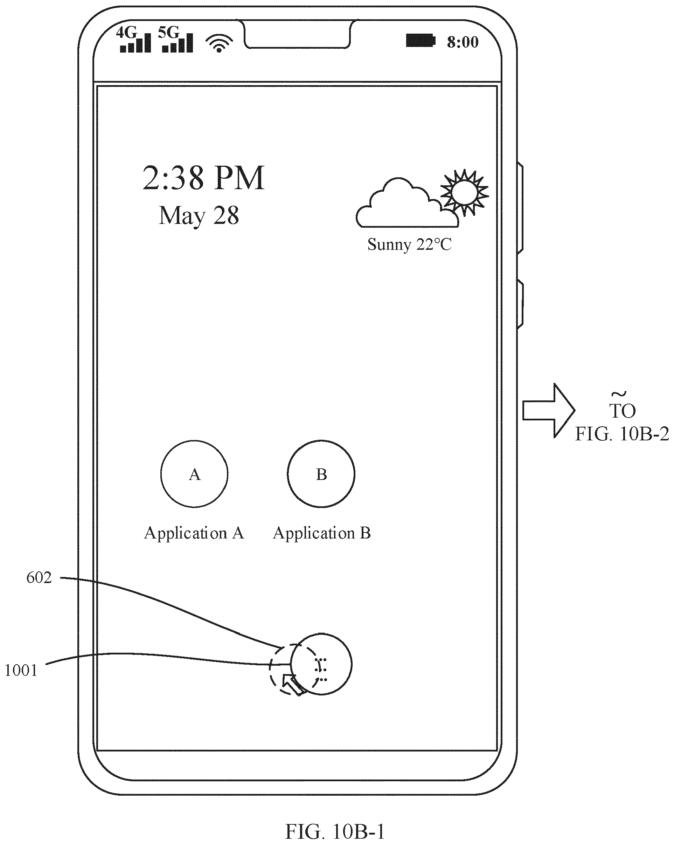

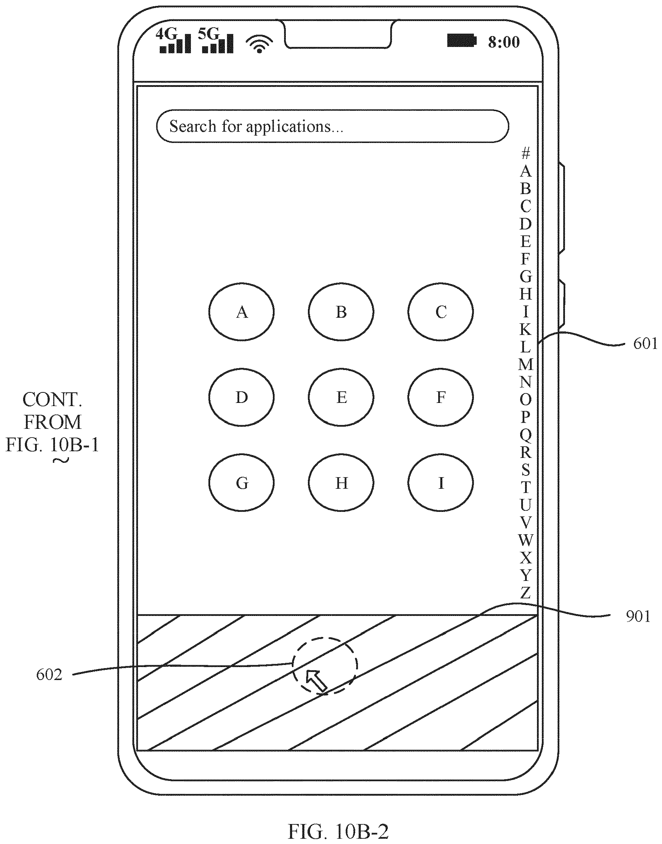

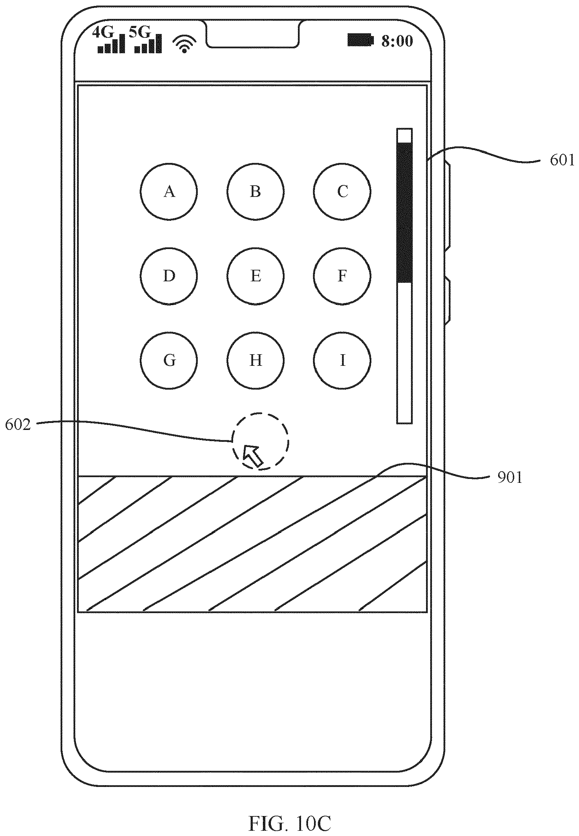

FIG. 10C is still another schematic diagram of a display interface of a mobile phone according to an embodiment of this application;

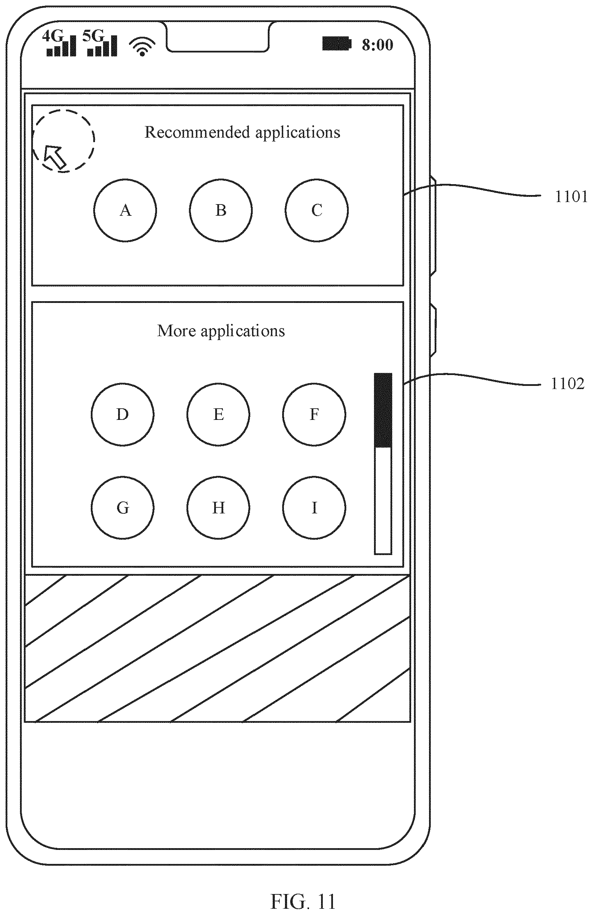

FIG. 11 is still another schematic diagram of a display interface of a mobile phone according to an embodiment of this application;

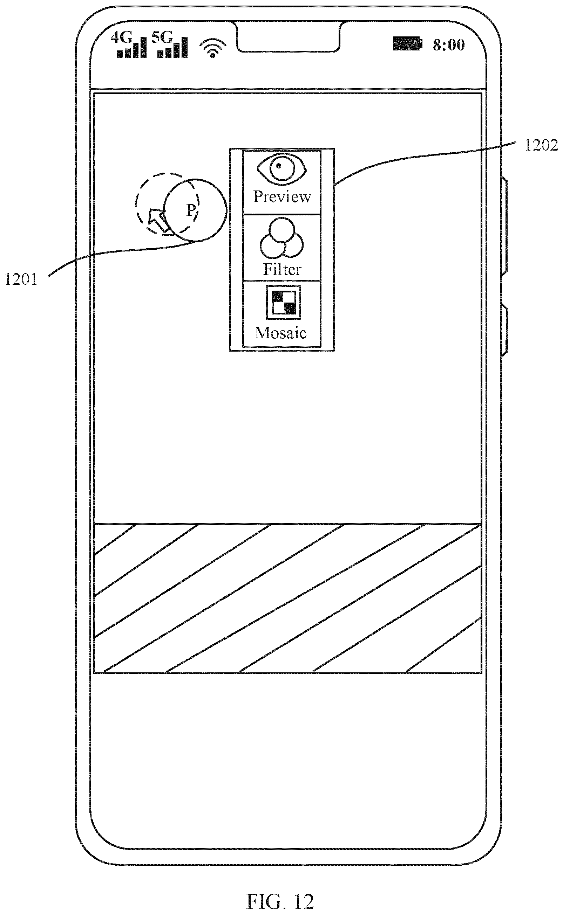

FIG. 12 is still another schematic diagram of a display interface of a mobile phone according to an embodiment of this application;

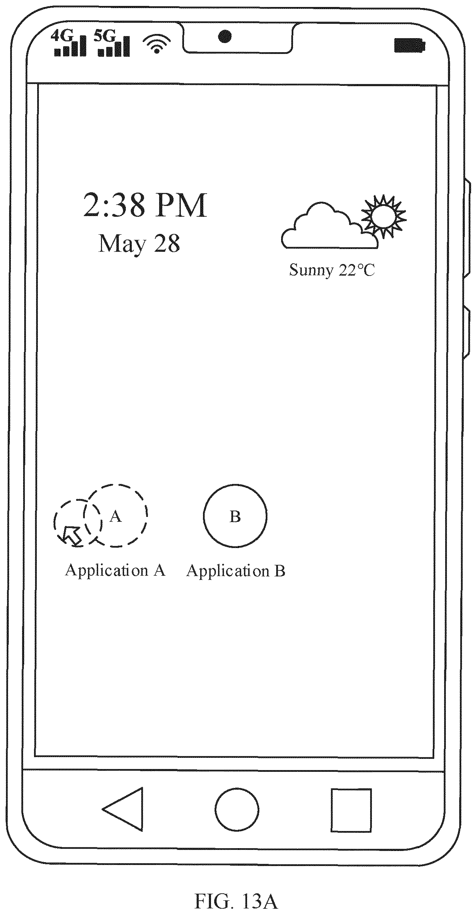

FIG. 13A is a schematic diagram of a desktop of a mobile phone according to an embodiment of this application;

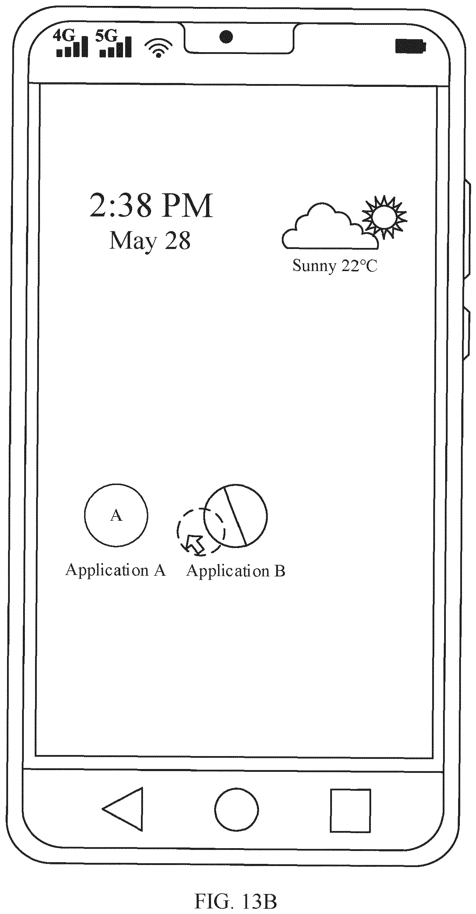

FIG. 13B is another schematic diagram of a desktop of a mobile phone according to an embodiment of this application;

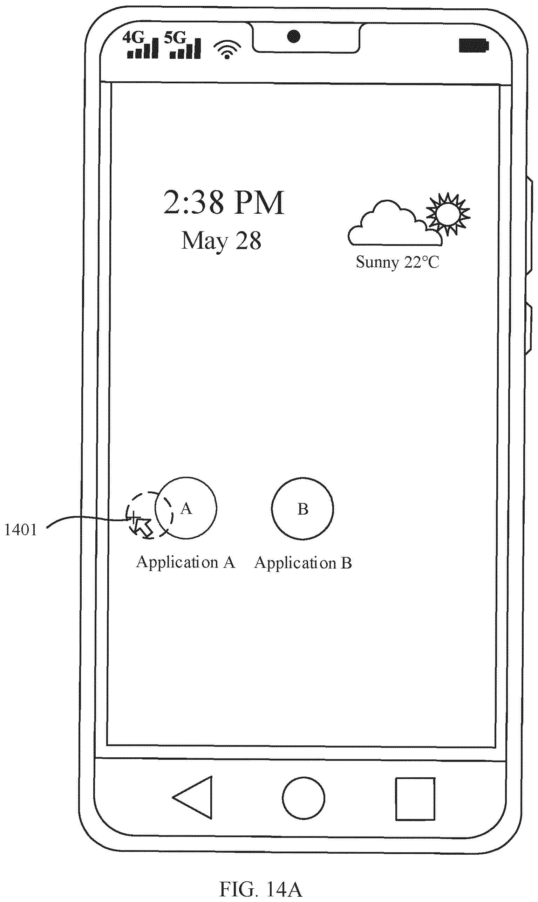

FIG. 14A is still another schematic diagram of a desktop of a mobile phone according to an embodiment of this application;

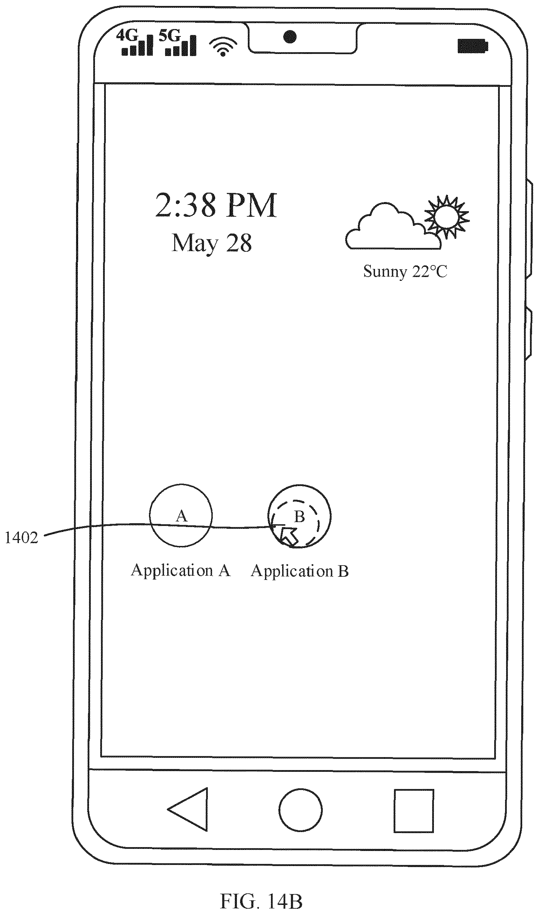

FIG. 14B is still another schematic diagram of a desktop of a mobile phone according to an embodiment of this application;

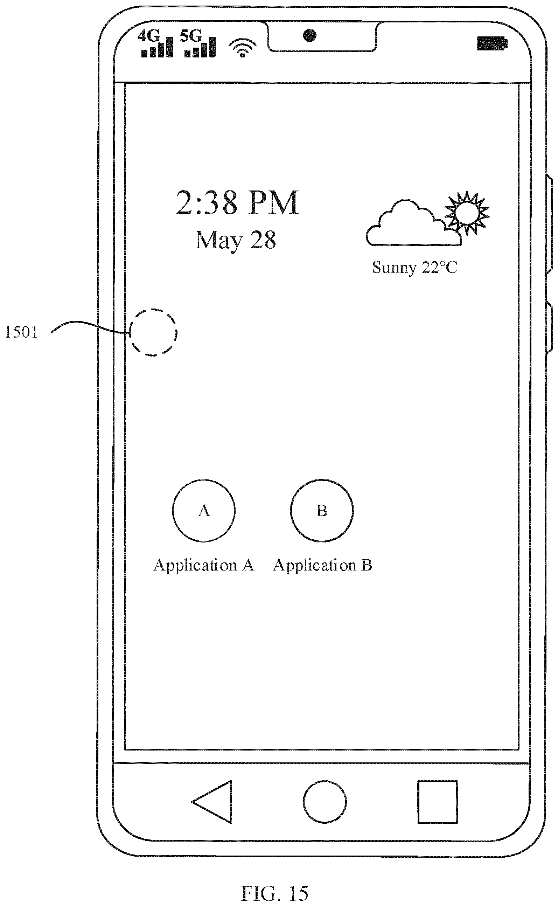

FIG. 15 is still another schematic diagram of a desktop of a mobile phone according to an embodiment of this application;

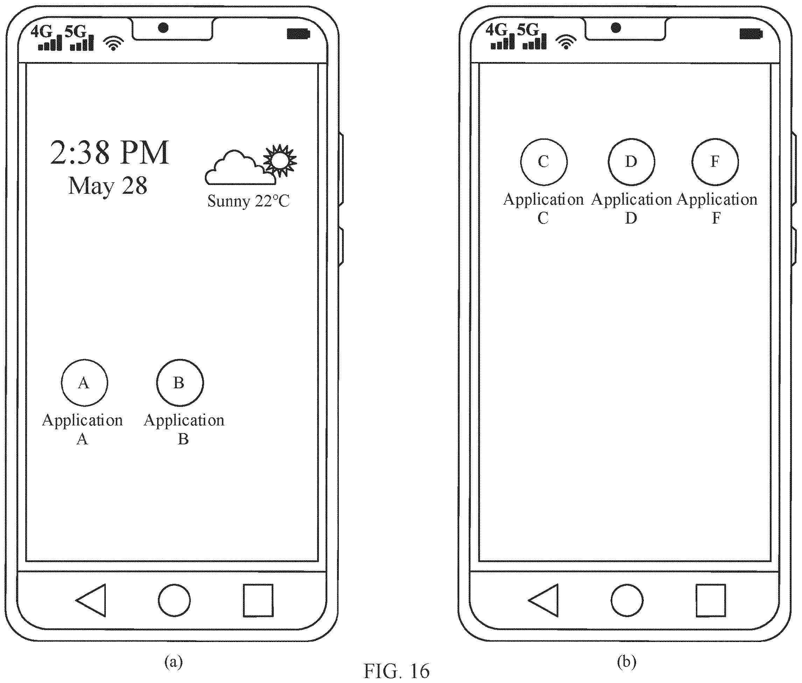

FIG. 16 is still another schematic diagram of a desktop of a mobile phone according to an embodiment of this application;

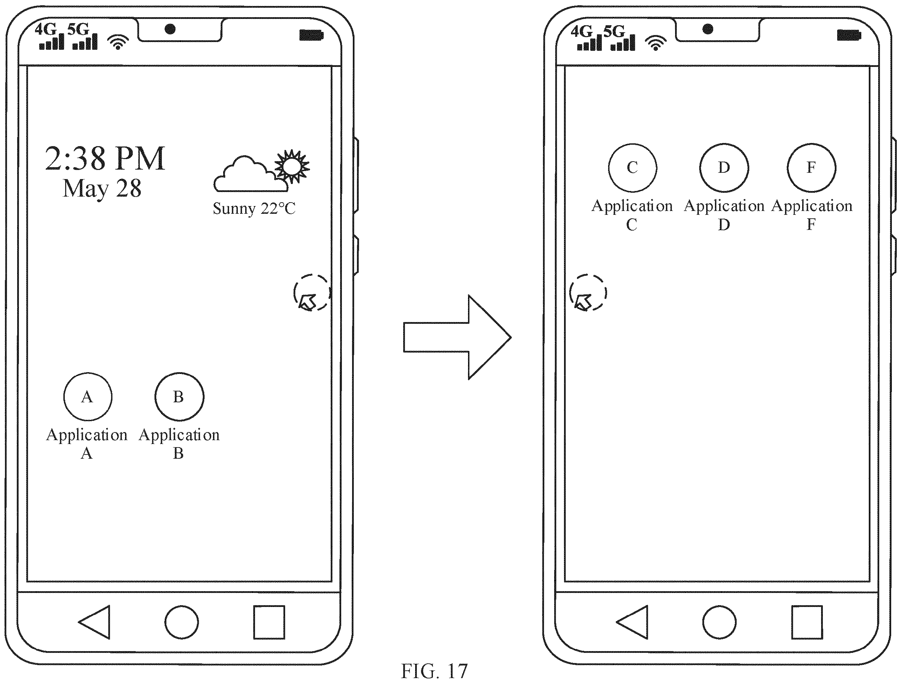

FIG. 17 is a schematic diagram of a scenario in which a mobile phone switches a display interface according to an embodiment of this application;

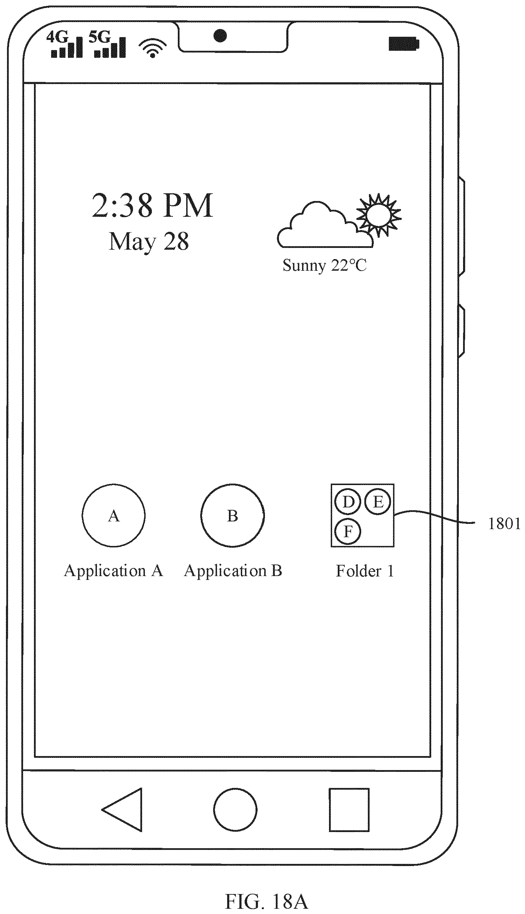

FIG. 18A is still another schematic diagram of a desktop of a mobile phone according to an embodiment of this application;

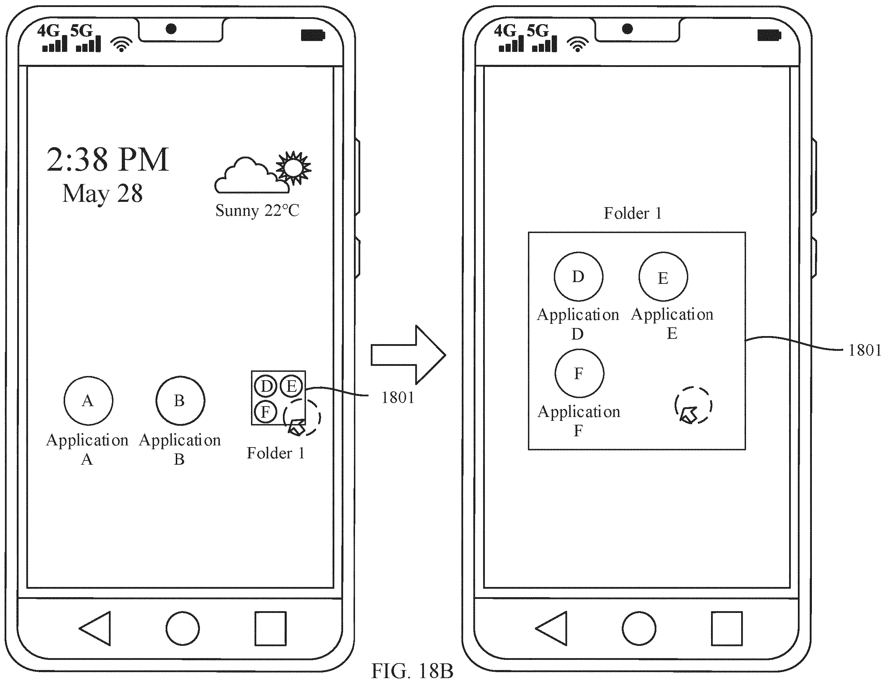

FIG. 18B is a schematic diagram of a scenario in which a mobile phone opens a "folder 1" 1801 according to an embodiment of this application;

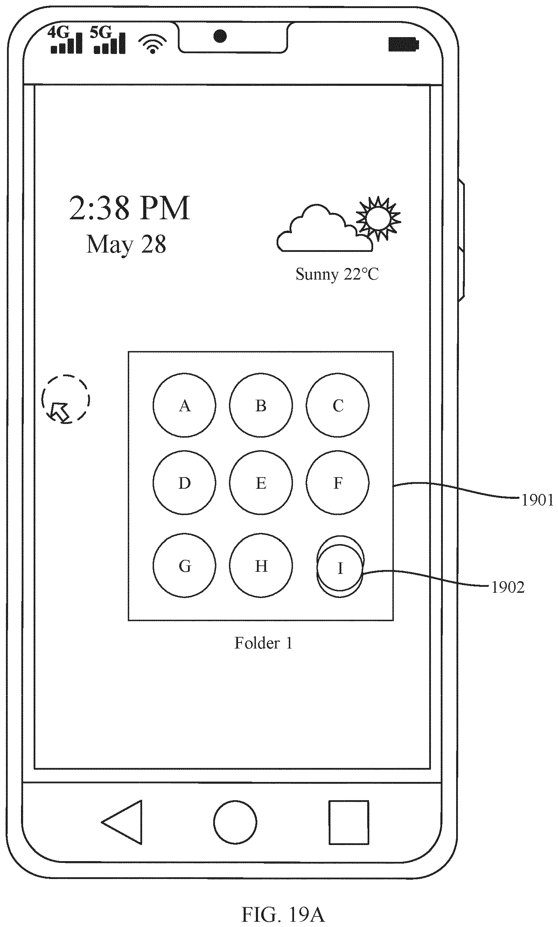

FIG. 19A is still another schematic diagram of a desktop of a mobile phone according to an embodiment of this application;

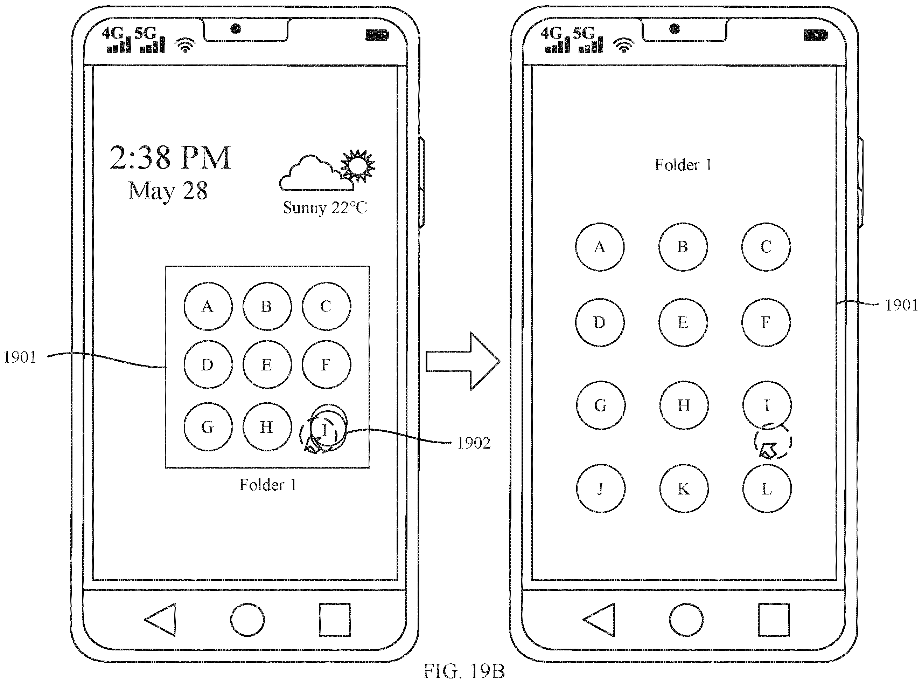

FIG. 19B is a schematic diagram of a scenario in which a mobile phone is triggered to display all application icons of a "folder 1" 1901 according to an embodiment of this application;

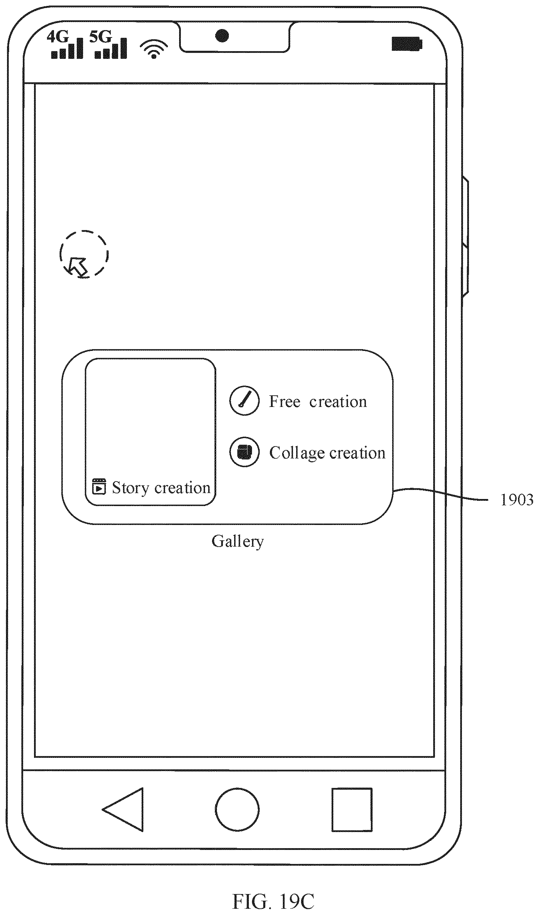

FIG. 19C is still another schematic diagram of a display interface of a mobile phone according to an embodiment of this application;

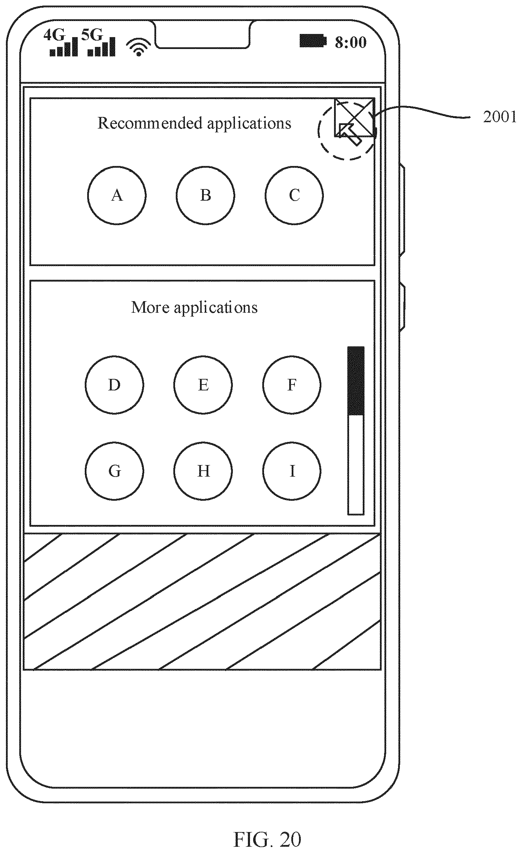

FIG. 20 is still another schematic diagram of a display interface of a mobile phone according to an embodiment of this application;

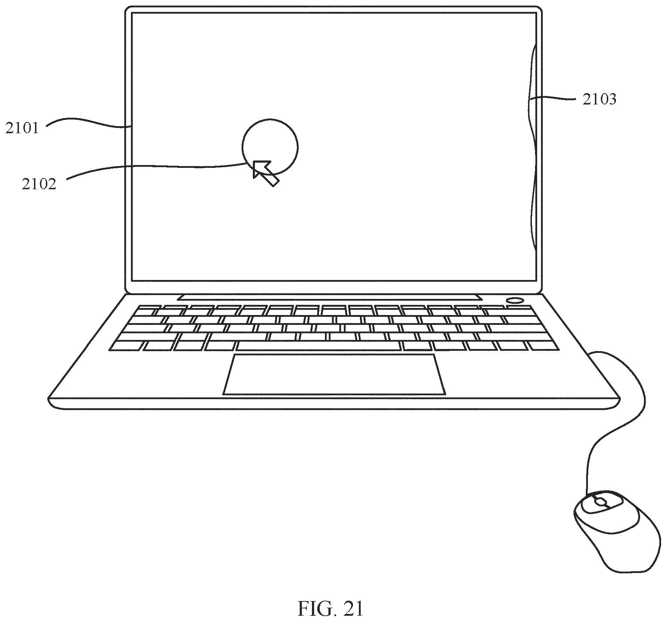

FIG. 21 is a schematic diagram of displaying a UI animation effect by a PC according to an embodiment of this application;

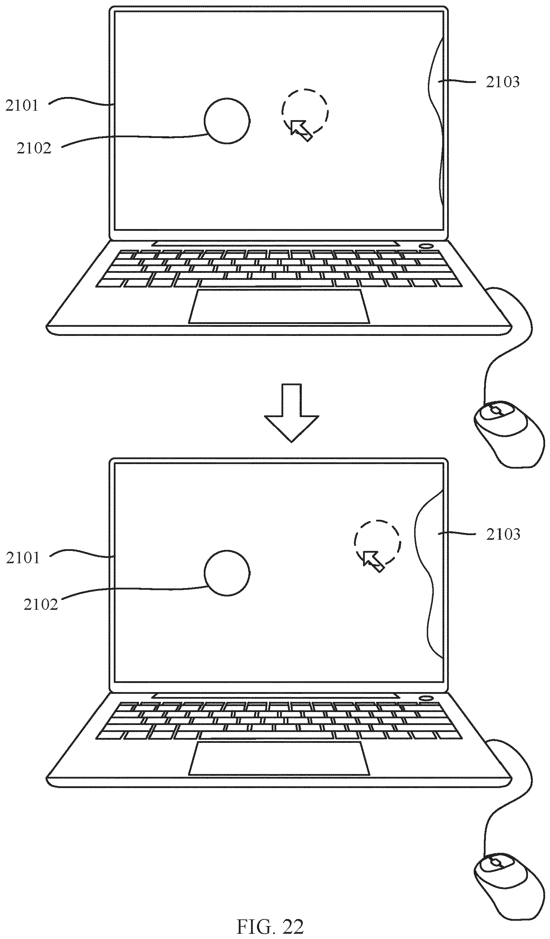

FIG. 22 is another schematic diagram of displaying a UI animation effect by a PC according to an embodiment of this application;

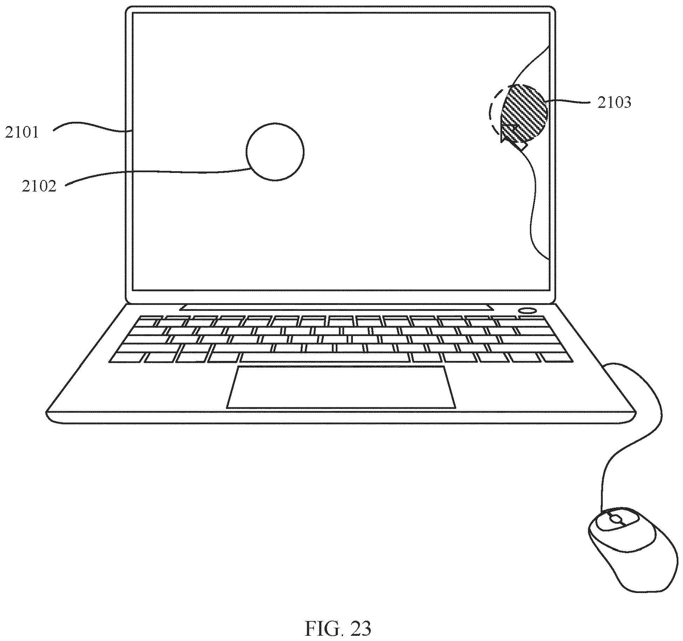

FIG. 23 is still another schematic diagram of displaying a UI animation effect by a PC according to an embodiment of this application;

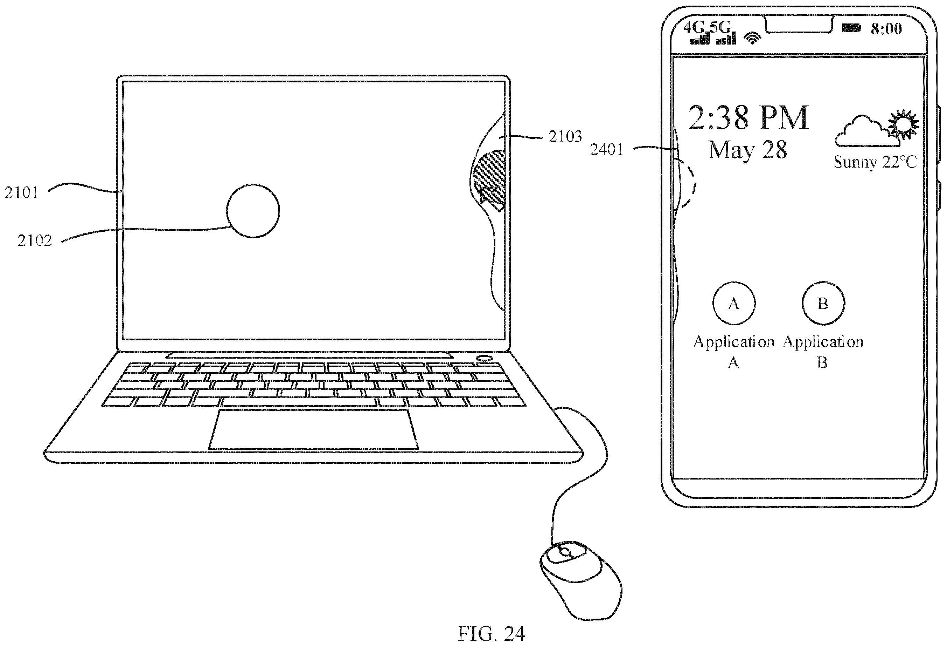

FIG. 24 is a schematic diagram of displaying a UI animation effect by a mobile phone according to an embodiment of this application;

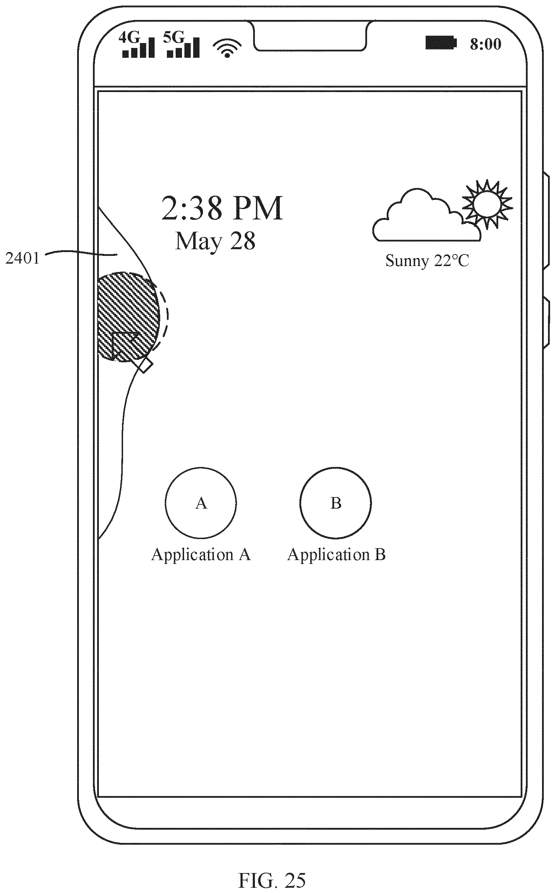

FIG. 25 is another schematic diagram of displaying a UI animation effect by a mobile phone according to an embodiment of this application;

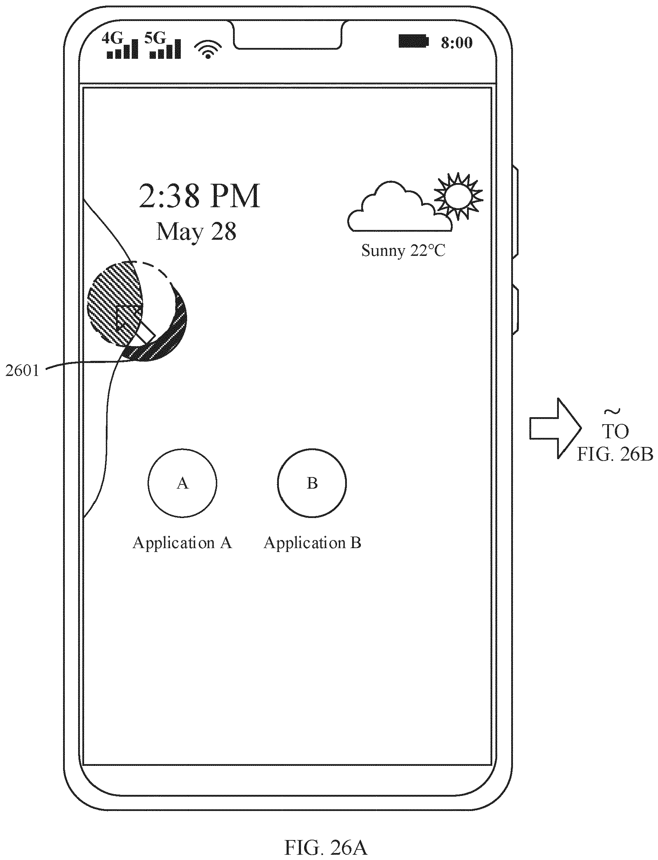

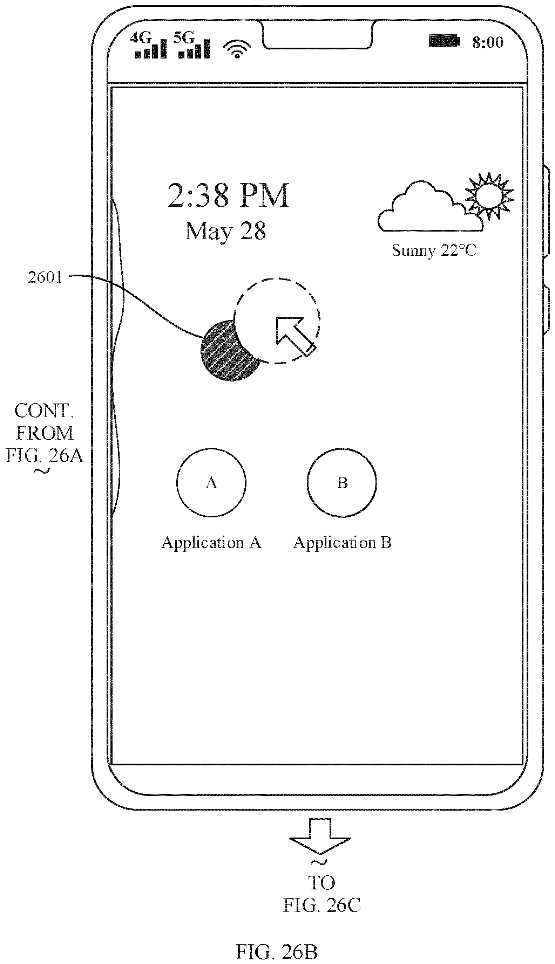

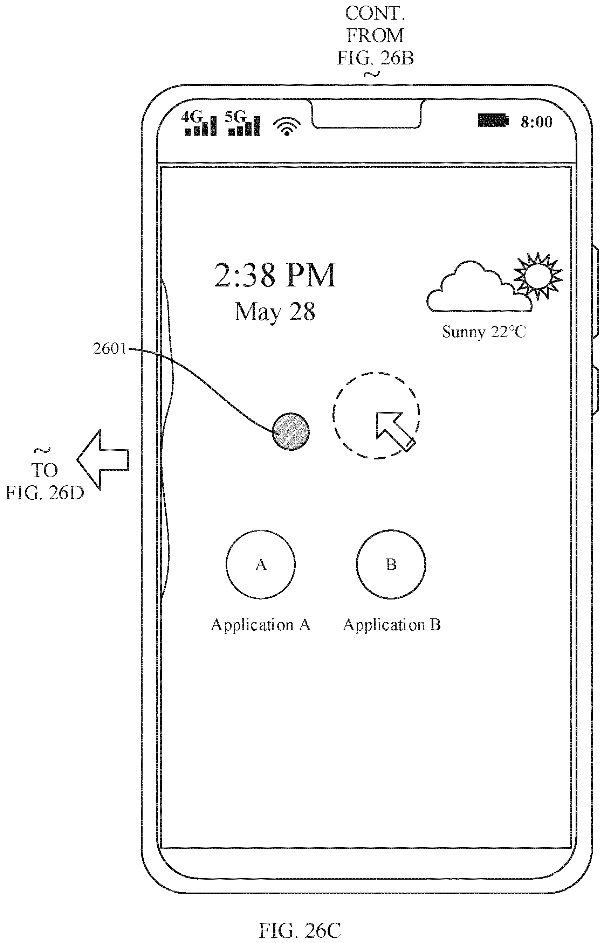

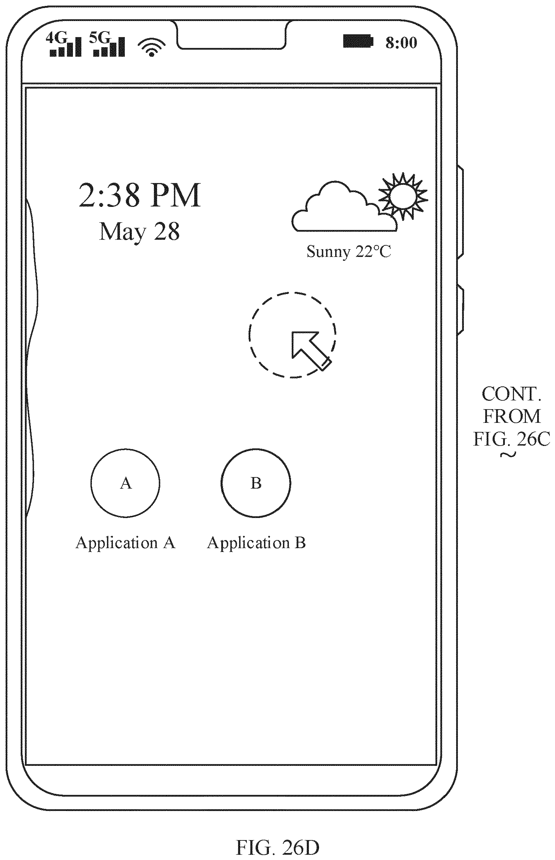

FIG. 26A to FIG. 26D are still another schematic diagram of displaying a UI animation effect by a mobile phone according to an embodiment of this application;

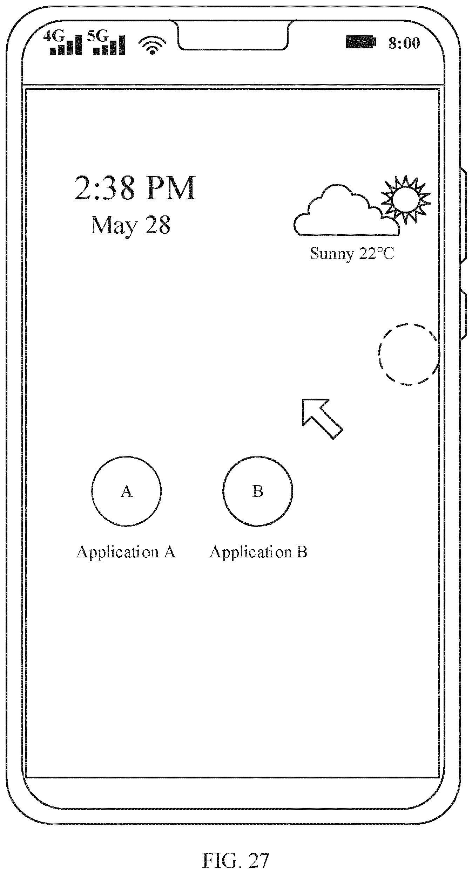

FIG. 27 is still another schematic diagram of displaying a UI animation effect by a mobile phone according to an embodiment of this application;

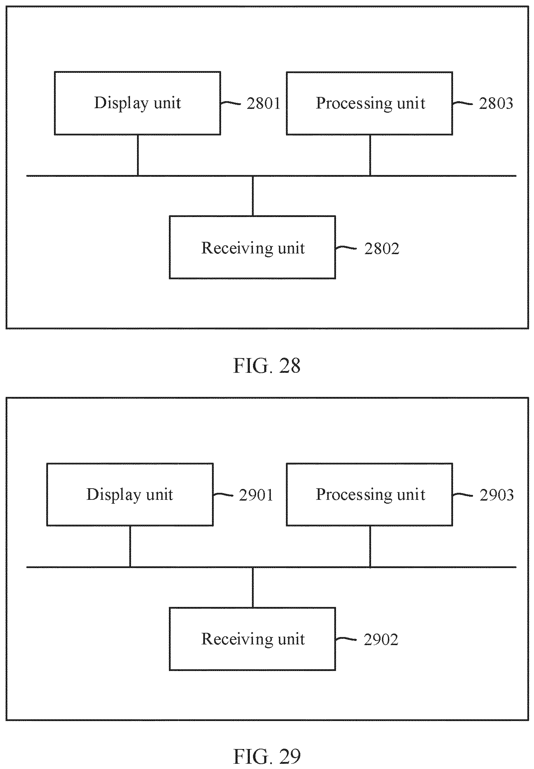

FIG. 28 is a schematic diagram of a structure of a cross-device dragging apparatus according to an embodiment of this application; and
FIG. 29 is another schematic diagram of a structure of a cross-device dragging apparatus according to an embodiment of this application.

### DESCRIPTION OF EMBODIMENTS

Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in other ways. The term "connection" includes a direct connection and an indirect connection, unless otherwise indicated.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

A plurality of (for example, at least two) terminal devices such as a mobile phone, a tablet computer, a personal computer (personal computer, PC), and a smart home device (for example, a television) may be used collaboratively. A scenario in which the plurality of terminal devices are used collaboratively may be referred to as a multi-device collaboration scenario. In the multi-device collaboration scenario, a user may drag an object in a terminal device 1 to a terminal device 2 (namely, cross-device dragging), and open or save the object in the terminal device 2. For example, the dragged object may include a file (such as a document, a picture, music, or a video), a text/text content, an application icon, a widget (widget), and the like.

The terminal device 1 may be referred to as a source (source) end or a drag-out end, and the terminal device 2 may be referred to as a receive (sink) end or a drag-in end. It should be noted that, a device used as a source end in a pair of relationships may also be a receive end in another pair of relationships. In other words, for a terminal device, the terminal device may be used as a source end of another terminal device, or may be used as a receive end of another terminal device.

Currently, in an implementation, when cross-device dragging is implemented between the source end and the receive end, the receive end needs to have an explicit drag-in application, and the user needs to start the drag-in application at the receive end in advance, and then the user may drag the object at the source end to the drag-in application at the receive end. The drag-in application may save or open the dragged object. Alternatively, in another implementation, when the user does not start the drag-in application in advance at the receive end, the user may also drag the object at the source end to a desktop of the receive end, and the receive end may save the dragged object to a local default storage path (for example, a file manager) or open the object by using a default application (for example, a browser).

The foregoing existing manner of implementing cross-device dragging between the source end and the receive end is complex, and a response of the receive end to the dragged object is not intelligent enough.

In this background, an embodiment of this application provides a cross-device dragging method. The method is applicable to a scenario in which an object is dragged between any two terminal devices. In the method, when a user drags an object from a source end to a receive end, the receive end may recommend one or more applications (app for short) to the user. In a process of dragging the object, based on the application recommended by the receive end, the user can quickly select an application for opening the object or save the object.

Optionally, in embodiments of this application, the source end and the receive end may establish a connection in a wired or wireless manner. Based on the established connection, the source end and the receive end may be used together. A wireless communication protocol used when the source end and the receive end establish a connection in a wireless manner may be a wireless fidelity (wireless fidelity, Wi-Fi) protocol, a Bluetooth (Bluetooth) protocol, a ZigBee protocol, a near field communication (near field communication, NFC) protocol, or the like, or may be various cellular network protocols. This is not specifically limited herein.

The source end and the receive end each may be a mobile phone, a tablet computer, a handheld computer, a PC, a cellular phone, a personal digital assistant (personal digital assistant, PDA), a wearable device (for example, a smartwatch), a smart home device (for example, a television set), a vehicle-mounted computer, a game console, an augmented reality (augmented reality, AR)/virtual reality (virtual reality, VR) device, and the like. Specific device forms of the source end and the receive end are not limited in this application.

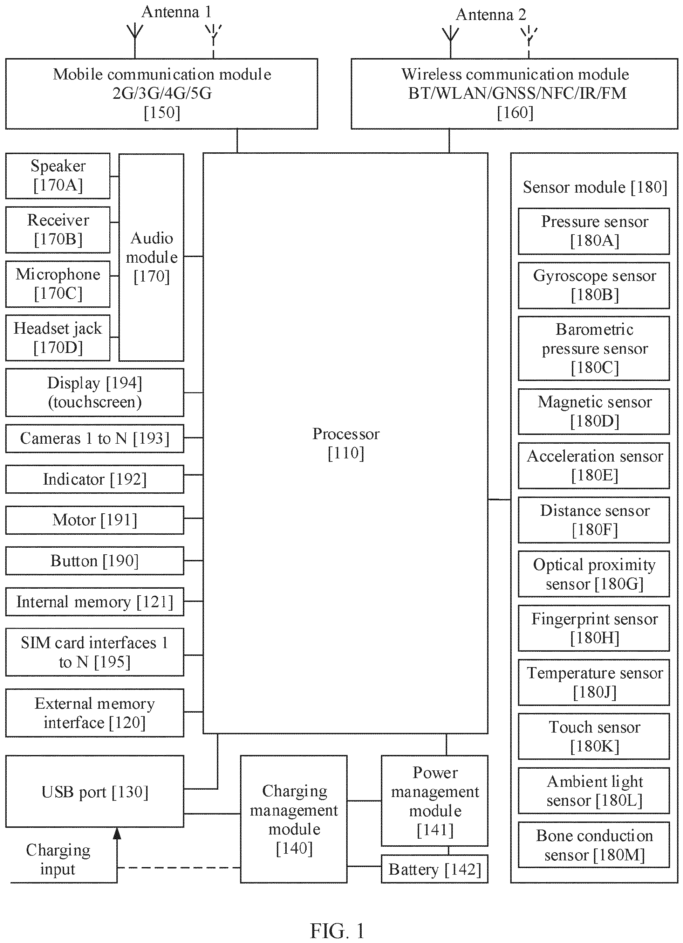

For example, the source end or the receive end is a mobile phone. FIG. 1 is a schematic diagram of a structure of a mobile phone according to an embodiment of this application. As shown in FIG. 1, the mobile phone may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB port, and/or the like.

The external memory interface 120 may be configured to connect to an external storage card such as a micro SD card, to extend a storage capability of the mobile phone. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the mobile phone and data processing. For example, when the mobile phone is used as the source end, the mobile phone may execute the instructions of the internal memory 121, to implement the steps performed by the source end in the cross-device dragging method according to embodiments of this application. Alternatively, when the mobile phone is used as the receive end, the mobile phone may execute the instructions of the internal memory 121, to implement the steps performed by the receive end in the cross-device dragging method according to embodiments of this application. The internal memory 121 may include a program storage region and a data storage region. The program storage region may store an operating system, an application required by at least one function (for example, a voice playing function or an image playing function), and the like. The data storage region may store data (for example, audio data and an address book) created during use of the mobile phone, and the like. In addition, the internal memory 121 may include a highspeed random access memory, or may include a non-volatile memory for example, at least one magnetic disk storage device, a flash memory device, or a universal flash storage (universal flash storage, UFS).

The charging management module 140 is configured to receive a charging input from the charger. The charging management module 140 supplies power to the mobile phone through the power management module 141 while charging the battery 142. The power management module 141 is configured to connect to the battery 142, the charging management module 140, and the processor 110. The power management module 141 may also receive an input of the battery 142 to supply power to the mobile phone.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another function module.

The wireless communication module 160 may provide a solution that includes wireless communication such as a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), NFC, and an infrared (infrared, IR) technology and that is applied to the mobile phone. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the mobile phone is coupled to the mobile communication module 150, and the antenna 2 thereof is coupled to the wireless communication module 160, so that the mobile phone can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS). For example, the mobile phone may couple and interact with another mobile phone by using the mobile communication module 150 and the wireless communication module 160. For example, the mobile phone may be used as a source end to send a first message, a second message, and the like to the another mobile phone used as a receive end.

The mobile phone may implement an audio function such as music playing or recording through the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. When a touch operation is performed on the display 194, the mobile phone detects intensity of the touch operation by using the pressure sensor 180A. The mobile phone may also calculate a touch location based on a detection signal of the pressure sensor 180A.

The gyroscope sensor 180B may be configured to determine a motion posture of the mobile phone. The barometric pressure sensor 180C is configured to measure barometric pressure. The magnetic sensor 180D includes a Hall sensor. The mobile phone may detect opening and closing of a flip cover by using the magnetic sensor 180D. The acceleration sensor 180E may detect values of accelerations of the mobile phone in various directions (usually on three axes). The distance sensor 180F is configured to measure a distance. The mobile phone may detect, by using the optical proximity sensor 180G, that the user holds the mobile phone close to an ear for a call, to automatically turn off a screen for power saving. The optical proximity sensor 180G may also be used in a flip cover mode or a pocket mode to automatically perform screen unlocking or locking. The ambient light sensor 180L is configured to sense ambient light brightness. The fingerprint sensor 180H is configured to collect a fingerprint. The mobile phone may use a feature of the collected fingerprint to implement fingerprint-based unlocking, application access locking, fingerprint-based photographing, fingerprint-based call answering, and the like. The temperature sensor 180J is configured to detect a temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may alternatively be disposed on a surface of the mobile phone at a location different from a location of the display 194.

The bone conduction sensor 180M may obtain a vibration signal. The button 190 includes a power button, a volume button, and the like. The button 190 may be a mechanical button, or may be a touch button. The motor 191 may generate a vibration prompt. The motor 191 may be configured to provide an incoming call vibration prompt and a touch vibration feedback. The indicator 192 may be an indicator light, and may be configured to indicate a charging status and a power change, or may be configured to indicate a message, a missed call, a notification, and the like.

The mobile phone may implement a photographing function by using the ISP, the camera 193, the video codec, the GPU, the display 194, the application processor, and the like. In some embodiments, the mobile phone may include one or N cameras 193, where N is a positive integer greater than 1.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone may include one or N displays 194, where N is a positive integer greater than 1.

The mobile phone implements a display function by using the GPU, the display 194, the application processor, and the like. The GPU is a microprocessor for image processing, and is connected to the display 194 and the application processor. The processor 110 may include one or more GPUs, which execute program instructions to generate or change display information.

The SIM card interface 195 is used to connect to a SIM card. The SIM card may be inserted into the SIM card interface 195 or removed from the SIM card interface 195, to implement contact with and separation from the mobile phone. The mobile phone may support one or N SIM card interfaces, where N is a positive integer greater than 1. The mobile phone interacts with a network by using the SIM card, to implement functions such as calling and data communication. In some embodiments, the mobile phone uses an eSIM, namely, an embedded SIM card. The eSIM card may be embedded in the mobile phone, and cannot be separated from the mobile phone.

It may be understood that the structure shown in FIG. 1 does not constitute a specific limitation on the mobile phone. In some other embodiments, the mobile phone may include more or fewer components than those shown in the figure, or some components may be combined, or some components may be split, or there may be a different component layout. The components shown in the figure may be implemented by hardware, software, or a combination of software and hardware.

In addition, when the source end or the receive end is another terminal device, for example, a tablet computer, a handheld computer, a PC, a cellular phone, a personal digital assistant (personal digital assistant, PDA), a wearable device (for example, a smartwatch), a smart home device (for example, a television set), a vehicle-mounted computer, a game console, and an augmented reality (augmented reality, AR)/virtual reality (virtual reality, VR) device, for structures of these other terminal devices, refer to FIG. 1. A difference lies in that components may be added to or removed from the structures of these other terminal devices based on the structure shown in FIG. 1.

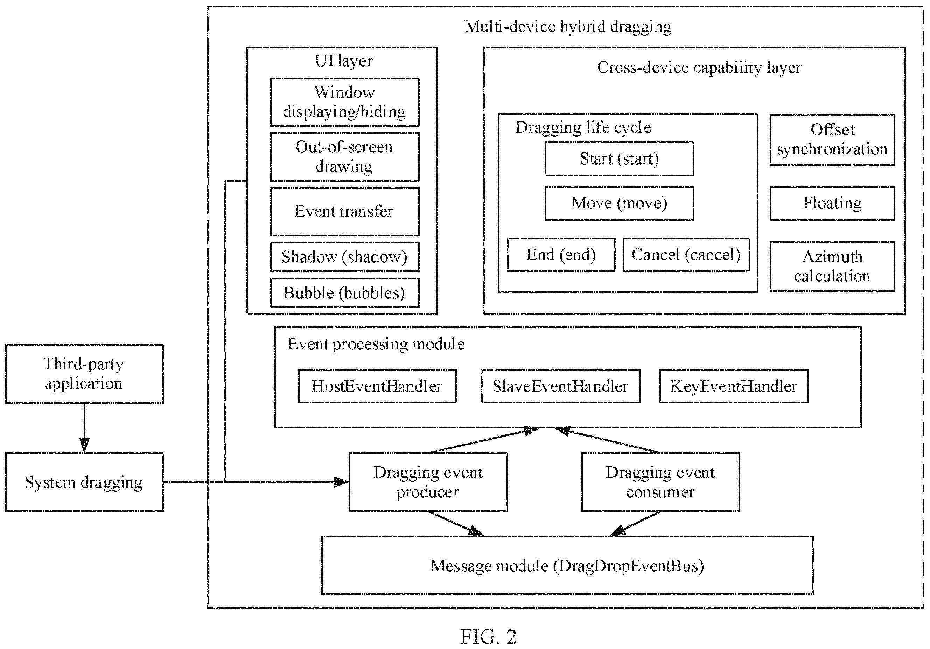

In this embodiment of this application, each terminal device (including the source end and the receive end) may include a multi-device hybrid dragging system, and the source end and the receive end may separately implement the functions described in embodiments of this application based on respective multi-device hybrid dragging systems. For example, FIG. 2 is a schematic composition diagram of a multi-device hybrid dragging system according to an embodiment of this application. As shown in FIG. 2, the multi-device hybrid dragging system may include: a UI layer, a cross-device capability layer, an event processing module, a dragging event producer, a dragging event consumer, and a message module (DragDropEventBus).

The UI layer may be used by a terminal device to display a shadow (shadow) and a bubble (bubble) in a dragging process and receive a dragging event to control functions such as displaying and hiding of a related window.

The cross-device capability layer is used by the terminal device to implement functions such as controlling an entire dragging life cycle and ensuring that a dragging shadow is consistent with a gesture or an action of a pointer. The pointer may be a mouse pointer, a stylus pointer, a touchpad pointer, or the like. The pointer may be a static or dynamic image. The pointer may be displayed in different styles in different cases.

The event processing module may be used by the terminal device to implement functions such as processing a dragging event at two ends of the dragging event producer and the dragging event consumer, and processing a mouse traversal event, a tap event, and a moving event.

When the terminal device is used as a source end, the terminal device may be used as a device for initiating a dragging action, and a module related to the dragging event producer is configured to perform a corresponding function. When the terminal device is used as a receive end, the terminal device may be used as a device for receiving a dragging action, and a module related to the dragging event consumer is configured to perform a corresponding function.

The message module may be used as a transmission channel for a dragging event, a mouse event, a gesture event, or the like, and the terminal device may transmit an event or information to another device by using the message module. For example, the source end and the receive end may exchange information by using respective message modules.

Optionally, in embodiments of this application, the source end and the receive end each may be a touchscreen device or a non-touchscreen device. For example, the source end is a touchscreen device, and the receive end is a non-touchscreen device; the source end is a non-touchscreen device, and the receive end is a touchscreen device; or both the source end and the receive end are a touchscreen device or a non-touchscreen device. For any terminal device of the source end and the receive end, when the terminal device is a touchscreen device, a user may control the terminal device in a manner such as tapping and sliding on a display (touchscreen) of the terminal device by using a finger, a stylus, or the like. For example, the user may drag an object on the display of the terminal device by using the finger. When the terminal device is a non-touchscreen device, the terminal device may be connected to an input device like a mouse, a keyboard, or a touch panel, and the user may control the terminal device by using the input device. For example, the user may drag an object on the display of the terminal device by using the mouse. Alternatively, when the terminal device is a touchscreen device, the terminal device may be connected to an input device like a mouse, a keyboard, or a touch panel, and the user may control the terminal device by using the input device. This is not limited herein.

In embodiments of this application, the source end may be a second terminal device, and the receive end may be a first terminal device. Alternatively, the source end may be a first terminal device, and the receive end may be a second terminal device.

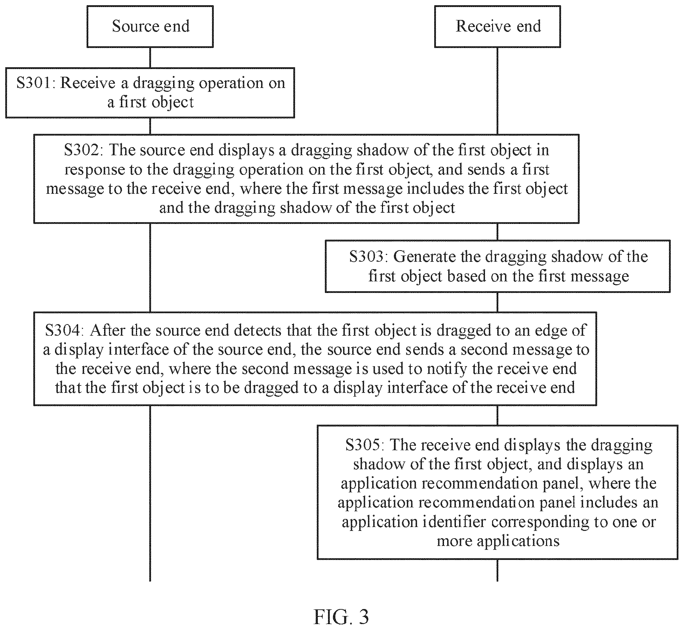

For example, FIG. 3 is a schematic flowchart of a cross-device dragging method according to an embodiment of this application. As shown in FIG. 3, the cross-device dragging method may include the following steps.

S301: A source end receives a dragging operation on a first object.

Optionally, the source end may display an interface, where the interface includes the first object. The first object may be a text (or referred to as a word, text), a file, a folder, a window, a component, or the like on the display interface of the source end. The file may include files in one or more of the following formats, for example, a Word document, an Excel workbook, a PowerPoint presentation, a bitmap, an image file, a plain text file, a sound file, a film file, a flash animation file, a web page file, and a compressed file.

For example, when the source end is a touchscreen device, the dragging operation on the first object may be an operation that a user taps and drags the first object on a display (touchscreen) of the source end by using a finger, a stylus, or the like to move the first object. When the source end is a non-touchscreen device, the source end may be connected to an input device like a mouse, a keyboard, or a touch panel, and display a pointer corresponding to the input device on the display interface. The dragging operation on the first object may be an operation that the user may control the pointer to drag the first object through the input device to move the first object.

S302: The source end displays a dragging shadow of the first object in response to the dragging operation on the first object, and sends a first message to a receive end, where the first message includes the first object and the dragging shadow of the first object.

For example, the first message may be a drag start (drag start) message. The first object included in the first message is specific content that is dragged.

Correspondingly, the receive end receives the first message. After receiving the first message, the receive end may perform S303.

S303: The receive end generates the dragging shadow of the first object based on the first message.

S304: After the source end detects that the first object is dragged to an edge of the display interface of the source end, the source end sends a second message to the receive end, where the second message is used to notify the receive end that the first object is to be dragged to a display interface of the receive end.

Correspondingly, the receive end receives the second message.

Optionally, that the source end detects that the first object is dragged to the edge of the display interface of the source end may mean that the source end detects that a distance between a location to which the first object is dragged and the edge of the display interface of the source end is less than a preset distance threshold, for example, fewer than two pixels, or less than 0.1 centimeters (cm).

In a possible implementation, the source end may determine a coordinate location of the pointer on the display based on an initial location and a relative offset of the pointer, so as to determine whether the pointer slides to the edge of the display. When the pointer slides to the edge of the display, it indicates that the first object is dragged to the edge of the display interface of the source end.

After receiving the second message, the receive end may perform S305.

S305: The receive end displays the dragging shadow of the first object, and displays an application recommendation panel, where the application recommendation panel includes an application identifier corresponding to one or more applications.

The application identifier may be an application icon of the application. The application recommendation panel may also be referred to as a recommendation panel, a recommendation window, an application recommendation window, an application recommendation pop-up window, or the like. A name of the application recommendation panel is not limited herein. In this application, the application recommendation panel, the recommendation panel, the recommendation window, the application recommendation window, the application recommendation pop-up window, and the like may be referred to as a first window.

In embodiments of this application, the operation of dragging the first object from the display interface of the source end to the display interface of the receive end may be referred to as a first operation. In other words, the receive end may display the first window in response to the first operation.

In some embodiments, cross-device dragging between the source end and the receive end may be non-projection-based dragging. After the source end is connected to the receive end, by using a keyboard and mouse sharing technology and one set of input devices (for example, a mouse), the user may control both the source end and the receive end, and drag the first object from the display interface of the source end to the display interface of the receive end.

The keyboard and mouse sharing technology may be a technology in which an input device (for example, a mouse or a touchpad) of a terminal is used to control another terminal. For example, in a possible implementation, after receiving the first message, the receive end may create a virtual input device. The virtual input device has a same function as a conventional input device such as a mouse or a touchpad, and may be used by the receive end to simulate a corresponding input event. For example, the source end is a PC, an input device of the PC is a mouse, and the receive end is a mobile phone. The virtual input device created by the mobile phone has a same function as a conventional mouse, may be considered as a mouse shared by the PC with the mobile phone, and can be used to simulate a mouse event on the mobile phone, so that the mouse of the PC controls the mobile phone. For example, an operating system of the mobile phone is an Android system. The mobile phone may use an uinput capability of Linux to create the virtual input device, where uinput is a kernel layer module, and may simulate an input device. Through writing to a /dev/uinput (or /dev/input/uinput) device, a process may create a virtual input device with a specific function. Once the virtual input device is created, the virtual input device may simulate a corresponding event. It should be noted that a specific implementation principle of the keyboard and mouse sharing technology is not limited in this application. In some other embodiments, the keyboard and mouse sharing technology may also be implemented between the source end and the receive end based on another principle, so that the user can control both the source end and the receive end by using one set of input devices.

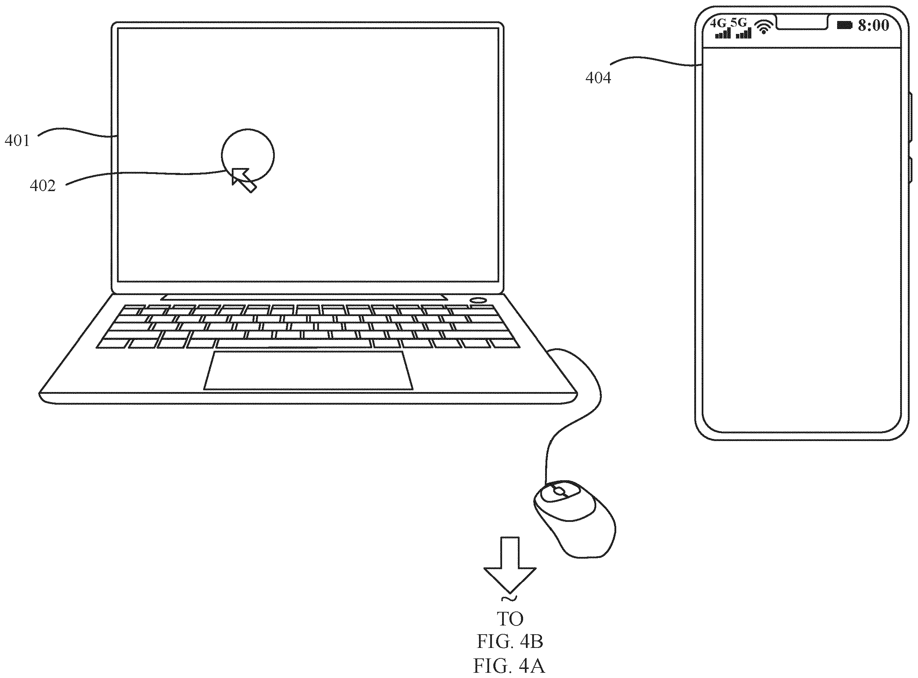

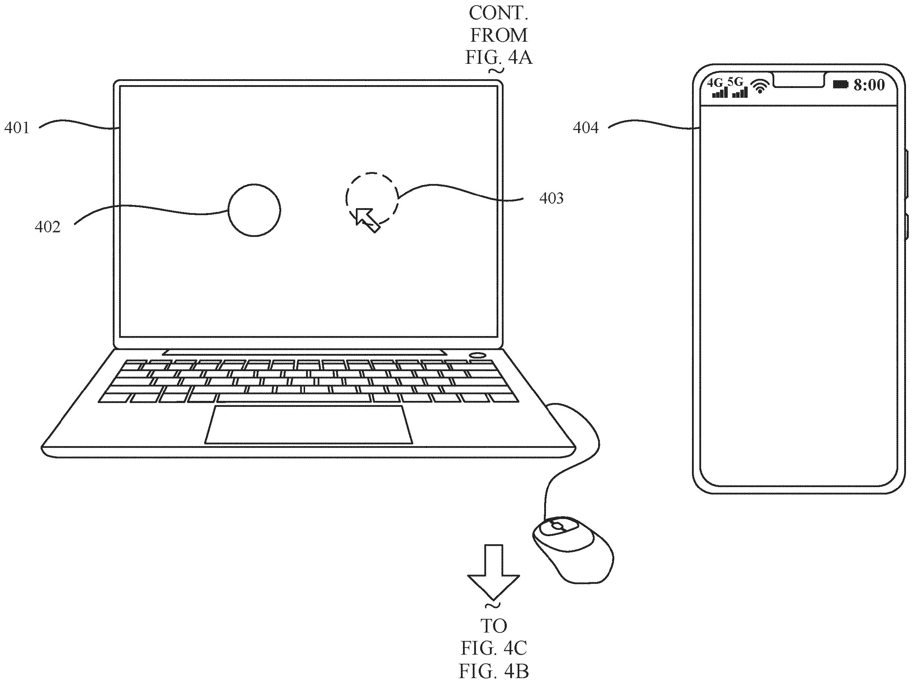

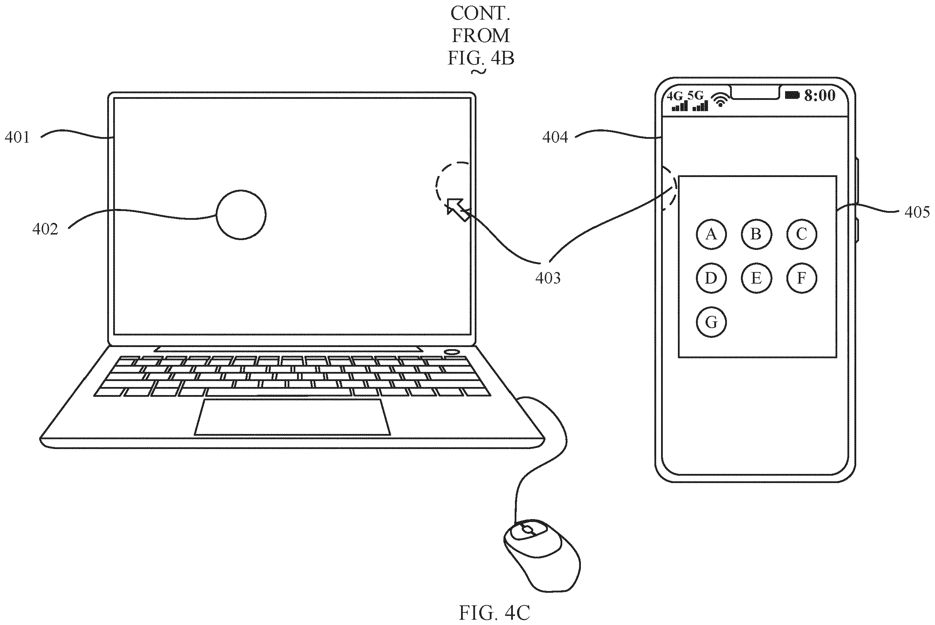

For example, a source end is a PC, a receive end is a mobile phone, and an input device of the PC is a mouse. FIG. 4A to FIG. 4C are a schematic diagram of a scenario of non-projection-based dragging according to an embodiment of this application.

As shown in FIG. 4A to FIG. 4C, a display interface 401 of the PC may include a first object 402 and a pointer (a small arrow in the figure, not marked) of the mouse. A dragging operation on the first object 402 may be an operation of clicking and dragging the first object 402 by a user by using the mouse. For example, the user may move the pointer of the mouse to the first object 402, click and hold a left button of the mouse, and move the mouse, so that the first object 402 may be dragged. In response to the dragging operation on the first object 402, the PC may display a dragging shadow 403 of the first object 402. By using a keyboard and mouse sharing technology, the user may drag, by using the mouse of the PC, the first object 402 on a display interface 401 of the PC from the display interface 401 of the PC to a display interface 404 of the mobile phone. The foregoing cross-device dragging between the PC and the mobile phone is non-projection-based dragging.

After the PC detects that the first object 402 is dragged to an edge of the display interface 401 of the PC (that is, after detecting that the pointer of the mouse or the dragging shadow 403 of the first object 402 moves to the edge of the display interface 401 of the PC), the PC may send a second message to the mobile phone, to notify the mobile phone that the first object 402 is to be dragged to the display interface 404 of the mobile phone. After receiving the second message, the mobile phone may display the dragging shadow 403 of the first object 402, and display an application recommendation panel 405. The application recommendation panel 405 includes application identifiers corresponding to one or more applications, for example, an application icon of an application A, an application icon of an application B, ..., and an application icon of an application F.

It should be noted that, in a process of dragging the first object 402 from the display interface 401 of the PC to the display interface 404 of the mobile phone, the dragging shadow 403 of the first object 402 displayed on the display interface 404 of the mobile phone is related to the dragging shadow 403 of the first object 402 displayed on the display interface 401 of the PC, the dragging shadow 403 of the first object 402 displayed on the display interface 404 of the mobile phone is gradually enlarged to be complete, and the dragging shadow 403 of the first object 402 displayed on the display interface 401 of the PC is gradually reduced to disappear.

In some other embodiments, cross-device dragging between the source end and the receive end may alternatively be projection-based dragging. After the source end is connected to the receive end, the receive end may project the display interface to a display of the source end, or the source end may project the display interface to a display of the receive end. Using an example in which the receive end projects the display interface to the display of the source end, by using a reverse control capability (a capability of controlling the receive end by using an input device of the source end) and the keyboard and mouse sharing technology, the user may use the input device of the source end to control both the source end and the receive end, and drag the first object from the display interface of the source end to the display interface of the receive end.

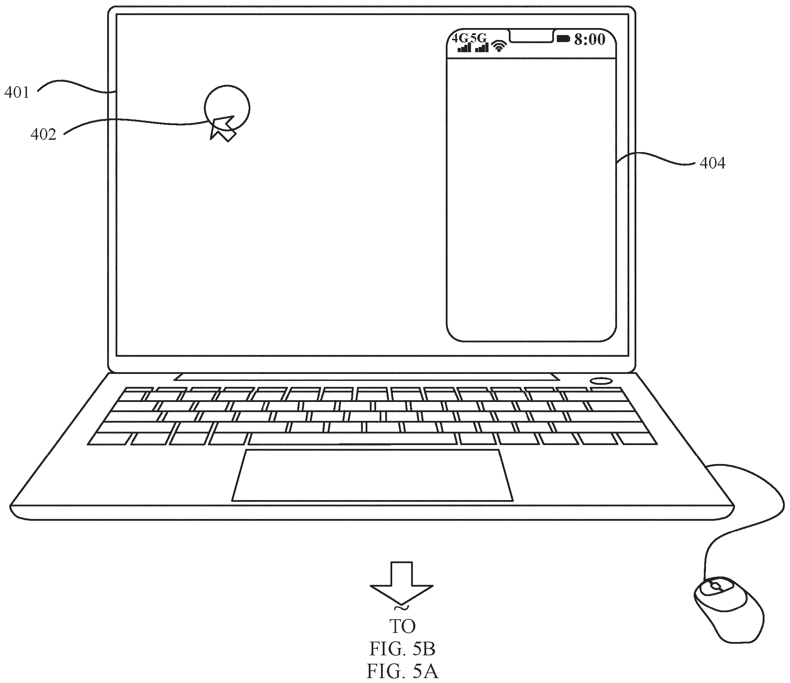

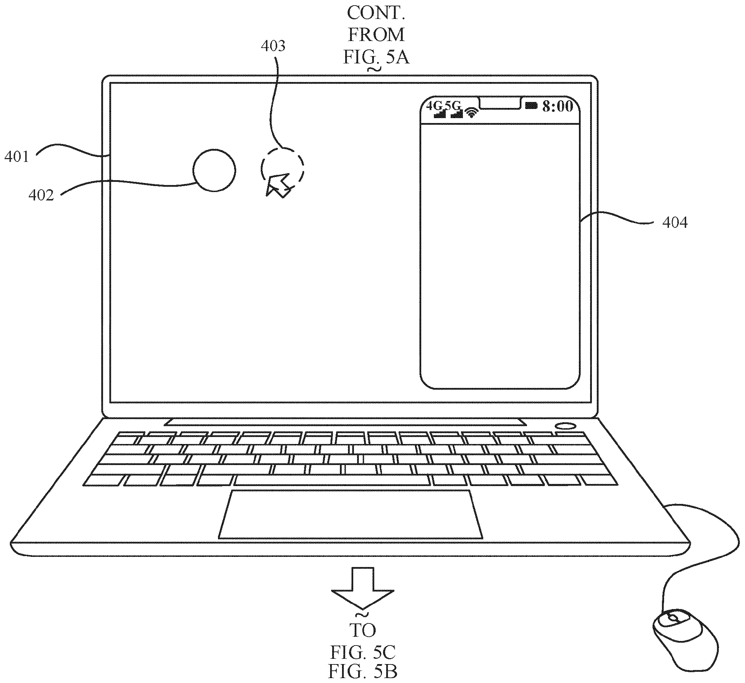

For example, similarly, a source end is a PC, a receive end is a mobile phone, and an input device of the PC is a mouse. FIG. 5A to FIG. 5C are a schematic diagram of a scenario of projection-based dragging according to an embodiment of this application.

As shown in FIG. 5A to FIG. 5C, after the mobile phone establishes a connection to the PC, the mobile phone may project a display interface of the mobile phone to a display of the PC. In this case, the display of the PC may include a display interface 401 of the PC and a display interface 404 of the mobile phone. The display interface 401 of the PC may include a first object 402 and a pointer (a small arrow in the figure, not marked) of the mouse. A dragging operation on the first object 402 may be an operation of clicking and dragging the first object 402 by a user by using the mouse. For example, the user may move the pointer of the mouse to the first object 402, click and hold a left button of the mouse, and move the mouse, so that the first object 402 may be dragged. In response to the dragging operation on the first object 402, the PC may display a dragging shadow 403 of the first object 402. By using a reverse control capability and a keyboard and mouse sharing technology, the user may drag, by using the mouse of the PC, the first object 402 on the display interface 401 of the PC from the display interface 401 of the PC to the display interface 404 of the mobile phone. The foregoing cross-device dragging between the PC and the mobile phone is projection-based dragging.

After the PC detects that the first object 402 is dragged to an edge of the display interface 401 of the PC (that is, after detecting that the pointer of the mouse or the dragging shadow 403 of the first object 402 moves to the edge of the display interface 401 of the PC), or after the PC detects that the first object 402 is dragged to an edge of the display interface 404 that is of the mobile phone and that is projected, the PC may send a second message to the mobile phone, to notify the mobile phone that the first object 402 is to be dragged to the display interface 404 of the mobile phone. After receiving the second message, the mobile phone may display the dragging shadow 403 of the first object 402, and display an application recommendation panel 405. The application recommendation panel 405 includes application identifiers corresponding to one or more applications, for example, an application icon of an application A, an application icon of an application B, ..., and an application icon of an application F.

In a possible implementation, the application identifier included in the application recommendation panel may be manually defined or preset. For example, the user or a service vendor of the receive end may pre-configure an application identifier of an application to be displayed on the application recommendation panel. To be specific, the application identifier included in the application recommendation panel is fixed.

In another possible implementation, the application recommendation panel may alternatively include application identifiers of all applications installed on the receive end. For example, the first object is dragged from the display interface of the PC to the display interface of the mobile phone. It is assumed that N applications (where N is an integer greater than 0) are installed on the mobile phone. The application recommendation panel may include application icons of the N applications installed on the mobile phone.

In still another possible implementation, the application identifier included in the application recommendation panel may alternatively be an application identifier that is of an application that can open the first object and that is determined by the receive end based on a type of the first object. For example, after receiving a first message, the receive end may determine the type of the first object based on the first object included in the first message, or the first message may include a separate field indicating the type of the first object, and the receive end may determine the type of the first object based on the field. The receive end may select, based on the type of the first object and from all the applications installed on the receive end, applications that can open the first object, and display, in the application recommendation panel, application identifiers of the applications that can open the first object. For example, it is assumed that a Word application and an Excel application are installed on the receive end, and the first object is a Word document. The recommendation panel may include an application icon of the Word application.

Optionally, that an operating system of the receive end is an Android (andriod^{™}) system is used as an example. After determining the type of the first object, the receive end may obtain, based on the type of the first object by using a queryIntentActivities method of PackageManager, application list information supporting the type.

It may be understood that, that the receive end displays the dragging shadow of the first object indicates that the first object is dragged to the display interface of the receive end. When the receive end displays the application recommendation panel, the user may continue to perform the dragging operation on the first object (for example, continue to perform dragging by using the mouse), to drag the first object to move on the display interface of the receive end. The user may continue to perform the dragging operation on the first object, to drag the first object to any application identifier displayed on the application recommendation panel, so as to open the first object by using an application corresponding to the application identifier.

In some embodiments, if the user drags the first object to an application identifier of an application that cannot open the first object, the receive end may display first prompt information in response to the operation of dragging the first object to the application identifier of the application that cannot open the first object, where the first prompt information is used to give a prompt that the application corresponding to the application identifier cannot open the first object. If the user drags the first object to an application identifier of an application that can open the first object, and ends the dragging operation on the first object (for example, releases the mouse), the receive end may open the first object by using the application corresponding to the application identifier in response to dragging the first object to the application identifier of the application that can open the first object and ending the dragging operation on the first object. That the receive end may open the first object by using the application corresponding to the application identifier may include: The receive end starts the application corresponding to the application identifier, and transfers the first object to the application corresponding to the application identifier.

For example, the user may drag the first object to a first application identifier, where the first application identifier is one of application identifiers included in a first window (namely, the application recommendation panel). In response to the operation of dragging the first object to the first application identifier, when an application corresponding to the first application identifier is an application that cannot open the first object, the receive end may display first prompt information.

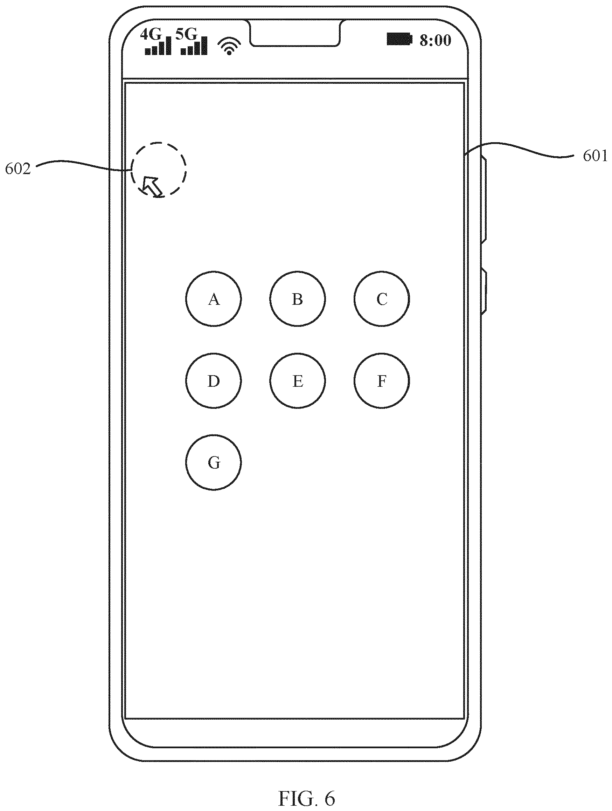

For example, the receive end is a mobile phone. FIG. 6 is a schematic diagram of a display interface of the mobile phone according to an embodiment of this application. As shown in FIG. 6, after the user drags, by using the mouse, the first object from the display interface of the PC to a display interface of the mobile phone, the mobile phone may display an application recommendation panel 601, and the display interface of the mobile phone further includes a dragging shadow 602 of the first object. It is assumed that the application recommendation panel 601 includes application identifiers respectively corresponding to an application A, an application B, an application C, an application D, an application E, an application F, and an application G. The application A, the application B, and the application C are all applications that can open the first object, and the application D, the application E, the application F, and the application G are all applications that cannot open the first object.

When the user continues to perform the dragging operation on the first object, to drag the first object to an application identifier of any one of the application A, the application B, and the application C, and end the dragging operation on the first object (for example, releases the mouse), the mobile phone may listen to a drag drop (drag drop) event. The mobile phone may open the first object by using the application corresponding to the application identifier in response to dragging, by the user, the first object to the application identifier and ending the dragging operation on the first object. For example, the first object may be a Word document, and the application A is a Word application. When the user drags the first object to an application identifier of the application A, the mobile phone may open the Word document by using the application A.

When the user continues to perform the dragging operation on the first object, to drag the first object to an application identifier of any one of the application D, the application E, the application F, and the application G, the mobile phone may display first prompt information in response to the operation of dragging the first object to the application identifier by the user, where the first prompt information is used to give a prompt that the application corresponding to the application identifier cannot open the first object. For example, the first object may be a Word document, and the application D is an Excel application. When the user drags the first object to an application identifier of the application D, the mobile phone may display first prompt information.

In some possible implementations, when the user drags the first object to an application identifier (for example, the first application identifier) of an application that cannot open the first object, the receive end may display first prompt information by changing a display status of the application identifier (for example, an application icon).

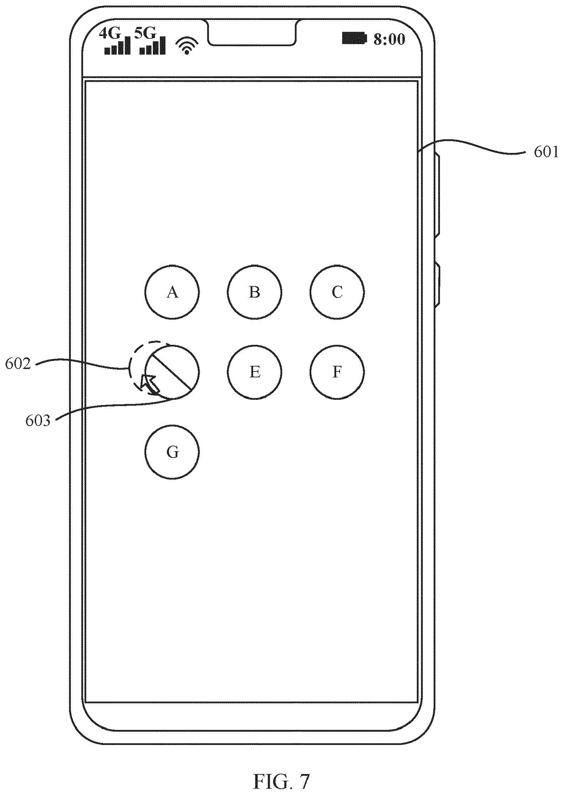

For example, FIG. 7 is another schematic diagram of the display interface of the mobile phone according to an embodiment of this application. As shown in FIG. 7, when the user continues to perform the dragging operation on the first object, to drag the first object to the application identifier of the application D, the mobile phone may change, in response to the operation of dragging the first object to the application identifier of the application D by the user, a pattern of "D" in an originally displayed application icon of the application D to one "oblique line/slash" 603 for display, so as to give the user a prompt that the application D cannot open the first object.

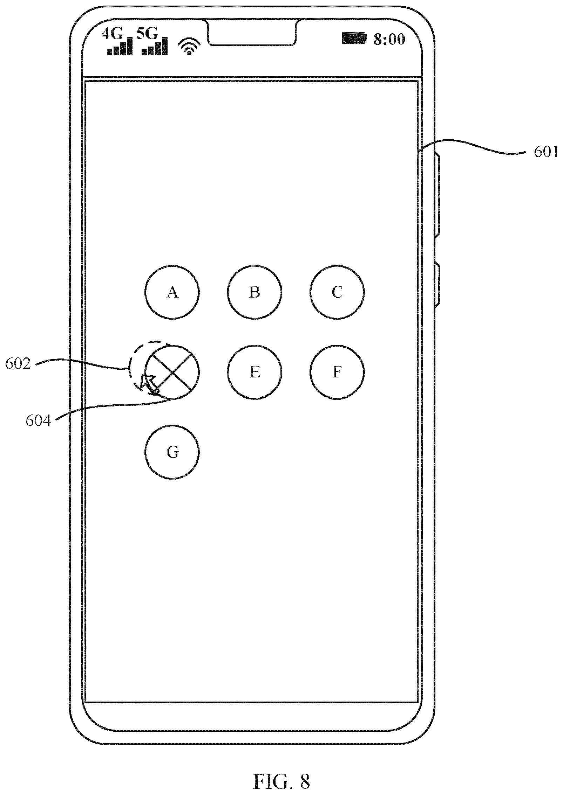

For another example, FIG. 8 is still another schematic diagram of the display interface of the mobile phone according to an embodiment of this application. As shown in FIG. 8, when the user continues to perform the dragging operation on the first object, to drag the first object to the application identifier of the application D, the mobile phone may change, in response to the operation of dragging the first object to the application identifier of the application D by the user, the pattern of "D" in the originally displayed application icon of the application D to a prompt of one "X" 604 for display, to give the user a prompt that the application D cannot open the first object.

The "oblique line/slash" 603 and the "X" 604 shown in FIG. 7 and FIG. 8 may also be referred to as forbidden identifiers. The prohibition identifier is the first prompt information. In some other examples, the prohibition identifier may alternatively be another pattern. This is not limited herein.

In some other possible implementations, when the user drags the first object to an application identifier of an application that cannot open the first object, that the receive end displays first prompt information by changing a display status of the application identifier (for example, an application icon) may also include: The receive end dims or grays out the application identifier, and an effect of dimming or graying out the application identifier is the foregoing first prompt information. For example, the receive end may change a display color of the application identifier to gray. After the display color changes to gray, the application corresponding to the application identifier may be considered as being in an inactive state, so as to give the user a prompt that the application corresponding to the application identifier cannot open the first object.

The foregoing shows some examples in which the first prompt information is implemented in a non-text prompt manner. In some possible implementations, when the user drags the first object to an application identifier of an application that cannot open the first object, the receive end may further display a text prompt on the display interface (for example, around the application identifier or on the application identifier) as the first prompt information. It should be noted that an implementation of the first prompt information is not limited in this application.

In some other embodiments, in the two implementations in which the application identifier included in the application recommendation panel is manually defined or preset, or the application identifier included in the application recommendation panel includes the application identifiers of all the applications installed on the receive end, when displaying the application recommendation panel, the receive end may alternatively display, in a differentiated manner, an application identifier of an application that cannot open the first object and an application identifier of an application that can open the first object, to give the user a prompt of the application that can open the first object and the application that cannot open the first object. The user may directly drag the first object to the application identifier of the application that can open the first object, so as to trigger the corresponding application to open the first object.

For example, in a possible implementation, the receive end may determine a type of the first object based on a first message. For a specific manner of determining the type of the first object, refer to the descriptions in the foregoing embodiments. Details are not described again. Based on the type of the first object, the receive end may classify the application identifiers included in the application recommendation panel, and determine application identifiers corresponding to applications that can open the first object and application identifiers corresponding to applications that cannot open the first object. When the receive end displays the application recommendation panel, for an application identifier, in the application recommendation panel, of an application that cannot open the first object, the receive end may dim or gray out the application identifier. For example, the receive end may change a display color of the application identifier, in the application recommendation panel, of the application that cannot open the first object to gray. After the display color changes to gray, the application corresponding to the application identifier may be considered as being in an inactive state, so as to give the user a prompt that the application corresponding to the application identifier cannot open the first object, and/or when the receive end displays the application recommendation panel, for an application identifier, in the application recommendation panel, of an application that can open the first object, the receive end may highlight such an application identifier, so as to give the user a prompt that the application corresponding to the application identifier can open the first object.

According to the cross-device dragging method provided in embodiments of this application, the user does not need to open, in advance at the receive end, an application interface that can open the first object. In a process of dragging the first object by the user, the user may select, based on the application recommendation panel displayed by the receive end, an application that needs to open the first object. The dragging manner is simpler, and the receive end responds to the dragged object more intelligently.

In some possible scenarios, the user drags the first object to the display interface of the receive end for a purpose of saving the first object at the receive end. In this case, in some embodiments of this application, the user may drag the first object to a blank region (for example, a region without an application icon) on the display interface of the receive end, and end the dragging operation on the first object. The receive end may save the first object in response to dragging, by the user, the first object to the blank region on the display interface of the receive end and ending the dragging operation on the first object. For example, the first object may be stored in a default storage path. The blank region may be a blank region on the application recommendation panel, or another blank region other than the application recommendation panel on the display interface of the receive end. In this application, the blank region in the application recommendation panel or the another blank region other than the application recommendation panel on the display interface of the receive end may be referred to as a first region, an operation of dragging the first object to the first region may be referred to as a fourth operation, and a dragged object corresponding to the fourth operation may alternatively be referred to as a second object. The second object includes the first object.

In some other embodiments, the application recommendation panel may also include a region specially used to trigger saving of the first object or trigger saving of an icon (icon) of the first object. The user may drag the first object to the region specially used to trigger saving of the first object in the application recommendation panel or trigger saving of the icon of the first object, and end the dragging operation on the first object, so as to trigger the receive end to save the first object. The region specially used to trigger saving of the first object may be referred to as a second region, and the icon specially used to trigger saving of the first object may be referred to as a first icon.

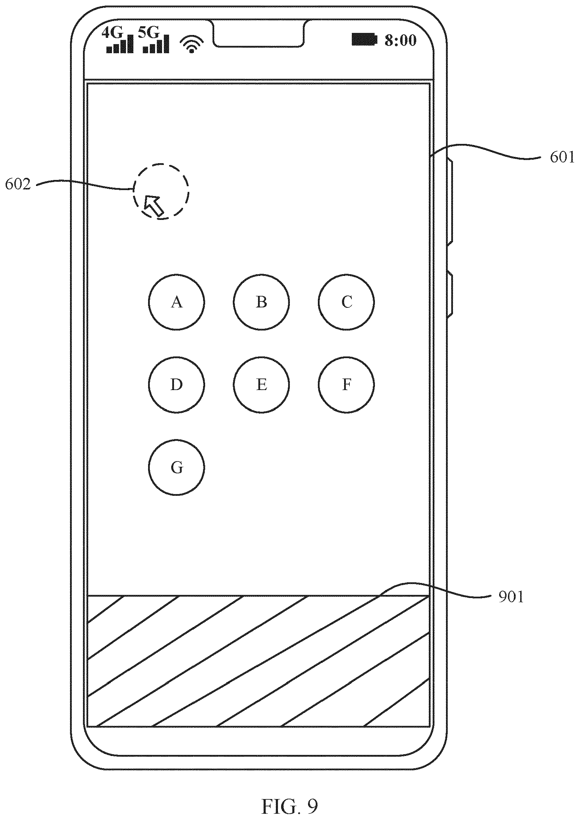

For example, FIG. 9 is still another schematic diagram of the display interface of the mobile phone according to an embodiment of this application. As shown in FIG. 9, in a possible manner, the application recommendation panel may include a saving region 901. When the user wants to save the first object, the user may drag the first object to the saving region 901, and end the dragging operation on the first object. The mobile phone may save the first object in response to dragging, by the user, the first object to the saving region 901 and ending the dragging operation on the first object.

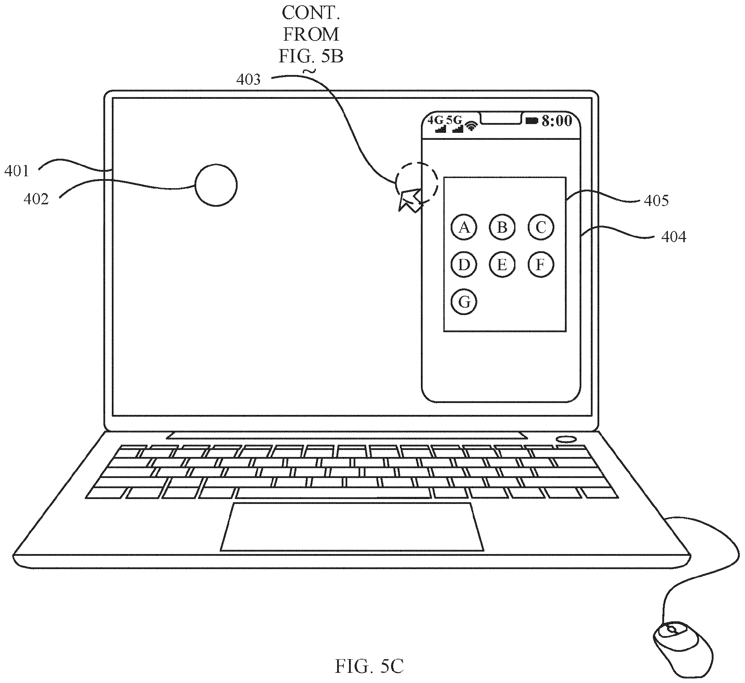

Optionally, in some embodiments of this application, a manner in which the receive end displays the application recommendation panel may include full-screen display or non-full-screen display. Non-full-screen display is used as an example in FIG. 4A to and FIG. 5C, and full-screen display is used as an example in FIG. 6 to FIG. 9. Non-full-screen display may specifically include half-screen display (that is, a region of the application recommendation panel occupies half of a region of a display of the mobile phone), one-third-screen display (that is, the region of the application recommendation panel occupies one third of the region of the display of the mobile phone), and the like.

In some other embodiments, a manner in which the receive end displays the application recommendation panel may alternatively be drawer display. When the display manner of the application recommendation panel is drawer display, step S305 may include: The receive end displays a dragging shadow of the first object, and displays a drawer button (a drawer icon) corresponding to the application recommendation panel. The receive end displays the application recommendation panel in a drawer display manner in response to an operation of dragging the first object to the drawer button by the user and keeping the first object on the drawer button for preset duration (for example, fourth duration). The preset duration may be 2 seconds, 3 seconds, 5 seconds, or the like. This is not limited.

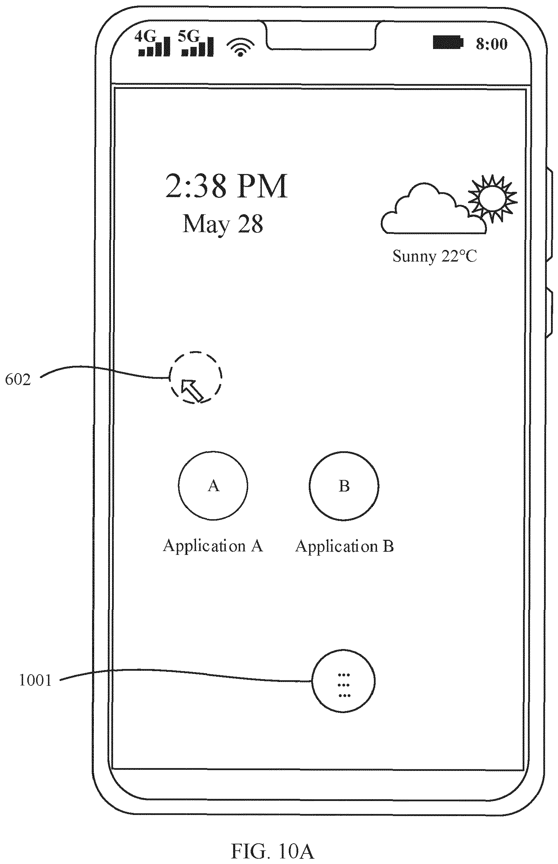

For example, the receive end is a mobile phone. FIG. 10A is still another schematic diagram of the display interface of the mobile phone according to an embodiment of this application. As shown in FIG. 10A, after receiving a second message, the mobile phone may display the dragging shadow 602 of the first object, and display a drawer button 1001 corresponding to the application recommendation panel. FIG. 10B-1 and FIG. 10B-2 are a schematic diagram of a scenario in which the user triggers the mobile phone to display the application recommendation panel in the drawer display manner according to an embodiment of this application. As shown in FIG. 10B-1 and FIG. 10B-2, the user may drag the first object to the drawer button 1001, and keep the first object on the drawer button 1001 for preset duration. The mobile phone may display the application recommendation panel 601 in the drawer display manner in response to the operation of dragging, by the user, the first object to the drawer button 1001 and keeping the first object on the drawer button 1001 for the preset duration.

For example, the mobile phone may simulate a tap event injection system. When the user drags the first object to the drawer button 1001 and keeps the first object on the drawer button 1001 for the preset duration, the tap event injection system may generate an event of tapping the drawer button 1001, and the event of tapping the drawer button 1001 may trigger the mobile phone to display the application recommendation panel 601.

The foregoing descriptions are all some possible display manners of the application recommendation panel, and the display manner of the application recommendation panel is not limited in this application.

Optionally, when the receive end displays the application recommendation panel, if the application recommendation panel cannot display all application identifiers because the application recommendation panel includes an excessive quantity of application identifiers, the receive end may display some application identifiers in the application recommendation panel, and display remaining application identifiers in a scrolling/sliding manner below the application recommendation panel.

For example, the receive end is a mobile phone. FIG. 10C is still another schematic diagram of a display interface of the mobile phone according to an embodiment of this application. As shown in FIG. 10C, when the application identifiers included in the application recommendation panel cannot be completely displayed in the region included in the application recommendation panel, the mobile phone may preferentially display some application identifiers (for example, application identifiers of the application A to an application I) in the application recommendation panel, and other application identifiers may be displayed in a sliding manner below. When the user wants to view the other application identifiers, the user may drag the first object to a bottom region in which an application identifier is displayed, to trigger the mobile phone to slide the application identifiers displayed in the application recommendation panel upward, so that the other application identifiers are displayed. Alternatively, the user may alternatively trigger, in a multi-point/finger touch (a focus other than a focus of the first object) manner, the mobile phone to display more application identifiers in the sliding manner. This is not limited herein. For example, when the user uses a finger to drag the first object, the user may use another finger to drag a black rectangle bar displayed in FIG. 10C to slide (where an actual display effect may also be in another color), so as to trigger the mobile phone to display more application identifiers in the sliding manner.

Optionally, in the foregoing scenario in which the receive end displays the application identifiers in the sliding manner, the application identifiers that are preferentially displayed in the application recommendation panel may be application identifiers of applications that are most frequently/frequently used by the user.

For example, FIG. 11 is still another schematic diagram of the display interface of the mobile phone according to an embodiment of this application. As shown in FIG. 11, when the application identifiers included in the application recommendation panel cannot be completely displayed in the region included in the application recommendation panel, the mobile phone may further display, in the application recommendation panel by group, the application identifiers that are preferentially displayed and the other application identifiers. For example, the application recommendation panel may include two groups: "recommended applications" 1101 and "more applications" 1102. The application identifiers that are preferentially displayed may be displayed in a group of "recommended applications" 1101, and the other application identifiers may be displayed in a group of "more applications" 1102, and the application identifiers displayed in the group of "more applications" 1102 may support displaying in the sliding manner.

In some embodiments, when the user continues to perform the dragging operation on the first object, to drag the first object to an application identifier displayed in the application recommendation panel, if an application corresponding to the application identifier can open the first object and includes a plurality of services (or referred to as functions), the receive end may display (pop up) a service menu (or referred to as a function menu) of the application corresponding to the application identifier beside the application identifier, where the service menu may include a service identifier of one or more services included in the application corresponding to the application identifier. The user may continue to perform the foregoing dragging operation on the first object, to drag the first object to a service identifier (for example, a first service identifier) displayed in the service menu, and end the dragging operation on the first object. In response to dragging, by the user, the first object to the service identifier displayed in the service menu and ending the dragging operation on the first object, the receive end may open the first object by using the application corresponding to the application identifier, and starts a service corresponding to the service identifier to process/operate the first object.

For example, the user may drag the first object to a first application identifier, where the first application identifier is one of application identifiers included in a first window (namely, the application recommendation panel). In response to the operation of dragging the first object to the first application identifier, when an application corresponding to the first application identifier is an application that can open the first object, the receive end may display a service menu corresponding to the application. In this application, the service menu corresponding to the application may also be referred to as a second window.

For example, the receive end is a mobile phone, the first object is a picture, the application recommendation panel includes an application identifier of an image processing application P, and the image processing application P includes services such as preview, filter, and mosaic. FIG. 12 is still another schematic diagram of the display interface of the mobile phone according to an embodiment of this application. As shown in FIG. 12, the application recommendation panel may include an application identifier 1201 of the image processing application P. When the user drags the picture to the application identifier 1201 of the image processing application P, the mobile phone may display a service menu 1202 of the image processing application P beside the application identifier 1201 of the image processing application P. The service menu 1202 may include service identifiers such as "preview", "filter", and "mosaic". The user may continue to perform the dragging operation on the picture, to drag the picture to any one of the service identifiers such as "preview", "filter", and "mosaic", and end the dragging operation on the picture. In response to dragging, by the user, the picture to the service identifier and ending the dragging operation on the picture, the mobile phone may open the picture by using the image processing application P, and start a service corresponding to the service identifier to process/operate the first object. For example, when the user drags the picture to "preview" and ends the dragging operation on the picture, the mobile phone may open the first object by using the image processing application P in response to dragging, by the user, the picture to "preview" and ending the dragging operation on the picture, and start a preview service of the image processing application P to preview the picture.

Optionally, in a possible implementation, the service identifier included in the service menu may be manually defined or preset. For example, the user or a service vendor of the receive end may pre-configure service identifiers included in a service menu corresponding to each application. To be specific, the service identifier included in the service menu is fixed.

In another possible implementation, the service menu may alternatively include service identifiers of all services corresponding to the application. For example, the first object is dragged to the application identifier of the image processing application P. It is assumed that the image processing application P includes N services (where N is an integer greater than 0). A service menu corresponding to the image processing application P may include service identifiers of the N services.

In still another possible implementation, the service identifier included in the service menu may alternatively be a service identifier of a service that is determined by the receive end based on the type of the first object and that can open the first object. For example, after receiving the first message, the receive end may determine the type of the first object based on the first object included in the first message, or the first message may include a separate field indicating the type of the first object, and the receive end may determine the type of the first object based on the field. When the user drags the first object to an application identifier in the application recommendation panel, the receive end may select, based on the type of the first object and from all services included in an application corresponding to the application identifier, services that can open the first object, and display, in a service menu, service identifiers of the services that open the first object.

It should be noted that, if the user drags the first object to a service identifier (for example, the first service identifier) of a service that cannot open the first object, the receive end may display second prompt information, where the second prompt information is used to give a prompt that the service corresponding to the service identifier cannot open the first object. For the second prompt information, refer to the first prompt information. For example, the receive end may display the second prompt information by changing a display status of the service identifier. Details are not described herein again.

In some embodiments, when the user drags the first object to the display interface of the receive end, the receive end may alternatively first determine whether the current display interface is an interface that supports dragging. When the current display interface of the receive end is an interface that does not support dragging, the receive end may display the application recommendation panel. When the current display interface of the receive end is an interface that supports dragging, the receive end may not display the application recommendation panel.

The interface that does not support dragging may include a system desktop (desktop for short), a system pop-up window, an application interface that does not support dragging, and the like. The interface that supports dragging may include an application interface that supports dragging. For example, the receive end is a mobile phone, and the application interface that supports dragging may be a chat interface of some chat applications installed on the mobile phone.

For example, an operating system of the receive end is an Android system. When the user drags the first object to the display interface of the receive end, if the current display interface of the receive end can respond to the dragging event, View.OnDragListener may be added to the current display interface for listening, and a return value (True) is returned. A framework (Framework) layer of the receive end may determine, based on the return value (True), whether the current display interface supports in responding to the dragging event. If the current display interface does not support in responding to the dragging event, it indicates that the current display interface is an interface that does not support dragging. If the current display interface supports in responding to the dragging event, it indicates that the current display interface is an interface that supports dragging.

In this embodiment, it may be considered that an original dragging purpose of the user is to enable some scenarios of interfaces that support dragging to better meet actual dragging requirements of the user. When the current display interface of the receive end is an interface that supports dragging, the receive end does not need to display the application recommendation panel, and the interface that supports dragging may directly respond to the dragging event of the first object. For example, when the interface that supports dragging is an application interface of an application, the application may perform creation/editing, viewing, attachment adding, sending, insertion, searching, jumping, and the like based on the first object in response to the dragging event of the first object.

In some embodiments, when the user drags the first object to the display interface of the receive end, if the receive end determines that the current display interface is an interface (for example, a mobile phone desktop) that does not support dragging, the receive end may further determine a user intention based on a further interaction action performed after the user drags the first object to the display interface of the receive end, and determine, based on the user intention, whether to display the application recommendation panel.

For example, in a possible implementation, the receive end may classify the user intention into two types: saving the first object, or searching for an application to open the first object. When the user drags the first object to the display interface of the receive end, if the receive end determines that the current display interface is an interface that does not support dragging, and the further interaction action performed after the user drags the first object to the display interface of the receive end is: directly ending the dragging operation on the first object (for example, releasing the mouse), the receive end may determine that the user intends to save the first object. In this case, the receive end may save the first object in response to directly ending, by the user, the dragging operation on the first object after dragging the first object to the display interface of the receive end, for example, save the first object to a default storage path. When the user drags the first object to the display interface of the receive end, if the receive end determines that the current display interface is an interface that does not support dragging, and the further interaction action performed after the user drags the first object to the display interface of the receive end is that the user does not end the dragging operation on the first object, and a dwell time period of a pointer (for example, a pointer of the mouse) on the display interface of the receive end reaches first duration (for example, 3 seconds or 5 seconds, where the first duration is not limited thereto), the receive end may determine that the user intends to search for an application to open the first object. For example, the first object may be a picture, and the user may want to search for an application in the receive end to preview the picture. In this case, the receive end may display the application recommendation panel in response to the trigger condition that the user does not end the dragging operation on the first object, and the dwell time period of the pointer on the display interface of the receive end reaches the first duration, so as to implement an objective of recommending an application to the user based on the intention of the user.

In some embodiments, directly ending the dragging operation on the first object may also mean that a time period from a time point at which the user drags the first object to the display interface of the receive end to a time point at which the user ends the dragging operation on the first object is less than the first duration.

For another example, in another possible implementation, the receive end may classify the user intention into the following two types: opening the first object in a default manner, or searching for an application to open the first object. When the user drags the first object to the display interface of the receive end, if the receive end determines that the current display interface is an interface that does not support dragging, and the further interaction action performed after the user drags the first object to the display interface of the receive end is: directly ending the dragging operation on the first object (for example, releasing the mouse), the receive end may determine that the user intends to open the first object in a default manner. In this case, the receive end may open the first object in the default manner in response to directly ending, by the user, the dragging operation on the first object after dragging the first object to the display interface of the receive end, for example, open the first object by using a default browser. Similarly, when the user drags the first object to the display interface of the receive end, if the receive end determines that the current display interface is an interface that does not support dragging, and the further interaction action performed after the user drags the first object to the display interface of the receive end is that the user does not end the dragging operation on the first object, and the dwell time period of the pointer on the display interface of the receive end reaches the first duration, the receive end may determine that the user intends to search for an application to open the first object, and the receive end may display the application recommendation panel. Details are not described again.

Optionally, in some other possible implementations, the trigger condition for displaying the application recommendation panel: "the user does not end the dragging operation on the first object, and the dwell time period of the pointer on the display interface of the receive end reaches the first duration" may be replaced with "the user does not end the dragging operation on the first object, and the dragging/sliding distance of the pointer on the display interface of the receive end is greater than the first threshold". For example, the first threshold may be 3 centimeters (cm), 5 cm, or the like. A value of the first threshold is not limited. That is, when the user drags the first object to the display interface of the receive end, if the receive end determines that the current display interface is an interface that does not support dragging, and the further interaction action performed after the user drags the first object to the display interface of the receive end is that the user does not end the dragging operation on the first object, and the dragging/sliding distance of the pointer on the display interface of the receive end is greater than the first threshold, the receive end may display the application recommendation panel.

Alternatively, in some other possible implementations, the foregoing two trigger conditions for displaying the application recommendation panel may be in a "and" relationship or an "or" relationship. When the foregoing two trigger conditions for displaying the application recommendation panel are in a "and" relationship, and the foregoing two trigger conditions for displaying the application recommendation panel occur at the same time, the receive end may display the application recommendation panel. When the foregoing two trigger conditions for displaying the application recommendation panel are in an "or" relationship, and either of the trigger conditions occurs, the receive end may display the application recommendation panel. The trigger condition for displaying the application recommendation panel by the receive end is not limited in this application.

In embodiments, the receive end may determine the user intention based on the further interaction action performed after the user drags the first object to the display interface of the receive end, and determine, based on the user intention, whether to display the application recommendation panel, so that the receive end can more accurately know a dragging purpose of the user, and provide a complete dragging interaction function for the user based on the dragging purpose of the user.

In embodiments of this application, when the current display interface of the receive end is an interface that does not support dragging, an operation of directly ending dragging an object after the user drags the object to the display interface of the receive end may be referred to as a third operation. The dragged object corresponding to the third operation may alternatively be referred to as a second object. The second object may include the first object.

Optionally, in some embodiments, when the user drags the first object to the display interface of the receive end, if the receive end determines that the current display interface is an interface (for example, an application interface of a third-party application) that supports dragging, the receive end may also determine the user intention based on the further interaction action performed after the user drags the first object to the display interface of the receive end, and determine, based on the user intention, whether to display the application recommendation panel.

For example, in a possible implementation, in a case in which the current display interface is an interface that supports dragging, the receive end may classify the user intention into the following two types: performing a subsequent operation on the first object by using a related function in the current display interface (that is, responding, by the receive end in the current display interface, to the dragging event of the first object), or searching for an application to open the first object. When the user drags the first object to the display interface of the receive end, if the receive end determines that the current display interface is an interface that supports dragging, and the further interaction action performed after the user drags the first object to the display interface of the receive end is: directly ending the dragging operation on the first object, the receive end may determine that the user intends to perform a subsequent operation on the first object by using the related function in the current display interface. In this case, the receive end may respond to the dragging event of the first object in response to directly ending the dragging operation on the first object after the user drags the first object to the display interface of the receive end, for example, perform creation/editing, viewing, attachment adding, sending, insertion, searching, and jumping based on the first object. When the user drags the first object to the display interface of the receive end, if the receive end determines that the current display interface is an interface that supports dragging, and the further interaction action performed after the user drags the first object to the display interface of the receive end is that the user does not end the dragging operation on the first object, and the dwell time period of the pointer on the display interface of the receive end reaches the first duration, and/or the user does not end the dragging operation on the first object, and the dragging/sliding distance of the pointer on the display interface of the receive end is greater than the first threshold, the receive end may determine that the user does not have a specific dragging destination, and the user intends to search for an application to open the first object. In this case, the receive end may display the application recommendation panel.

In some embodiments, when the user drags the first object to the display interface of the receive end, if the current display interface of the receive end is a desktop, the receive end may not display the application recommendation panel. When the user drags the first object to an application icon displayed on the desktop, if an application corresponding to the application icon is an application that can open the first object, in response to the operation of dragging the first object to the application icon (for example, a second application identifier) by the user, the receive end may give the user a prompt that the application corresponding to the application icon can open the first object (that is, dragging is supported). In this case, the user may end the dragging operation on the first object (for example, release the mouse). The receive end may open the first object by using the application corresponding to the application icon in response to ending the dragging operation on the first object by the user. If the application corresponding to the application icon is an application that cannot open the first object, in response to the operation of dragging the first object to the application icon (for example, a third application identifier) by the user, the receive end may give the user a prompt that the application corresponding to the application icon cannot open the first object (that is, dragging is not supported), and the user may continue to drag the first object to another application icon.

In a possible implementation, the receive end may change a display status of an application icon, to prompt the user whether an application corresponding to the application icon can open the first object.

For example, the receive end is a mobile phone. FIG. 13A is a schematic diagram of a desktop of the mobile phone according to an embodiment of this application. As shown in FIG. 13A, it is assumed that the desktop of the mobile phone includes an application icon of the application A and an application icon of the application B. The application A is an application that can open the first object, and the application B is an application that cannot open the first object. When the user drags the first object to the application icon of the application A, the mobile phone may change a display status of the application icon of the application A to an activatable state (where the activatable state may be indicated by a dashed line shown in FIG. 13A) in response to an operation of dragging the first object to the application icon of the application A by the user, to give the user a prompt that the application A can open the first object. Alternatively, the mobile phone may change the display status of the application icon of the application A in another manner (for example, brightening, or changing a display effect or a color), to give the user a prompt that the application A can open the first object. This is not limited herein. In this case, the user may end the dragging operation on the first object (for example, releasing the mouse), and the mobile phone may open the first object by using the application A in response to ending the dragging operation on the first object by the user.

FIG. 13B is another schematic diagram of a desktop of the mobile phone according to an embodiment of this application. As shown in FIG. 13B, when the user drags the first object to the application icon of the application B, the mobile phone may change, in response to the operation of dragging the first object to the application identifier of the application B by the user, a pattern of "B" in an originally displayed application icon of the application B to one "oblique line/slash" for display, so as to give the user a prompt that the application B cannot open the first object. Alternatively, the mobile phone may change a display status (for example, dimming or graying out) of the application icon of the application B in another manner, to give the user a prompt that the application B cannot open the first object. This is also not limited herein. The user may continue to drag the first object to another application icon.

In another possible implementation, the receive end may alternatively display a corner icon around (for example, at an upper left corner, a lower left corner, an upper right corner, and a lower right corner) a dragging shadow of the first object or a pointer (for example, a pointer of the mouse), to prompt the user whether an application corresponding to the application icon can open the first object.

For example, similarly, the receive end is a mobile phone. FIG. 14A is a schematic diagram of a desktop of the mobile phone according to an embodiment of this application. As shown in FIG. 14A, similarly, it is assumed that the desktop of the mobile phone includes the application icon of the application A and the application icon of the application B. The application A is an application that can open the first object, and the application B is an application that cannot open the first object. When the user drags the first object to the application icon of the application A, the mobile phone may display, in response to the operation of dragging the first object to the application icon of the application A by the user, a corner icon in a shape of a plus sign (+) 1401 at an upper left corner of a pointer (which may alternatively be an upper left corner of the first object), to give the user a prompt that the application A can open the first object. In this case, the user may end the dragging operation on the first object (for example, releasing the mouse), and the mobile phone may open the first object by using the application A in response to ending the dragging operation on the first object by the user.

FIG. 14B is still another schematic diagram of a desktop of the mobile phone according to an embodiment of this application. As shown in FIG. 14B, when the user drags the first object to the application icon of the application B, the mobile phone may display, in response to the operation of dragging the first object to the application icon of the application B by the user, a corner icon in a shape of a minus sign "-" 1402 at the upper left corner of the pointer (which may alternatively be the upper left corner of the first object), to give the user a prompt that the application B cannot open the first object. The user may continue to drag the first object to another application icon.

In another implementation, the foregoing corner icon used to give the user a prompt that the application A can open the first object and/or cannot be open the first object may alternatively be in another shape. This not limited herein.

It should be noted that the manner of prompting, by changing the display status of the application icon, the user whether the application can open the first object shown in FIG. 13A and FIG. 13B, and the manner of prompting, by adding a corner icon, the user whether the application can open the first object shown in FIG. 14A and FIG. 14B are all examples for description. In some other implementations, the receive end may alternatively give a prompt, in another manner (for example, a text prompt), that the application can open or cannot open the first object. This is not limited in this application. That the receive end gives a prompt that an application corresponding to an application icon cannot open the first object may also be considered as displaying first prompt information. For example, a first terminal device may display first prompt information in response to an operation of dragging a second object to a third application identifier, where the first prompt information is used to give a prompt that an application corresponding to the third application identifier does not support dragging of the first object. The first prompt information is display information shown in FIG. 13A and FIG. 13B and FIG. 14A and FIG. 14B.

In addition, it may be understood that FIG. 13A to FIG. 14B show only an application icon of one application that can open the first object and an application icon of one application that cannot open the first object. In some scenarios, the desktop of the receive end may further include application icons of more applications. When the user drags the first object to these application icons, for a specific response manner of the mobile phone, refer to FIG. 13A to FIG. 14B.

In some embodiments, the technical solution in which "when the user drags the first object to an application icon displayed on the desktop, if an application corresponding to the application icon is an application that can open the first object, the receive end changes a display status of the application icon or adds a corner icon, to give the user a prompt that the application corresponding to the application icon can open the first object" and "when the user drags the first object to an application icon displayed on the desktop, if an application corresponding to the application icon is an application that cannot open the first object, the receive end adds a corner icon, to give the user a prompt that the application corresponding to the application icon cannot open the first object", mentioned in the examples shown in FIG. 13A to FIG. 14B, may also be applicable to the application recommendation panel in the foregoing embodiments.

For example, when the user drags the first object to an application identifier displayed on the application recommendation panel, if an application corresponding to the application identifier is an application that can open the first object, the receive end may alternatively change a display status of the application identifier or add a corner icon, to give the user a prompt that the application corresponding to the application identifier can open the first object. For another example, when the user drags the first object to an application identifier displayed on the application recommendation panel, if an application corresponding to the application identifier is an application that cannot open the first object, the receive end may alternatively add a corner icon, to give the user a prompt that the application corresponding to the application identifier cannot open the first object.

For the foregoing embodiment in which when the user drags the first object to the display interface of the receive end, if the current display interface of the receive end is a desktop, the receive end does not display the application recommendation panel, in some possible scenarios, an objective of dragging the first object to the display interface of the receive end by the user may alternatively be to save the first object to the receive end or open the first object in the default manner. In this case, in some implementations, the user may drag the first object to a blank region (for example, a region without an application icon) on the desktop of the receive end, and end the dragging operation on the first object. The receive end may save the first object or open the first object in a default manner in response to dragging, by the user, the first object to the blank region on the desktop of the receive end and ending the dragging operation on the first object. For example, the first object may be stored in a default storage path. Alternatively, when the user drags the first object to an application icon corresponding to an application that cannot open the first object and ends the dragging operation on the first object, the receive end may alternatively save the first object or open the first object in the default manner in response to dragging, the user, the first object to the application icon corresponding to the application that cannot open the first object and ending the dragging operation on the first object.

In some other implementations, the receive end may alternatively determine a user intention based on a further interaction action performed after the user drags the first object to the desktop of the receive end. When the user drags the first object to the desktop of the receive end, if the further interaction action of the user is: directly ending the dragging operation on the first object (for example, releasing/releasing the mouse), the receive end may determine that the user intends to save the first object or open the first object in the default manner. In this case, the receive end may save the first object or open the first object in the default manner in response to directly ending, by the user, the dragging operation on the first object after dragging the first object to the desktop of the receive end, for example, save the first object to a default storage path. When the user drags the first object to the desktop of the receive end, if the further interaction action of the user is that the user does not end the dragging operation on the first object, and a dwell time period of the pointer (for example, the pointer of the mouse) on the desktop of the receive end reaches first duration, and/or the user does not end the dragging operation on the first object, and a dragging/sliding distance of the pointer on the desktop of the receive end is greater than a first threshold, the receive end may determine that the user intends to search for an application to open the first object. In this case, in the manner described in the foregoing embodiments in which the receive end does not display the application recommendation panel, the receive end may give, in response to the operation of dragging the first object to an application icon by the user, the user a prompt that an application corresponding to the application icon can open the first object (that is, dragging is supported), or give, in response to the operation of dragging the first object to an application icon by the user, the user a prompt that an application corresponding to the application icon cannot open the first object (that is, dragging is not supported).

Optionally, in this implementation, when the user drags the first object to the desktop of the receive end, if the receive end determines, in the foregoing manner, that the user intends to search for an application to open the first object, when the user drags the first object to an application icon corresponding to an application that cannot open the first object and ends the dragging operation on the first object, or when the user drags the first object to a blank region of the desktop and ends the dragging operation on the first object, in response to the foregoing operation, the receive end may change a shadow of the first object into a bubble-shaped floating window, for example, in a form of a floating ball or a bubble (or referred to as a dragging bubble), and absorb (move) the bubble-shaped floating window corresponding to the first object to an edge of the desktop for display. The bubble-shaped floating window corresponding to the first object may support the user to perform a dragging operation on the first object again. When the user re-taps and drags the bubble-shaped floating window corresponding to the first object, the receive end may change the bubble-shaped floating window corresponding to the first object to the shadow of the first object, so that the user can continue to drag the first object. The bubble-shaped floating window may be referred to as a first floating window. In some other embodiments, the first floating window may alternatively be in another shape. This is not limited.

For example, the bubble-shaped floating window corresponding to the first object is a dragging bubble and the receive end is a mobile phone. FIG. 15 is still another schematic diagram of a desktop of the mobile phone according to an embodiment of this application. As shown in FIG. 15, when the user drags the first object to the desktop of the mobile phone, if the mobile phone determines, in the foregoing manner, that the user intends to search for an application to open the first object, when the user drags the first object to the application icon of the application B (where, as described above, the application B is an application that cannot open the first object) and ends the dragging operation on the first object, or when the user drags the first object to a blank region of the desktop and ends the dragging operation on the first object, the mobile phone may change, in response to the foregoing operation, the shadow of the first object to a dragging bubble 1501, and absorb the dragging bubble 1501 to an edge of the desktop for display. When the user wants to perform a dragging operation on the first object, the user may perform a dragging operation on the dragging bubble 1501, and the mobile phone may change the dragging bubble 1501 to the shadow of the first object, so that the user continues to drag the first object. Optionally, representation patterns of the dragging bubble 1501 and the shadow of the first object may be the same, or may be different. This is not limited herein. It should be understood that, when the user performs the dragging operation on the dragging bubble 1501, a subsequent dragging process on the first object is the same as the dragging process on the first object in the foregoing embodiments. Details are not described again.

Optionally, for the foregoing embodiment in which when the user drags the first object to the display interface of the receive end, if the current display interface of the receive end is a desktop, the receive end does not display the application recommendation panel, in some possible scenarios, the desktop of the receive end may include a plurality of interfaces. For example, the desktop of the receive end may include one home screen and one or more other interfaces. Both the home screen and the other interfaces may include an application icon. For this scenario, in embodiments of this application, the receive end may further support the user in dragging the first object to perform sliding switching between the home screen and the other interfaces, so as to select an application that the user wants to use.

For example, the receive end is a mobile phone. FIG. 16 is still another schematic diagram of a desktop of the mobile phone according to an embodiment of this application. As shown in FIG. 16, the desktop of the mobile phone may include a home screen shown in (a) in FIG. 16 and another interface shown in (b) in FIG. 16. The home screen shown in (a) in FIG. 16 and the another interface shown in (b) in FIG. 16 may be switched and displayed on an interface. FIG. 17 is a schematic diagram of a scenario in which the mobile phone switches a display interface according to an embodiment of this application. As shown in FIG. 17, it is assumed that when the user drags the first object to the desktop of the mobile phone, the home screen shown in (a) in FIG. 16 is displayed on the interface of the mobile phone. In this case, if the user wants to search for, in the another interface shown in (b) in FIG. 16, an application icon of an application for opening the first object, the user may drag the first object to an edge of the home screen shown in (a) in FIG. 16. The mobile phone may switch/slide, in response to the operation of dragging, by the user, the first object to the edge of the home screen shown in (a) in FIG. 16, the display interface from the home screen shown in (a) in FIG. 16 to the another interface shown in (b) in FIG. 16. Therefore, the user may continue to drag the first object on the another interface shown in (b) in FIG. 16, to select an application that can open the first object.

For example, an operating system of the mobile phone is an Android system. When the user drags the first object to the edge of the home screen shown in (a) in FIG. 16, the mobile phone may transfer the drag-and-move event to a desktop launcher (launcher), and control the desktop to slide to a next interface in response to the drag-and-move event.

Optionally, in some other implementations, when the user wants to switch the desktop of the receive end to a next interface (for example, switch from the home screen to another interface), the user may first end the dragging operation on the first object, trigger the receive end to change the shadow of the first object to a bubble-shaped floating window, and absorb (move) the bubble-shaped floating window corresponding to the first object to the edge of the desktop for display. Then, the user may switch the display interface of the receive end from the home screen to the another interface by using a normal screen switching operation (for example, sliding a screen of the mobile phone). When the display interface of the receive end is switched from the home screen to the another interface, the bubble-shaped floating window corresponding to the first object is still adsorbed at the edge of the desktop (which is the another interface at this time) for display. The user may continue to perform a dragging operation on the first object based on the bubble-shaped floating window corresponding to the first object, to continue to drag the first object in the another interface, and select an application that can open the first object. A specific manner of triggering an operation of switching a display interface by the mobile phone is not limited in this application.

Optionally, for the foregoing embodiment in which when the user drags the first object to the display interface of the receive end, if the current display interface of the receive end is a desktop, the receive end does not display the application recommendation panel, in some other possible scenarios, the desktop of the receive end may alternatively include a folder, and the folder includes one or more application icons. For the scenario, in embodiments of this application, the receive end may further support the user in dragging the first object to an application icon included in the folder, so that the user selects, from the application icon included in the folder, an application that the user wants to use.

For example, the receive end is a mobile phone. FIG. 18A is still another schematic diagram of a desktop of the mobile phone according to an embodiment of this application. As shown in FIG. 18A, the desktop of the mobile phone may include the application icon of the application A, the application icon of the application B, and a "folder 1" 1801, and the "folder 1" 1801 may include the application icon of the application D, the application icon of the application E, and the application icon of the application F. FIG. 18B is a schematic diagram of a scenario in which the mobile phone opens the "folder 1" 1801 according to an embodiment of this application. As shown in FIG. 18B, it is assumed that when the user drags the first object to the desktop of the mobile phone shown in FIG. 18A, if the user wants to select an application corresponding to an application icon in the "folder 1" 1801 to open the first object, the user may drag the first object to the "folder 1" 1801 and enable the first object to hover over the "folder 1" 1801 for second duration (for example, 1 second), and in response to the operation of dragging, by the user, the first object to the "folder 1" 1801 and enabling the first object to hover over the "folder 1" 1801 for the second duration, the mobile phone may open the "folder 1" 1801 and display a display interface corresponding to the "folder 1" 1801. The display interface corresponding to the "folder 1" 1801 may include the application icon of the application D, the application icon of the application E, and the application icon of the application F. The user may continue to drag the first object, and select, based on any one of the application icon of the application D, the application icon of the application E, and the application icon of the application F, an application corresponding to the application icon to open the first object.

For example, the mobile phone may simulate a tap event injection system. When the user drags the first object to the folder 1 and enables the first object to hover over the folder 1 for the second duration, the tap event injection system may generate an event of tapping to open the "folder 1" 1801, and the event of tapping to open the "folder 1" 1801 may trigger the mobile phone to open the folder 1 and display the display interface corresponding to the folder 1.

Optionally, for the foregoing embodiment in which when the user drags the first object to the display interface of the receive end, if the current display interface of the receive end is a desktop, the receive end does not display the application recommendation panel, in some possible scenarios, the desktop of the receive end may alternatively include a large folder (for example, a first folder). Compared with the folder shown in FIG. 18A and FIG. 18B, the large folder may also include a plurality of application icons. However, for the plurality of application icons included in the large folder, at least N application icons may be directly displayed in the large folder in a manner similar to that on the desktop. For example, N may be 8, 9, or the like. When a quantity of application icons included in the large folder is greater than N, application icons (or remaining application icons) other than the N application icons may be folded into one collapse button in the large folder, and the collapse button is displayed at the end of the large folder. When the user wants to view the application icons other than the N application icons, the user may tap the collapse button. The receive end may display all application icons of the large folder in response to the operation of tapping the collapse button by the user. For the foregoing scenario of the large folder, in embodiments of this application, the receive end may further support the user in dragging the first object to an application icon included in the large folder, so that the user selects, from the application icons included in the large folder, an application that the user wants to use. The application icon included in the large folder may alternatively be referred to as a second application identifier.

For example, similarly, the receive end is a mobile phone. FIG. 19A is still another schematic diagram of a desktop of the mobile phone according to an embodiment of this application. As shown in FIG. 19A, the desktop of the mobile phone may include a "folder 1" 1901, and the "folder 1" 1901 is presented in a form of a large folder. The "folder 1" 1901 includes application icons of applications such as the application A, the application B, the application C, ..., and the application I. Application icons of the application A to the application H may be directly displayed in the "folder 1" 1901, and application icons of the application I and other applications after the application I are displayed as a collapse button 1902 in a collapsing manner at the end of the "folder 1" 1901. It is assumed that after the user drags the first object to the desktop of the mobile phone shown in FIG. 19A, if the user wants to select an application from the application A to the application H to open the first object, the user may directly drag the first object to an application icon of the application displayed in the "folder 1" 1901. The mobile phone may open the first object by using the application in response to the operation of dragging the first object to the application icon of the application.

FIG. 19B is a schematic diagram of a scenario in which the mobile phone is triggered to display all application icons of the "folder 1" 1901 according to an embodiment of this application. As shown in FIG. 19B, if the user wants to select an application from the application I and other applications after the application I to open the first object, the user may first drag the first object to the collapse button 1902 and enable the first object to hover over the collapse button 1902 for second duration (for example, 1 second), and the mobile phone may display all the application icons of the "folder 1" 1901 in response to the operation of dragging, by the user, the first object to the collapse button 1902 and enabling the first object to hover over the collapse button 1902 for the second duration. Then, the user may continue to drag the first object to an application icon of an application from the application I and the other applications after the application I to open the first object, or may drag the first object to an application icon of an application from the application A to the application H to open the first object. For example, in FIG. 19B, all the application icons of the "folder 1" 1901 include application icons of the application A to the application L.

In some embodiments, the user may alternatively tap the collapse button 1902 in a multi-finger touch manner, to trigger the mobile phone to display all the application icons of the "folder 1" 1901. For example, it is assumed that the user drags the first object to the display interface of the receive end by using a finger. The user may tap the collapse button 1902 by using another finger, and the mobile phone may display all the application icons of the "folder 1" 1901 in response to the operation of tapping the collapse button 1902 by the user.

Optionally, when all the application icons of the "folder 1" 1901 cannot be presented on one page, the application icons may alternatively be displayed in a scrolling/sliding manner with reference to the manner described in the foregoing embodiments. Details are not described herein again.

Optionally, for the foregoing embodiments in which when the user drags the first object to the display interface of the receive end, if the current display interface of the receive end is a desktop, the receive end does not display the application recommendation panel, when the user drags the first object to an application icon (which may be an application icon on the desktop, or may be an application icon in a folder or a large folder) by performing the dragging operation on the first object, if an application corresponding to the application icon can open the first object, and may include a plurality of services (or referred to as functions), the receive end may alternatively display (pop up) a service menu (or referred to as a function menu) of the application corresponding to the application icon beside the application icon, where the service menu may include an service identifier of one or more services included in the application corresponding to the application icon. The user may continue to perform the foregoing dragging operation on the first object, to drag the first object to a service identifier displayed in the service menu. In response to dragging, by the user, the first object to the service identifier displayed in the service menu, the receive end may open the first object by using the application corresponding to the application identifier, and starts a service corresponding to the service identifier to process/operate the first object. For example, a display manner of the service menu may be similar to that shown in FIG. 12. A difference lies in that in this embodiment, the service menu is displayed on the desktop. When the user drags the first object to an application icon by performing the dragging operation on the first object, if an application corresponding to the application icon cannot open the first object, first prompt information may alternatively be displayed to prompt the user in the manner described in the foregoing embodiments. For the foregoing embodiments in which when the user drags the first object to the display interface of the receive end, if the current display interface of the receive end is a desktop, the receive end does not display the application recommendation panel, when the user drags the first object to an application icon by performing the dragging operation on the first object, a service menu corresponding to the application icon displayed by the receive end may be referred to as a third window. For example, the receive end may receive an operation of dragging the first object to the second application identifier, and display the third window in response to the operation of dragging the first object to the second application identifier, where the third window includes a service identifier of one or more services included in an application corresponding to the second application identifier.

Optionally, that the receive end opens, in response to an operation of dragging the first object to an application identifier (application icon) by the user, the first object by using an application corresponding to the application identifier, or displays a service menu of an application corresponding to the application identifier as described in the foregoing embodiments may be as follows: When the user drags the first object to an application identifier (application icon), and dwell duration is longer than third duration, in response to the operation of dragging the first object to the application identifier (application icon) by the user, the receive end opens the first object by using an application corresponding to the application identifier, or displays a service menu of an application corresponding to the application identifier. For example, the third duration may be 2 seconds, 3 seconds, or the like.

Similarly, that the receive end opens, in response to an operation of dragging the first object to a service identifier by the user, the first object by using a service corresponding to the service identifier as described in the foregoing embodiments may mean that when the user drags the first object to a service identifier, and dwell duration is longer than the third duration, the receive end opens, in response to the operation of dragging the first object to the service identifier by the user, the first object by using a service corresponding to the service identifier.

Optionally, the foregoing embodiments separately describe a case in which the application recommendation panel is displayed and a case in which the application recommendation panel is not displayed. In some other embodiments, when the user drags the first object to the display interface of the receive end, the receive end may further determine, based on a location of a shadow of the first object or a pointer (namely, a location to which the first object is dragged), to display the application recommendation panel or display a service menu. For example, when the current location to which the first object is dragged is a blank region (that is, the pointer is kept on the blank region), the receive end may display the application recommendation panel. When the current location to which the first object is dragged is an application icon (that is, the pointer is kept on the application icon), the receive end may display a service menu of an application corresponding to the application icon.

In some embodiments, when the user drags the first object to the display interface of the receive end, the display interface of the receive end may alternatively include a widget corresponding to an application. The widget, also referred to as an FA widget, is a region that directly appears on the desktop of the mobile phone and has specific functions. These functions can be provided by an application corresponding to the widget. The user may drag the first object to a widget, and open the first object by using an application corresponding to the widget, or drag the first object to a service corresponding to the widget, and open the first object by using the service. The service corresponding to the widget is a service that can be provided by an application corresponding to the widget.

For example, the display interface of the mobile phone includes a widget corresponding to a gallery. FIG. 19C is still another schematic diagram of the display interface of the mobile phone according to an embodiment of this application. As shown in FIG. 19C, the display interface of the mobile phone may include the widget corresponding to the gallery. After dragging the first object to the display interface of the mobile phone shown in FIG. 19C, the user may continue to drag the first object to the widget corresponding to the gallery. The mobile phone may open, in response to the operation of dragging the first object to the widget corresponding to the gallery, the first object by using the gallery. Alternatively, still refer to FIG. 19C. The widget corresponding to the gallery may further include service identifiers (such as a pattern and a text in the figure) of services such as "story creation", "free creation", and "collage creation". The user may alternatively drag the first object to any service identifier corresponding to the services such as "story creation", "free creation", and "collage creation". The mobile phone may open, in response to the operation of dragging the first object to the service identifier, the first object by using a service corresponding to the service identifier. For example, the user may drag a picture to "collage creation", and the mobile phone may start a "collage creation" service of the gallery to open the picture for the user to perform collage creation.

When the user drags the first object to a widget or a service identifier in a widget by performing the dragging operation on the first object, if an application corresponding to the widget or a service corresponding to the service identifier cannot open the first object, prompt information, for example, second prompt information, may also be displayed to prompt the user in the manner described in the foregoing embodiments. Alternatively, the second prompt information may also be referred to as first prompt information. This is not limited. The service identifier in the widget may be referred to as a second service identifier.

One or more of the application icon, the folder, the large folder, the widget, and the like in the foregoing embodiments may also be simultaneously displayed on the display interface of the mobile phone. This is not limited herein.

Optionally, in some other embodiments, when the user drags the first object to the display interface of the receive end, regardless of whether the current display interface of the receive end is a desktop, the receive end may display the application recommendation panel, but the user may actively close the application recommendation panel.

For example, the receive end is a mobile phone. FIG. 20 is still another schematic diagram of a display interface of the mobile phone according to an embodiment of this application. As shown in FIG. 20, when the user drags the first object to the display interface of the receive end, the receive end may display the application recommendation panel. The application recommendation panel may include a close button 2001. The user may drag the first object to the close button 2001, and keep the first object on the close button 2001 for preset duration (for example, fifth duration). The mobile phone may close the application recommendation panel in response to the operation of dragging, by the user, the first object to the close button 2001 and keeping the first object on the close button 2001 for the preset duration. For example, the mobile phone may simulate an event of tapping the close button 2001 in response to the operation of dragging, by the user, the first object to the close button 2001 and keeping the first object on the close button 2001 for the preset duration, and the event of tapping the close button 2001 may trigger the mobile phone to close the application recommendation panel. For example, if the display interface of the mobile phone is currently a desktop, after the mobile phone closes the application recommendation panel, the display interface is restored to the desktop. The user may drag the first object to an application icon on the desktop in the manner described in the foregoing embodiments.

In some embodiments, when the user drags the first object to the display interface of the receive end, the user may alternatively tap the close button 2001 in a multi-finger touch manner, to trigger the mobile phone to close the application recommendation panel. For example, it is assumed that the user drags the first object to the display interface of the receive end by using a finger. The user may tap the close button 2001 by using another finger, and the mobile phone may close the application recommendation panel in response to the operation of tapping the close button 2001 by the user.

In some other embodiments, when dragging the first object to the display interface of the receive end, the user may alternatively first end the dragging operation on the first object, to trigger the mobile phone to change the shadow of the first object to a bubble-shaped floating window, and absorb (move) the bubble-shaped floating window corresponding to the first object to an edge of the desktop for display. Then, the user may tap the close button 2001 by using a mouse or a finger. After the display interface is restored to the desktop, the user may continue to perform a dragging operation on the first object based on the bubble-shaped floating window corresponding to the first object, and drag the first object to an application icon displayed on the desktop in the manner described in the foregoing embodiments. Details are not described herein again.

Optionally, in embodiments, when the application recommendation panel is not displayed in full screen, the user may further tap a region outside a region in which the application recommendation panel is located on the display interface, or drag the first object to a region outside the region in which the application recommendation panel is located, and keep, for preset duration (for example, the fifth duration), the first object on the region outside the region in which the application recommendation panel is located, to trigger the receive end to close the application recommendation panel. An operation manner of closing the application recommendation panel is not limited in this application.

The operation of closing the application recommendation panel is an operation of closing a first window. The receive end may close the first window in response to any one of the foregoing operations of closing the first window. After the receive end closes the first window in response to the operation of closing the first window, the user may perform an operation of dragging the first object to a second application identifier, where the second application identifier is one of application identifiers included on the desktop. In response to the operation of dragging the first object to the second application identifier, when an application corresponding to the second application identifier is an application that supports dragging of the first object, the receive end may start the application corresponding to the second application identifier, and transfer the first object to the application corresponding to the second application identifier; or display a third window (namely, a service menu of an application corresponding to a desktop icon), where the third window includes a service identifier of one or more services included in the application corresponding to the second application identifier. Alternatively, the receive end may display first prompt information when the application corresponding to the second application identifier is an application that does not support dragging of the first object, where the first prompt information is used to give a prompt that the application corresponding to the second application identifier does not support dragging of the first object. For details, refer to the foregoing related embodiments of dragging the first object to the desktop icon. Details are not described herein again.

In some other possible scenarios, when the user drags the first object, a dragging behavior may be interrupted. A factor that causes interruption of the dragging behavior may be active interruption of the user, or passive interruption. For example, the display interface (or the application recommendation panel) of the receive end may include an interruption region, and the user may drag the first object to the interruption region and end the dragging operation on the first object, to actively interrupt the dragging behavior. Alternatively, that the user drags the first object to an application icon corresponding to an application that cannot open the first object and ends the dragging operation on the first object, or that the user drags the first object to the blank region on the desktop and ends the dragging operation on the first object, as described in the foregoing embodiments, may also be considered as that the user actively interrupts the dragging behavior. For another example, when the receive end receives a call or some notifications, or when the receive end pops up some system pop-up windows, the dragging behavior may be interrupted. Such an interruption scenario may be considered as passive interruption.

For the case in which the dragging behavior of the user is interrupted in the process of dragging the first object, in embodiments of this application, when the dragging behavior is interrupted, the receive end may change the shadow of the first object to a bubble-shaped floating window, for example, in a form of a floating ball or a bubble (or referred to as a dragging bubble), and absorb (move) the bubble-shaped floating window corresponding to the first object to an edge of the desktop for display. The bubble-shaped floating window corresponding to the first object may support the user to perform a dragging operation on the first object again. When the user re-taps and drags the bubble-shaped floating window corresponding to the first object, the receive end may change the bubble-shaped floating window corresponding to the first object to the shadow of the first object, so that the user can continue to drag the first object. For example, for the bubble-shaped floating window corresponding to the first object, refer to the descriptions of FIG. 15, and no accompanying drawing is used for representation herein.

It should be noted that, for the foregoing embodiments of displaying the application recommendation panel, when the user re-taps and drags the bubble-shaped floating window corresponding to the first object, the receive end may display the application recommendation panel again. For the foregoing embodiments in which the application recommendation panel is not displayed, when the user re-taps and drags the bubble-shaped floating window corresponding to the first object, the receive end may not display the application recommendation panel. In other words, a response action of the receive end performed when the user re-taps and drags the bubble-shaped floating window corresponding to the first object may be consistent with a response action of the receive end performed when the first object is dragged to the display interface of the receive end for the first time. In this application, the bubble-shaped floating window may be the first floating window in the foregoing embodiments, and a location at which the first floating window is displayed may be referred to as a first location. For example, the first location may be an edge of the desktop.

Optionally, in some other embodiments of this application, when the receive end displays the application recommendation panel, the application recommendation panel may not only include an application identifier, but also include service identifiers of services corresponding to some or all applications. Similar to the application identifier, the service identifiers may be manually defined or preset, or may be determined by the receive end based on a type of the first object. This is not limited herein. Alternatively, the receive end may display only a service recommendation panel (not display the application recommendation panel), and the service recommendation panel may include service identifiers of services corresponding to some applications, but does not include application identifiers. In other words, the first window may include an application identifier corresponding to one or more applications and/or a service identifier corresponding to one or more services.

It should be further noted that, the application for opening the first object in the foregoing embodiments is not limited to an application that can display specific content of the first object by starting an application interface. In some possible scenarios, the application for opening the first object may further include: an application that can perform an operation on the first object and obtain related information included in the first object, an application that can add the first object to favorites, and the like. For example, the first object may be a two-dimensional code picture, and an application for opening the first object may include: a gallery application that can display the two-dimensional code picture, a code scanning application (such as a camera) that can scan the two-dimensional code picture to obtain information included in two-dimensional code, and a favorites application (such as a memo or a favorites folder) that can add the two-dimensional code picture to favorites. It should be understood that a definition of "the application that can open the first object" is not limited to the several explanations provided in the foregoing examples, and an application that can open the first object is not limited in this application. The foregoing application that can open the first object may be referred to as an application that supports dragging of the first object. Correspondingly, an application that cannot open the first object may be referred to as an application that does not support dragging of the first object.

Optionally, in some embodiments of this application, when the user drags the first object on the display interface of the source end, the source end may give the user a prompt that the first object can be dragged across devices. For example, when the source end detects that the user starts to drag the first object on the display interface (for example, a second interface) of the source end, the source end may display a user interface (user interface, UI) animation effect, for example, a second UI animation effect, to give the user the prompt that the first object can be dragged across devices. The operation of dragging the first object on the second interface may be referred to as a second operation, and a display location of the UI animation effect is related to an orientation of the receive end relative to the source end. For example, the display location of the UI animation effect may be at a screen edge of the source end, and the screen edge is a side that is of the receive end and that is connected to the source end. For example, a screen of the source end may be divided into an upper side screen edge, a lower side screen edge, a left side screen edge, and a right side screen edge. When the side that is of the receive end and that is connected to the source end is a right side of the source end, the display location of the UI animation effect may be the right side screen edge of the source end. In a process in which the user drags the first object from the display interface of the source end to the display interface of the receive end, a location of a dragging shadow of the first object on the display interface of the source end gradually approaches the foregoing UI animation effect, or in other words, gradually approaches a screen edge at which the UI animation effect is located. As the location of the dragging shadow of the first object on the display interface of the source end gradually approaches the screen edge at which the UI animation effect is located, the source end may gradually enhance a display effect of the UI animation effect, for example, may enlarge a display range of the UI animation effect. When the first object is dragged to a display region of the UI animation effect (that is, when the dragging shadow of the first object enters the display region of the UI animation effect), the source end may perform highlighting or color enhancement on a UI animation effect of a region related to the location of the dragging shadow of the first object. A color for color enhancement of the UI animation effect may be related to a color of the first object or a color of the display interface of the source end. For example, the color for color enhancement of the UI animation effect may be the same as the color of the first object, or when the display interface of the source end i s a desktop, the color for color enhancement of the UI animation effect may be the same as or similar to a color of a desktop wallpaper.

For example, similarly, a source end is a PC, a receive end is a mobile phone, and an input device of the PC is a mouse. FIG. 21 is a schematic diagram of displaying a UI animation effect by the PC according to an embodiment of this application. As shown in FIG. 21, a display interface 2101 of the PC may include a first object 2102 and a pointer (a small arrow in the figure, not marked) of the mouse. A user may move the pointer of the mouse to the first object 2102, and click and hold a left button of the mouse and move the mouse, so that the first object 2102 may be dragged. When the PC detects that the user starts to drag the first object 2102, the PC may display a UI animation effect 2103, and the UI animation effect 2103 may be used to give the user a prompt that the first object 2102 can be dragged across devices.

A display location of the UI animation effect 2103 is related to an orientation of the mobile phone relative to the PC. For example, when the mobile phone is located on a right side of the PC, the display location of the UI animation effect 2103 may be at a right side screen edge of the PC.

FIG. 22 is another schematic diagram of displaying a UI animation effect by the PC according to an embodiment of this application. As shown in FIG. 22, in a process in which the user drags the first object 2102 from the display interface of the PC to a display interface of the mobile phone, a location of a dragging shadow of the first object 2102 on the display interface of the PC gradually approaches a screen edge at which the UI animation effect 2103 is located. As the location of the dragging shadow of the first object 2102 on the display interface of the PC gradually approaches the screen edge at which the UI animation effect 2103 is located, the PC may gradually enlarge a display range of the UI animation effect 2103.

In an implementation, that the PC gradually enlarges the display range of the UI animation effect 2103 may include: The PC synchronously enlarges an entire region of the UI animation effect 2103, that is, enlarges the entire region of the UI animation effect 2103 to a same extent, for example, increases a same width.

In another implementation, when the PC enlarges the display range of the UI animation effect 2103, a region in which the display range of the UI animation effect 2103 is enlarged may be related to a location of the dragging shadow of the first object 2102 in the display interface of the PC. For example, the PC may enlarge only a part that is of the region and that is in the UI animation effect 2103 and close to the location of the dragging shadow of the first object 2102 on the display interface of the PC, for example, enlarge 30% of the region of the UI animation effect 2103, where the 30% of the region is close to the location of the dragging shadow of the first object 2102 on the display interface of the PC. For another example, the PC may enlarge the entire region of the UI animation effect 2103, but a part that is of the region and that is of the UI animation effect 2103 and close to the location of the dragging shadow of the first object 2102 on the display interface of the PC is enlarged to a greater extent.

Compared with the implementation in which the PC synchronously enlarges all the regions of the UI animation effect 2103, a region in which the display range of the UI animation effect 2103 is enlarged is related to the location of the dragging shadow of the first object 2102 on the display interface of the PC, and an effect that the display range is attracted and magnified as the dragging shadow of the first object 2102 approaches may be presented. A specific implementation in which the PC enlarges the display range of the UI animation effect 2103 is not limited in this application.

Optionally, when the location of the dragging shadow of the first object 2102 on the display interface of the PC touches the display region of the UI animation effect 2103, or the location of the dragging shadow of the first object 2102 on the display interface of the PC completely enters the display region of the UI animation effect 2103, the PC may no longer enlarge the display range of the UI animation effect 2103. Alternatively, a maximum display range of the UI animation effect 2103 may be preset in the PC. When the display range of the UI animation effect 2103 reaches the maximum display range, the PC no longer enlarges the display range of the UI animation effect 2103.

FIG. 23 is still another schematic diagram of displaying a UI animation effect by the PC according to an embodiment of this application. As shown in FIG. 23, when the first object 2102 is dragged to the display region of the UI animation effect 2103, the PC may further perform highlighting or color enhancement on the UI animation effect 2103 in a region related to the location of the dragging shadow of the first object 2102. In FIG. 23, a region filled with oblique lines represents a highlighting or color enhancement effect.

A color for color enhancement of the UI animation effect 2103 may be related to a color of the first object 2102 or a color of the display interface of the PC. For example, the color for color enhancement of the UI animation effect 2103 may be the same as the color of the first object 2102, or when the display interface of the PC is a desktop, the color for color enhancement of the UI animation effect 2103 may be similar to a color of a desktop wallpaper, for example, a color in a dominant color of the desktop wallpaper is selected. The color for color enhancement of the UI animation effect 2103 is not limited in this application. For example, the color for color enhancement of the UI animation effect 2103 may alternatively be a default color.

In an implementation, a region in which highlighting or color enhancement is performed on the UI animation effect 2103 may be the same as a region occupied by the dragging shadow of the first object 2102 in the display region of the UI animation effect 2103 (where this is used as an example in FIG. 23).

In another implementation, the region in which highlighting or color enhancement is performed on the UI animation effect 2103 may alternatively be greater than the region occupied by the dragging shadow of the first object 2102 in the display region of the UI animation effect 2103.

In still another implementation, the region in which highlighting or color enhancement is performed on the UI animation effect 2103 may alternatively be of a fixed size, and is irrelevant to the region occupied by the dragging shadow of the first object 2102 in the display region of the UI animation effect 2103. The region in which highlighting or color enhancement is performed on the UI animation effect 2103 is also not limited in this application.

Optionally, when the PC displays a UI animation effect on a screen edge on a side (for example, the right side screen edge), the UI animation effect may be kept at a specific distance from adjacent screen edges (for example, an upper side screen edge and a lower side screen edge). For example, a region occupied by the UI animation effect on the right side screen edge may be the middle 80% of the entire right side screen edge, and a distance between the region and the upper side screen edge and a distance between the region and the lower side screen edge each are 10% of the right side screen edge.

It should be noted that although display effects of the UI animation effect are shown in FIG. 21 to FIG. 23 by using a wave shape, in some other examples, the UI animation effect may be presented as a rectangle, or another regular or irregular shape. The shape of the UI animation effect is also not limited in this application.

In the foregoing embodiments, an example in which the source end is a PC and the receive end is a mobile phone is used to illustrate that the source end gives, by using the UI animation effect, the user a prompt that the first object can be dragged across devices, and describe a change of the UI animation effect in a process in which the first object moves on the display interface of the source end. Optionally, in some embodiments, when the first object is dragged out of a screen edge of the source end, a screen edge of the receive end may also display the UI animation effect, to reflect a traversal effect of the first object. In this application, the UI animation effect displayed on the screen edge of the receive end may be referred to as a first UI animation effect, and the UI animation effect displayed on the screen edge of the source end may be referred to as a second UI animation effect. The first UI animation effect may be used to give the user a prompt that the first object is dragged into a display interface (for example, a first interface) of the receive end.

For example, FIG. 24 is a schematic diagram of displaying a UI animation effect by the mobile phone according to an embodiment of this application. As shown in FIG. 24, when the first object 2102 is dragged out of a screen edge of the PC, a UI animation effect 2401 may be displayed at a screen edge of the mobile phone. It may be understood that the screen edge at which the mobile phone displays the UI animation effect 2401 is opposite to a screen edge at which the PC displays the UI animation effect 2103. For example, if the PC displays the UI animation effect 2103 at a right side screen edge, the mobile phone displays the UI animation effect 2401 at a left side screen edge.

The UI animation effect 2401 displayed by the mobile phone and the UI animation effect 2103 displayed by the PC may be the same (for example, both are in a wave shape), or may be different. The following uses an example in which the UI animation effect 2401 displayed by the mobile phone is also in a wave shape. In another example, the UI animation effect 2401 displayed by the mobile phone may also be in a rectangle, or another regular or irregular shape.

Optionally, a region in which the mobile phone displays the UI animation effect 2401 is related to a location that is on a display interface of the mobile phone and to which the pointer of the mouse or the dragging shadow of the first object 2102 is dragged. For example, the mobile phone may display the UI animation effect 2401 within a specific range (for example, a preset distance range) above and below a location (namely, a location that appears at a screen edge of the mobile phone) that is on the display interface of the mobile phone and to which the dragging shadow of the first object 2102 is dragged. The location that is on the display interface of the mobile phone and to which the dragging shadow of the first object 2102 is dragged may be determined based on a location at which the dragging shadow of the first object 2102 is dragged out of the display interface of the PC. For example, a distance between the location at which the dragging shadow of the first object 2102 is dragged out of the display interface of the PC and an upper side (top) screen edge of the PC is 30% of a distance between an upper side screen and a lower side screen. In this case, a distance between the location that is on the display interface of the mobile phone and to which the dragging shadow of the first object 2102 is dragged and an upper side (top) screen edge of the mobile phone may also be 30% of a distance between an upper side screen and a lower side screen. Alternatively, the location that is on the display interface of the mobile phone and to which the dragging shadow of the first object 2102 is dragged maybe a relative receiving location in physical space. This is not limited herein.

FIG. 25 is another schematic diagram of displaying a UI animation effect by the mobile phone according to an embodiment of this application. As shown in FIG. 25, when the user continues to drag the first object 2102 on the display interface of the mobile phone, the location of the dragging shadow of the first object 2102 on the display interface of the mobile phone gradually moves away from a screen edge at which the UI animation effect 2401 is located. As the location of the dragging shadow of the first object 2102 on the display interface of the mobile phone gradually moves away from the screen edge at which the UI animation effect 2401 is located, the mobile phone may gradually enlarge a display range of the UI animation effect 2401.

A specific manner of gradually enlarging the display range of the UI animation effect 2401 by the mobile phone is similar to that of enlarging the display range of the UI animation effect 2103 by the PC, and all regions of the UI animation effect 2401 may be synchronously enlarged, or a region in which the display range of the UI animation effect 2401 is enlarged may be related to the location of the dragging shadow of the first object 2102 on the display interface of the mobile phone.

Optionally, when the location of the dragging shadow of the first object 2102 on the display interface of the mobile phone is not in an initial display region of the UI animation effect 2401 (namely, a display region of the UI animation effect 2401 displayed when the first object 2102 is just dragged into the display interface of the mobile phone), the mobile phone may no longer enlarge the display range of the UI animation effect 2401. Alternatively, a maximum display range of the UI animation effect 2401 may be preset in the mobile phone. When the display range of the UI animation effect 2401 reaches the maximum display range, the mobile phone no longer enlarges the display range of the UI animation effect 2401.

In some other implementations, as the location of the dragging shadow of the first object 2102 on the display interface of the mobile phone gradually moves away from the screen edge at which the UI animation effect 2401 is located, the mobile phone may not enlarge the display range of the UI animation effect 2401. That is, the display range of the UI animation effect 2401 may remain unchanged.

Still refer to FIG. 25. In a process in which the first object 2102 is dragged to a location at which the dragging shadow of the first object 2102 is far away from the screen edge, the mobile phone may further perform highlighting or color enhancement on the UI animation effect 2401 in a region related to the location at which the dragging shadow of the first object 2102 is located. In FIG. 25, a region filled with oblique lines represents a highlighting or color enhancement effect.

A color for color enhancement of the UI animation effect 2401 may be related to a color of the first object 2102 or a color of the display interface of the mobile phone. For example, the color for color enhancement of the UI animation effect 2401 may be the same as the color of the first object 2102, or when the display interface of the mobile phone is a desktop, the color for color enhancement of the UI animation effect 2401 may be similar to a color of a desktop wallpaper, for example, a color in a dominant color of the desktop wallpaper is selected. The color for color enhancement of the UI animation effect 2401 is not limited in this application. For example, the color for color enhancement of the UI animation effect 2401 may alternatively be a default color.

In an implementation, that the color for color enhancement of the UI animation effect 2401 is related to the color of the first object 2102 or the color of the display interface of the mobile phone may include: The region in which highlighting or color enhancement is performed on the UI animation effect 2401 is the same as a region occupied by the dragging shadow of the first object 2102 in the display region of the UI animation effect 2401 (this is used as an example in FIG. 25).

In another implementation, that the color for color enhancement of the UI animation effect 2401 is related to the color of the first object 2102 or the color of the display interface of the mobile phone may alternatively include: The region in which highlighting or color enhancement is performed on the UI animation effect 2401 is larger than the region occupied by the dragging shadow of the first object 2102 in the display region of the UI animation effect 2401.

In still another implementation, the region in which highlighting or color enhancement is performed on the UI animation effect 2401 may alternatively be of a fixed size, and is irrelevant to the region occupied by the dragging shadow of the first object 2102 in the display region of the UI animation effect 2401. The region in which highlighting or color enhancement is performed on the UI animation effect 2401 is also not limited in this application.

FIG. 26A to FIG. 26D are still another schematic diagram of displaying a UI animation effect by the mobile phone according to an embodiment of this application. As shown in FIG. 26A to FIG. 26D, in a process in which the user continues to drag the first object 2102 on the display interface of the mobile phone, so that the dragging shadow of the first object 2102 moves far away from the screen edge, the mobile phone may further display a tailing effect 2601 of the first object 2102. In other words, in a process in which the first object 2102 is dragged to a location at which the dragging shadow of the first object 2102 is far away from the edge of the screen, the mobile phone may display a tailing effect of the first object 2102.

In some possible examples, the tailing effect 2601 may be presented in a high luminance projection display manner.

A display region of the tailing effect 2601 may be greater than, less than, or equal to the display region of the dragging shadow of the first object 2102. The display region of the tailing effect 2601 may move along with the dragging shadow of the first object 2102. In a process in which the display region of the tailing effect 2601 moves along with the dragging shadow of the first object 2102, the tailing effect 2601 may gradually become smaller or remain unchanged, and the tailing effect 2601 may gradually become unclear until it disappears. For example, when the dragging shadow of the first object 2102 moves beyond a preset distance (for example, 5 cm or 6 cm), the tailing effect 2601 may disappear, that is, the mobile phone does not display the tailing effect.

FIG. 27 is still another schematic diagram of displaying a UI animation effect by the mobile phone according to an embodiment of this application. As shown in FIG. 27, after the user ends the dragging operation on the first object 2102, the mobile phone may no longer display the UI animation effect 2401 in response to ending the dragging operation on the first object 2102 by the user. That is, after the user releases the first object 2102, the UI animation effect 2401 at the screen edge of the mobile phone may disappear.

It should be noted that names of the UI animation effect (including the UI animation effects 2103 displayed by the PC and the UI animation effects 2401 displayed by the mobile phone) and the tailing effect in the foregoing embodiments are all examples for description. In some other embodiments, the UI animation effect may alternatively be referred to as a UI traversal animation effect, a traversal animation effect, a traversal light effect, or the like, and the tailing effect may alternatively be referred to as a tailing animation effect, high luminance projection, or the like. The names of the UI animation effect and the tailing effect are not limited in this application.

It should be understood that the foregoing embodiments are merely examples of the cross-device dragging method according to embodiments of this application. In some other possible implementations, some execution steps may be deleted or added in the foregoing embodiments, or a sequence of some steps in the foregoing embodiments may be adjusted. This is not limited in this application.

Corresponding to the cross-device dragging method in the foregoing embodiments, an embodiment of this application provides a cross-device dragging apparatus. The apparatus may be used in the foregoing receive end, and is configured to implement steps performed by the receive end in the cross-device dragging method in the foregoing embodiments. For example, the receive end may be a first terminal device. A function of the apparatus may be implemented by hardware, or may be implemented by executing corresponding software by hardware. The hardware or software includes one or more modules or units corresponding to the steps performed by the receive end in the foregoing cross-device dragging method. For example, FIG. 28 is a schematic diagram of a structure of a cross-device dragging apparatus according to an embodiment of this application. As shown in FIG. 28, the apparatus may include a display unit 2801, a receiving unit 2802, and a processing unit 2803. The display unit 2801, the receiving unit 2802, and the processing unit 2803 may be configured to cooperate to implement functions corresponding to the steps performed by the receive end in the cross-device dragging method in the foregoing embodiments.

For example, the display unit 2801 may be configured to display a first interface; the receiving unit 2801 may be configured to receive a first operation; and the processing unit 2803 may be configured to control, in response to the first operation, the display unit to display a first window, and the like. Similarly, the display unit 2801, the receiving unit 2802, and the processing unit 2803 may be configured to cooperate to implement functions corresponding to all steps performed by the receive end in the cross-device dragging method in the foregoing embodiments. Details are not described herein again.

An embodiment of this application further provides a cross-device dragging apparatus. The apparatus may be used in the foregoing source end, and is configured to implement steps performed by the source end in the cross-device dragging method in the foregoing embodiments. For example, the source end may be a second terminal device. A function of the apparatus may be implemented by hardware, or may be implemented by executing corresponding software by hardware. The hardware or software includes one or more modules or units corresponding to the steps performed by the source end in the foregoing cross-device dragging method. For example, FIG. 29 is another schematic diagram of a structure of a cross-device dragging apparatus according to an embodiment of this application. As shown in FIG. 29, the apparatus may include a display unit 2901, a receiving unit 2902, and a processing unit 2903. The display unit 2901, the receiving unit 2902, and the processing unit 2903 may be configured to cooperate to implement functions corresponding to the steps performed by the source end in the cross-device dragging method in the foregoing embodiments.

For example, the display unit 2901 may be configured to display a second interface; the receiving unit 2902 may be configured to receive a second operation; and the processing unit 2903 may be configured to control, in response to the second operation, the display unit to display a second UI animation effect on a screen edge of the second interface, and the like Similarly, the display unit 2901, the receiving unit 2902, and the processing unit 2903 may be configured to cooperate to implement functions corresponding to all steps performed by the source end in the cross-device dragging method in the foregoing embodiments. Details are not described herein again.

It should be understood that division into modules (or referred to as units) in the apparatus is merely logical function division. During actual implementation, all or some of the modules may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units are implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the unit in the apparatus may be implemented by scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

In one implementation, a unit in the foregoing apparatus for implementing each corresponding step in the foregoing method may be implemented by scheduling a program by a processing element. For example, the apparatus may include a processing element and a storage element. The processing element invokes a program stored in the storage element, to perform the steps performed by the source end or the receive end in the method in the foregoing method embodiments. The storage element may be a storage element located on a same chip as the processing element, namely, an on-chip storage element.

In another implementation, a program configured to execute the foregoing method may be located on a storage element on a chip different from that for the processing element, namely, an off-chip storage element. In this case, the processing element invokes a program from the off-chip storage element or loads a program to the on-chip storage element, to invoke and perform the steps performed by the source end or the receive end in the method in the foregoing method embodiments.

An embodiment of this application further provides an electronic device. The electronic device may be the foregoing source end or the foregoing receive end. The electronic device includes: a processor and a memory configured to store executable instructions of the processor. When the processor is configured to execute the instructions, the electronic device is enabled to implement the steps performed by the source end or the receive end in the method described in the foregoing embodiments. The memory may be located inside the electronic device, or may be located outside the electronic device. In addition, there are one or more processors.

For example, the electronic device may be a mobile phone, or may be a tablet computer, a wearable device, a vehicle-mounted device, an AR/VR device, a notebook computer, a UMPC, a netbook, a PDA, or the like.

In still another implementation, a unit used by the electronic device to implement the steps in the foregoing methods may be configured as one or more processing elements. The processing element herein may be an integrated circuit, for example, one or more ASICs, one or more DSPs, one or more FPGAs, or a combination of these integrated circuits. These integrated circuits may be integrated together to form a chip.

For example, an embodiment of this application further provides a chip, and the chip may be used in the foregoing electronic device. The chip includes one or more interface circuits and one or more processors. The interface circuit and the processor are interconnected through a line. The processor receives computer instructions from a memory of an electronic device by using the interface circuit, and executes the computer instructions, to implement the steps performed by the source end or the receive end in the method described in the foregoing embodiments.

Based on the foregoing descriptions of the implementations, a person skilled in the art may clearly understand that for the purpose of convenient and brief descriptions, division into the foregoing function modules is merely used as an example for descriptions. In actual application, the foregoing functions can be allocated to different function modules for implementation based on a requirement, in other words, an inner structure of an apparatus is divided into different function modules to implement all or some of the functions described above.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a readable storage medium.

Based on such an understanding, the technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

For example, an embodiment of this application further provides a computer-readable storage medium, where the computer-readable storage medium stores computer program instructions. When the computer program instructions are executed by an electronic device, the electronic device is enabled to implement the steps performed by the source end or the receive end in the method described in embodiments.

For another example, an embodiment of this application further provides a computer program product, including computer-readable code or a non-volatile computer-readable storage medium carrying computer-readable code. When the computer-readable code is run in an electronic device, a processor in the electronic device implements the steps performed by the source end or the receive end in the method described in the foregoing embodiments.

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cross-device dragging method, wherein the method is applied to a first terminal device, and the method comprises:
displaying, by the first terminal device, a first interface;
receiving, by the first terminal device, a first operation, wherein the first operation is an operation of dragging a first object from a display interface of a second terminal device to the first interface; and
displaying, by the first terminal device, a first window in response to the first operation, wherein the first window comprises an application identifier corresponding to one or more applications and/or a service identifier corresponding to one or more services.

2. The method according to claim 1, wherein the application identifier comprised in the first window is related to a type of the first object.

3. The method according to claim 2, wherein before the displaying, by the first terminal device, a first window, the method further comprises:
obtaining, by the first terminal device, the type of the first object; and
determining, by the first terminal device based on the type of the first object, the application identifier comprised in the first window.

4. The method according to claim 3, wherein the determining, by the first terminal device based on the type of the first object, the application identifier comprised in the first window comprises:
determining, by the first terminal device based on the type of the first object and from all applications installed on the first terminal device, an application that supports dragging of the first object; and
using, by the first terminal device, an application identifier of the application that supports dragging of the first object as the application identifier comprised in the first window.

5. The method according to any one of claims 1 to 4, wherein the method further comprises:
receiving, by the first terminal device, an operation of dragging the first object to a first application identifier, wherein the first application identifier is one of application identifiers comprised in the first window; and
in response to the operation of dragging the first object to the first application identifier, when an application corresponding to the first application identifier is the application that supports dragging of the first object, displaying, by the first terminal device, a second window, wherein the second window comprises a service identifier of one or more services comprised in the application corresponding to the first application identifier; or
displaying, by the first terminal device, first prompt information when an application corresponding to the first application identifier is an application that does not support dragging of the first object, wherein the first prompt information is used to give a prompt that the application corresponding to the first application identifier does not support dragging of the first object.

6. The method according to claim 5, wherein the service identifier comprised in the second window is related to the type of the first object.

7. The method according to claim 6, wherein before the displaying, by the first terminal device, a second window, the method further comprises:
obtaining, by the first terminal device, the type of the first object; and
determining, by the first terminal device based on the type of the first object and all services comprised in the application corresponding to the first application identifier, the service identifier comprised in the second window.

8. The method according to claim 7, wherein the determining, by the first terminal device based on the type of the first object and all services comprised in the application corresponding to the first application identifier, the service identifier comprised in the second window comprises:
determining, by the first terminal device based on the type of the first object and from all the services comprised in the application corresponding to the first application identifier, a service that supports dragging of the first object; and
using, by the first terminal device, a service identifier of the service that supports dragging of the first object as the service identifier comprised in the second window.

9. The method according to any one of claims 1 to 8, wherein the first interface comprises an interface that supports dragging and an interface that does not support dragging; and the displaying, by the first terminal device, a first window comprises:
when the first interface is the interface that does not support dragging, displaying, by the first terminal device, the first window.

10. The method according to any one of claims 1 to 9, wherein the displaying, by the first terminal device, a first window comprises:
after the first object is dragged to the first interface, when a dragging operation on the first object does not end, and a dwell time period of a pointer on the first interface reaches first duration, and/or when the dragging operation on the first object does not end, and a sliding distance of the pointer on the first interface is greater than a first threshold, displaying, by the first terminal device, the first window.

11. The method according to claim 10, wherein the first interface is the interface that does not support dragging; and the method further comprises:
receiving, by the first terminal device, a third operation, wherein the third operation is an operation of directly ending dragging of a second object after dragging the second object from the display interface of the second terminal device to the first interface; and
in response to the third operation, saving, by the first terminal device, the second object, or starting a default application and transferring the second object to the default application.

12. The method according to any one of claims 1 to 11, wherein the method further comprises:
receiving, by the first terminal device, the operation of dragging the first object to the first application identifier, wherein the first application identifier is one of the application identifiers comprised in the first window; and
in response to the operation of dragging the first object to the first application identifier, when the application corresponding to the first application identifier is the application that supports dragging of the first object, starting, by the first terminal device, the application corresponding to the first application identifier, and transferring the first object to the application corresponding to the first application identifier; or
displaying, by the first terminal device, the first prompt information when the application corresponding to the first application identifier is the application that does not support dragging of the first object, wherein the first prompt information is used to give the prompt that the application corresponding to the first application identifier does not support dragging of the first object.

13. The method according to claim 12, wherein the displaying, by the first terminal device, the first prompt information comprises: displaying, by the first terminal device, the first prompt information by changing a display status of the first application identifier.

14. The method according to any one of claims 5 to 8, wherein the method further comprises:
receiving, by the first terminal device, an operation of dragging the first object to a first service identifier, wherein the first service identifier is one of service identifiers comprised in the second window; and
in response to the operation of dragging the first object to the first service identifier, when a service corresponding to the first service identifier is a service that supports dragging of the first object, starting, by the first terminal device, the service corresponding to the first service identifier, and transferring the first object to the service corresponding to the first service identifier; or
displaying, by the first terminal device, second prompt information when a service corresponding to the first service identifier is a service that does not support dragging of the first object, wherein the second prompt information is used to give a prompt that the service corresponding to the first service identifier does not support dragging of the first object.

15. The method according to any one of claims 1 to 14, wherein the method further comprises:
receiving, by the first terminal device, a fourth operation, wherein the fourth operation is an operation of dragging the second object from the display interface of the second terminal device to a first region on the first interface, and the first region is a blank region; and
in response to the fourth operation, saving, by the first terminal device, the second object.

16. The method according to any one of claims 1 to 15, wherein the first window comprises a second region or a first icon; and the method further comprises:
receiving, by the first terminal device, an operation of dragging the first object to the second region or the first icon; and
in response to the operation of dragging the first object to the second region or the first icon, saving, by the first terminal device, the first object.

17. The method according to any one of claims 1 to 16, wherein the first interface is a system desktop, and the first interface comprises one or more application identifiers; and the method further comprises:
receiving, by the first terminal device, an operation of closing the first window;
closing, by the first terminal device, the first window in response to the operation of closing the first window;
receiving, by the first terminal device, an operation of dragging the first object to a second application identifier, wherein the second application identifier is one of the application identifiers comprised on the system desktop; and
in response to the operation of dragging the first object to the second application identifier, when an application corresponding to the second application identifier is the application that supports dragging of the first object, starting, by the first terminal device, the application corresponding to the second application identifier, and transferring the first object to the application corresponding to the second application identifier; or displaying, by the first terminal device, a third window, wherein the third window comprises a service identifier of one or more services comprised in the application corresponding to the second application identifier; or
displaying, by the first terminal device, the first prompt information when an application corresponding to the second application identifier is an application that does not support dragging of the first object, wherein the first prompt information is used to give a prompt that the application corresponding to the second application identifier does not support dragging of the first object.

18. The method according to any one of claims 1 to 17, wherein the displaying, by the first terminal device, a first window comprises:
displaying, by the first terminal device, the first window in a full-screen display manner, a non-full-screen display manner, or a drawer display manner.

19. The method according to any one of claims 1 to 18, wherein the method further comprises:
when the first terminal device detects that a dragging behavior of dragging the first object on the first terminal device is interrupted, displaying, by the first terminal device in a first location on the first interface, a first floating window corresponding to the first object.

20. The method according to claim 19, wherein the method further comprises:
receiving, by the first terminal device, a dragging operation on the first floating window; and
in response to the dragging operation on the first floating window, changing, by the first terminal device, the first floating window to a dragging shadow of the first object, so that a user continues to drag the first object.

21. A cross-device dragging method, wherein the method is applied to a first terminal device, and the method comprises:
displaying, by the first terminal device, a first interface, wherein the first interface comprises an application identifier of one or more applications;
receiving, by the first terminal device, an operation of dragging a first object to a second application identifier, wherein the second application identifier is one of application identifiers comprised on the first interface, an application corresponding to the second application identifier is an application that supports dragging of the first object, and the first object is from a display interface of a second terminal device; and
in response to the operation of dragging the first object to the second application identifier, starting, by the first terminal device, an application corresponding to the second application identifier, and transferring the first object to the application corresponding to the second application identifier; or displaying, by the first terminal device, a third window, wherein the third window comprises a service identifier of one or more services comprised in the application corresponding to the second application identifier.

22. The method according to claim 21, wherein the method further comprises:
receiving, by the first terminal device, an operation of dragging a second object to a third application identifier, wherein the third application identifier is one of the application identifiers comprised on the first interface, an application corresponding to the third application identifier is an application that does not support dragging of the second object, and the second object is from the display interface of the second terminal device; and
displaying, by the first terminal device, first prompt information in response to the operation of dragging the second object to the third application identifier, wherein the first prompt information is used to give a prompt that the application corresponding to the third application identifier does not support dragging of the first object.

23. The method according to claim 21 or 22, wherein the application identifier comprises an application icon or a widget.

24. The method according to claim 23, wherein the widget comprises one or more service identifiers; and the method further comprises:
receiving, by the first terminal device, an operation of dragging the first object to a second service identifier, wherein the second service identifier is one of service identifiers comprised in the widget; and
in response to the operation of dragging the first object to the second service identifier, when a service corresponding to the second service identifier is a service that supports dragging of the first object, starting, by the first terminal device, the service corresponding to the second service identifier, and transferring the first object to the service corresponding to the second service identifier; or
displaying, by the first terminal device, second prompt information when a service corresponding to the second service identifier is a service that does not support dragging of the first object, wherein the second prompt information is used to give a prompt that the service corresponding to the second service identifier does not support dragging of the first object.

25. The method according to any one of claims 21 to 24, wherein the first interface comprises a first folder, the first folder comprises an application identifier of one or more applications, and the second application identifier is one of application identifiers comprised in the first folder; and
the operation of dragging the first object to the second application identifier comprises: an operation of opening the first folder and dragging the first object to the second application identifier.

26. The method according to any one of claims 1 to 25, wherein the method further comprises:
when the first object is dragged to the first interface, displaying, by the first terminal device, a first UI animation effect on a screen edge of the first interface, wherein the first UI animation effect is used to give a user a prompt that the first object is dragged to the first interface.

27. The method according to claim 26, wherein a display region of the first UI animation effect is related to a location that is on the first interface and to which a dragging shadow of the first object is dragged.

28. The method according to claim 26 or 27, wherein the method further comprises:
in a process in which the first object is dragged to a location at which the dragging shadow of the first object is far away from the screen edge, performing highlighting or color enhancement, by the first terminal device, on a region that is in the display region of the first UI animation effect and that is related to the location of the dragging shadow of the first object.

29. The method according to any one of claims 26 to 28, wherein the method further comprises:
displaying, by the first terminal device, a tailing effect of the first object in the process in which the first object is dragged to the location at which the dragging shadow of the first object is far away from the screen edge, wherein
a display region of the tailing effect moves along with the dragging shadow of the first object; in a process in which the display region of the tailing effect moves along with the dragging shadow of the first object, the tailing effect gradually becomes smaller or remains unchanged, and display brightness of the tailing effect gradually decreases and/or a color becomes lighter; and after the dragging shadow of the first object moves beyond a preset distance, the first terminal device no longer displays the tailing effect.

30. An electronic device, comprising a processor and a memory configured to store executable instructions of the processor, wherein
when the processor is configured to execute the instructions, the electronic device is enabled to implement the method according to any one of claims 1 to 29.

31. A computer-readable storage medium, wherein the computer-readable storage medium stores computer program instructions, and when the computer program instructions are executed by an electronic device, the electronic device is enabled to implement the method according to any one of claims 1 to 29.

32. A computer program product, comprising computer-readable code or a non-volatile computer-readable storage medium carrying computer-readable code, wherein when the computer-readable code is run in an electronic device, a processor in the electronic device implements the method according to any one of claims 1 to 29.
